# EUROPEAN PATENT APPLICATION

(11) **EP 4 163 876 A1**
(43) Date of publication of application: **12.04.2023**
(21) Application number: 21817111.4
(22) Date of filing: 20.05.2021
(51) Int. Cl.: G06T 19/00, G06F 3/01, G06F 3/0481, H04N 21/854

(54) **INFORMATION PROCESSING DEVICE, INFORMATION PROCESSING METHOD, AND PROGRAM**

(30) Priority: 03.06.2020 JP 2020097067
(71) Applicant: Sony Group Corporation, Minato-Ku, Tokyo, 108-0075 (JP)
(72) Inventor: SHIMIZU, Takayoshi, Tokyo 108-0075 (JP)
(74) Representative: 2SPL Patentanwälte PartG mbB
(86) International application number: PCT/JP2021/019103
(87) International publication number: WO 2021/246183

(57) **Abstract**

The present technology relates to an information processing device, an information processing method, and a program that enables advantages of a virtual world to be obtained without impairing the sense of reality.

For at least one viewer from among a plurality of viewers viewing content distributed from a distributor virtually disposed at a predetermined distribution position, a viewing position where the at least one viewer views the content as an experiencing person and the distribution position are set such that a relative positional relationship between the viewing position and the distribution position is a positional relationship determined for the experiencing person in a virtual space or an actual space.

## Description

### [Technical Field]

The present technology relates to an information processing device, an information processing method, and a program and particularly to an information processing device, an information processing method, and a program that enable advantages of a virtual world to be obtained without impairing the sense of reality.

### [Background Art]

PTL 1 discloses a technology of distributing videos of various events that are currently being carried out to head mounted displays that a plurality of users wear.

### [Citation List]

### [Patent Literature]

[PTL 1]
JP 2019-139673A

### [Summary]

### [Technical Problem]

In a case in which events such as concerts and recitals in the real world are carried out using virtual worlds, there may be a case in which it is not possible to sufficiently obtain advantages of the virtual worlds if it is attempted to faithfully reproduce the real world.

The present technology was made in view of such circumstances, and an object thereof is to enable advantages of a virtual world to be obtained without impairing the sense of reality.

### [Solution to Problem]

An information processing device or a program according to the present technology is an information processing device including: a processing unit that sets, for at least one viewer from among a plurality of viewers viewing content distributed from a distributor virtually disposed at a predetermined distribution position, a viewing position where the at least one viewer views the content as an experiencing person and the distribution position such that a relative positional relationship between the viewing position and the distribution position is a positional relationship determined for the experiencing person in a virtual space or an actual space, or a program that causes a computer to function as such an information processing device.

An information processing method according to the present technology is an information processing method including: by a processing unit of an information processing device including the processing unit, setting, for at least one viewer from among a plurality of viewers viewing content distributed from a distributor virtually disposed at a predetermined distribution position, a viewing position where the at least one viewer views the content as an experiencing person and the distribution position such that a relative positional relationship between the viewing position and the distribution position is a positional relationship determined for the experiencing person in a virtual space or an actual space.

According to the present technology, for at least one viewer from among a plurality of viewers viewing content distributed from a distributor virtually disposed at a predetermined distribution position, a viewing position where the at least one viewer views the content as an experiencing person and the distribution position are set such that a relative positional relationship between the viewing position and the distribution position is a positional relationship determined for the experiencing person in a virtual space or an actual space.

### [Brief Description of Drawings]

[Fig. 1]

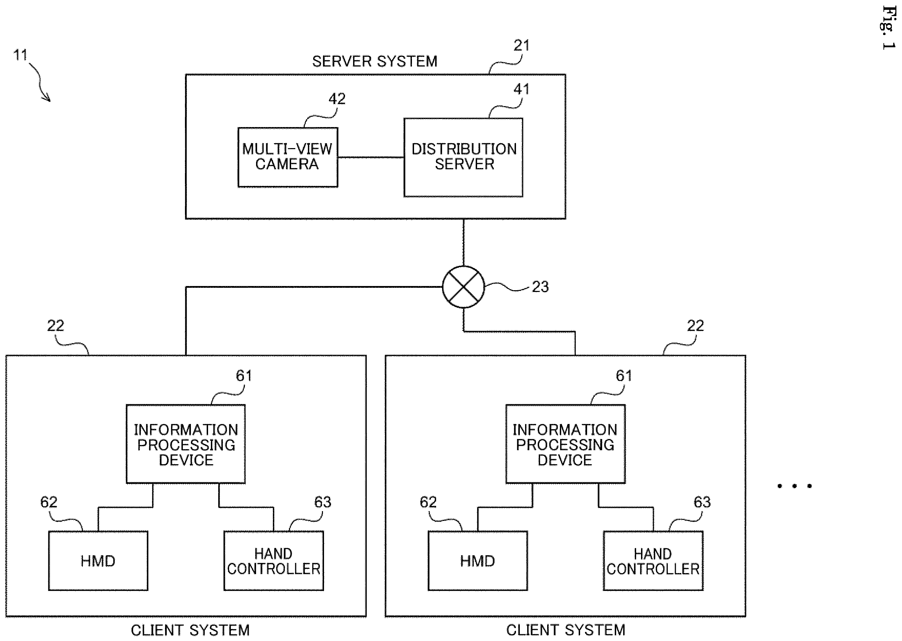

   Fig. 1 is a block diagram illustrating, as an example, an overview of an overall configuration of an entertainment system to which the present technology is applied.
[Fig. 2]

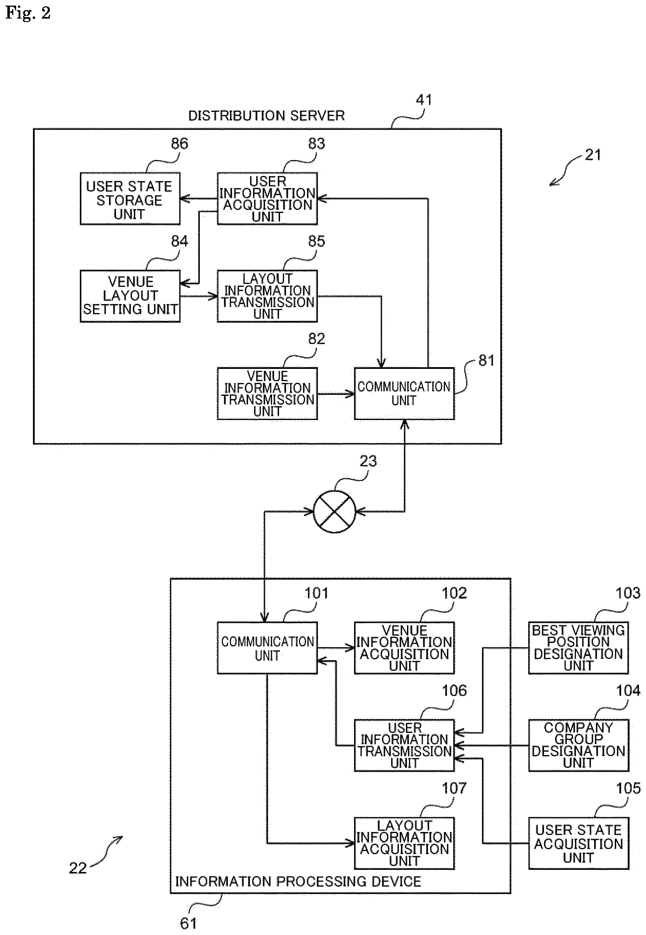

   Fig. 2 is a block diagram illustrating, as an example, a functional configuration regarding setting of venue layout of a server system and a client system in Fig. 1.
[Fig. 3]

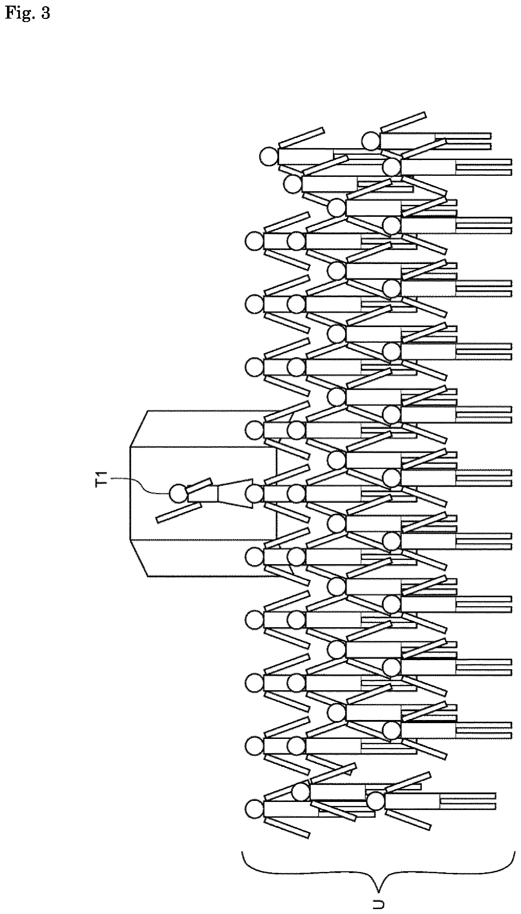

   Fig. 3 is a diagram illustrating, as an example, a state in which a distributor (live-action avatar) and viewers (avatars) are arranged in a virtual space constituting an event venue.
[Fig. 4]

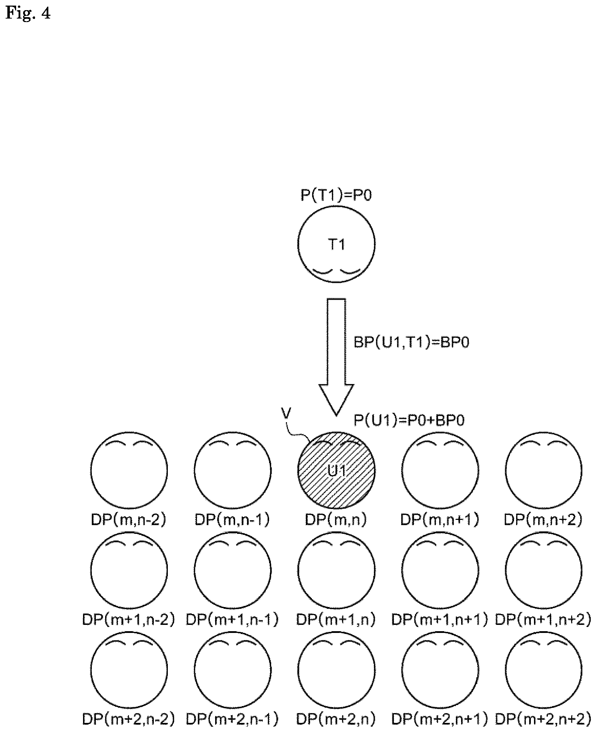

   Fig. 4 is a diagram for explaining an example 1 of a first setting form of venue layout.
[Fig. 5]

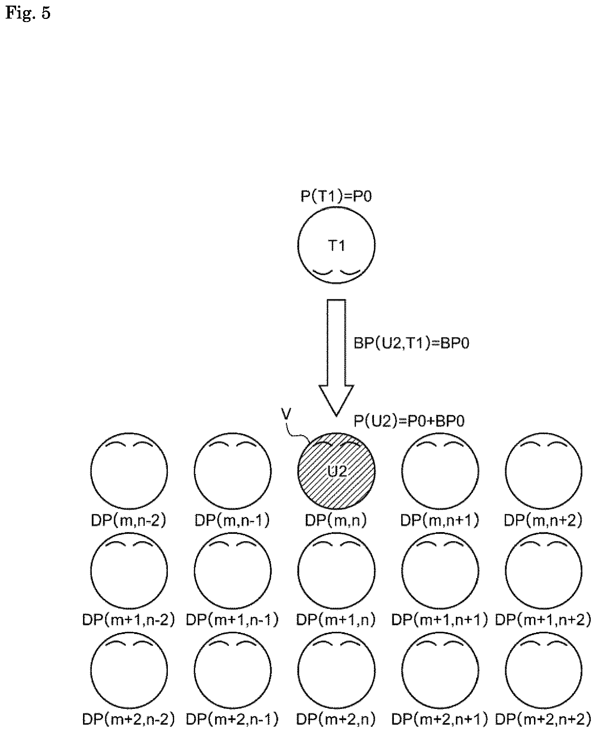

   Fig. 5 is a diagram for explaining an example 2 of the first setting form of venue layout.
[Fig. 6]

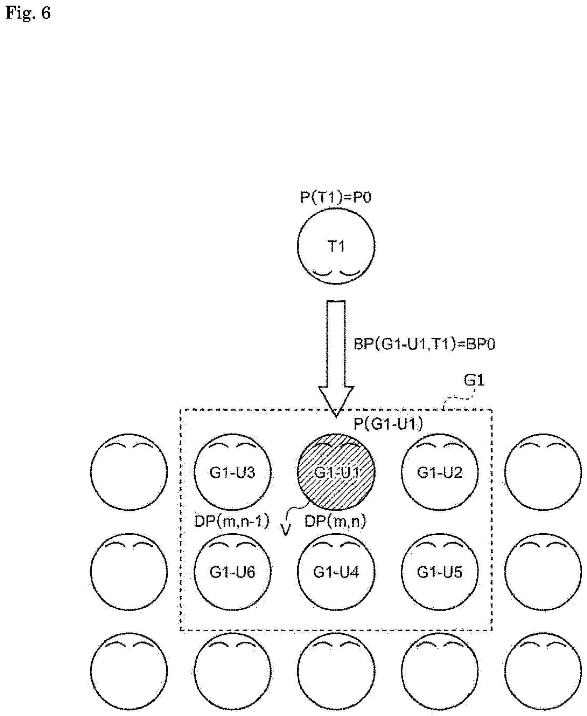

   Fig. 6 is a diagram for explaining an example 1 of a second setting form of venue layout.
[Fig. 7]

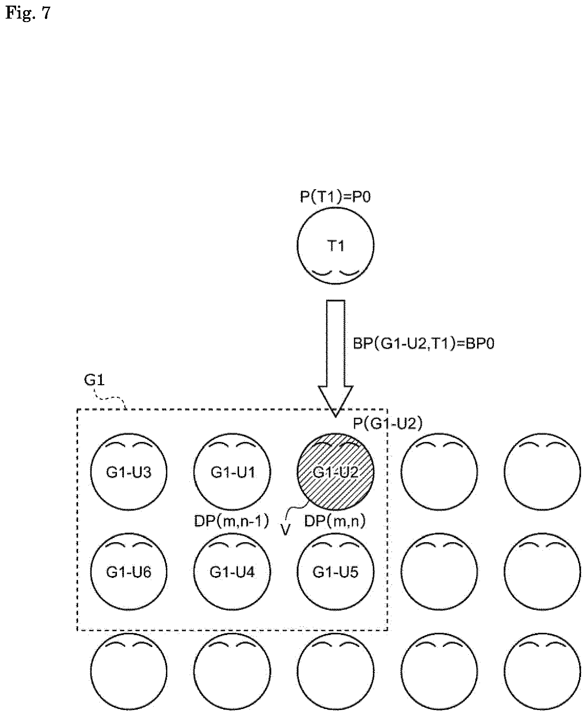

   Fig. 7 is a diagram for explaining an example 2 of the second setting form of venue layout.
[Fig. 8]

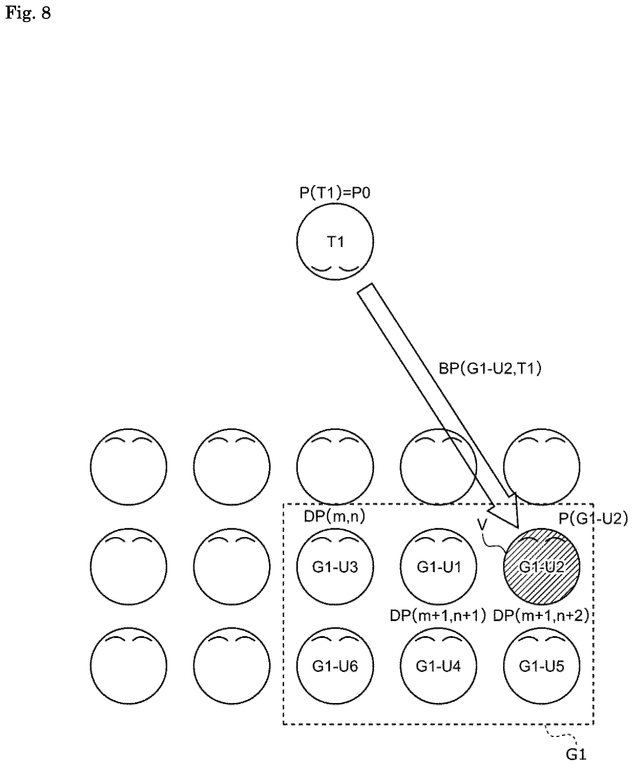

   Fig. 8 is a diagram for explaining an example 3 of the second setting form of venue layout.
[Fig. 9]

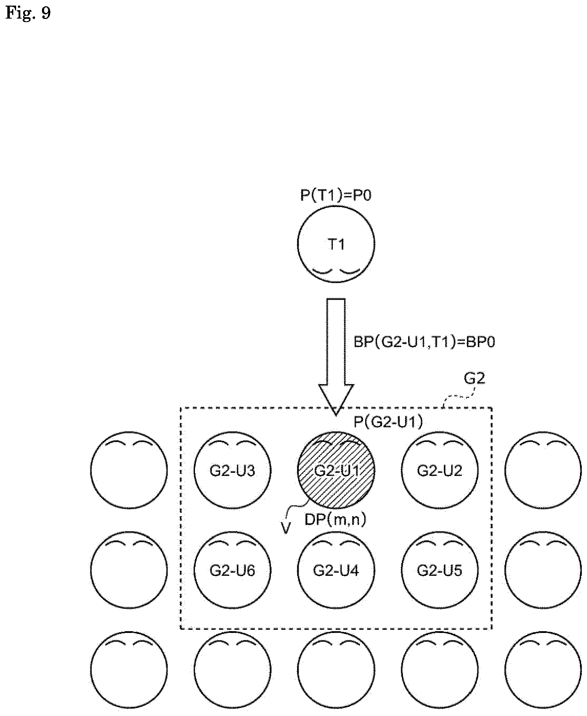

   Fig. 9 is a diagram for explaining an example 4 of the second setting form of venue layout.
[Fig. 10]

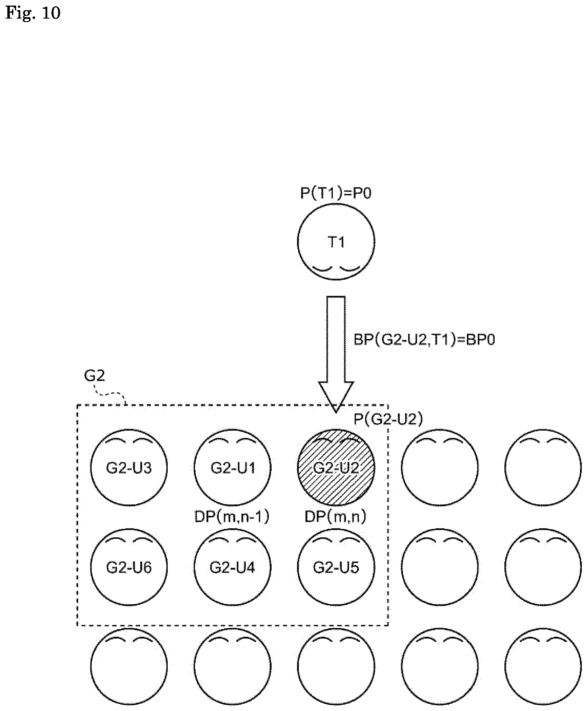

   Fig. 10 is a diagram for explaining an example 5 of the second setting form of venue layout.
[Fig. 11]

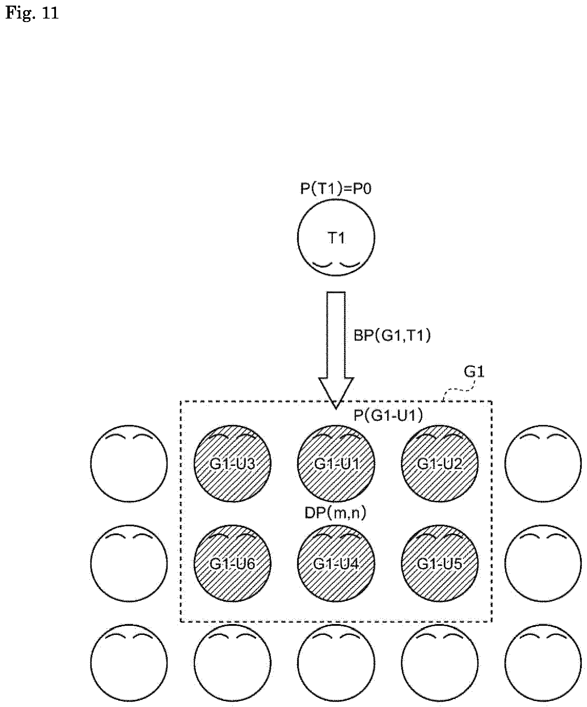

   Fig. 11 is a diagram for explaining an example 1 of a third setting form of venue layout.
[Fig. 12]

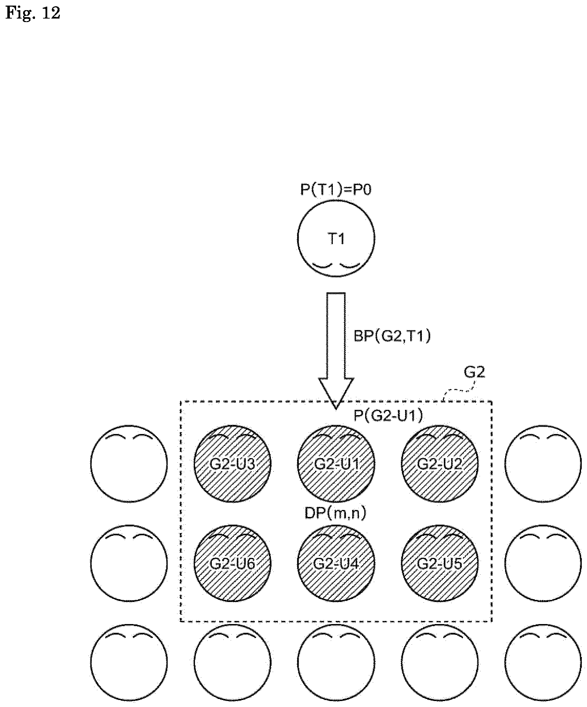

   Fig. 12 is a diagram for explaining an example 2 of the third setting form of venue layout.
[Fig. 13]

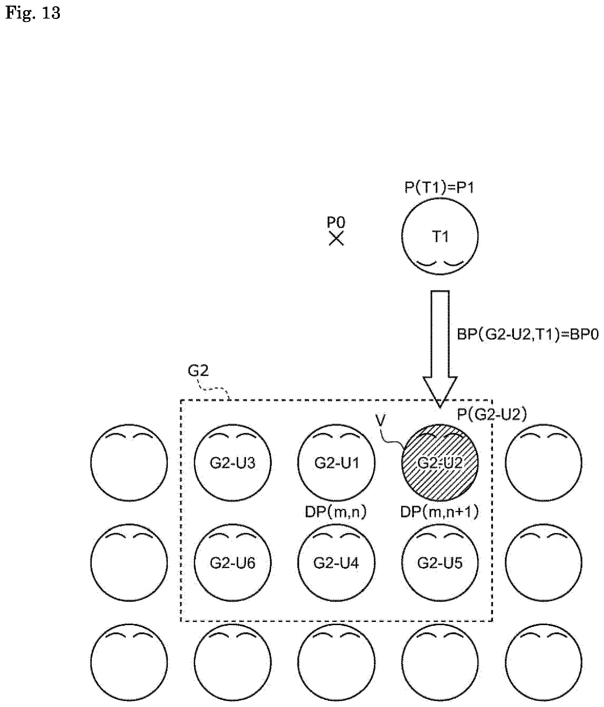

   Fig. 13 is a diagram for explaining an example 1 of a fourth setting form of venue layout.
[Fig. 14]

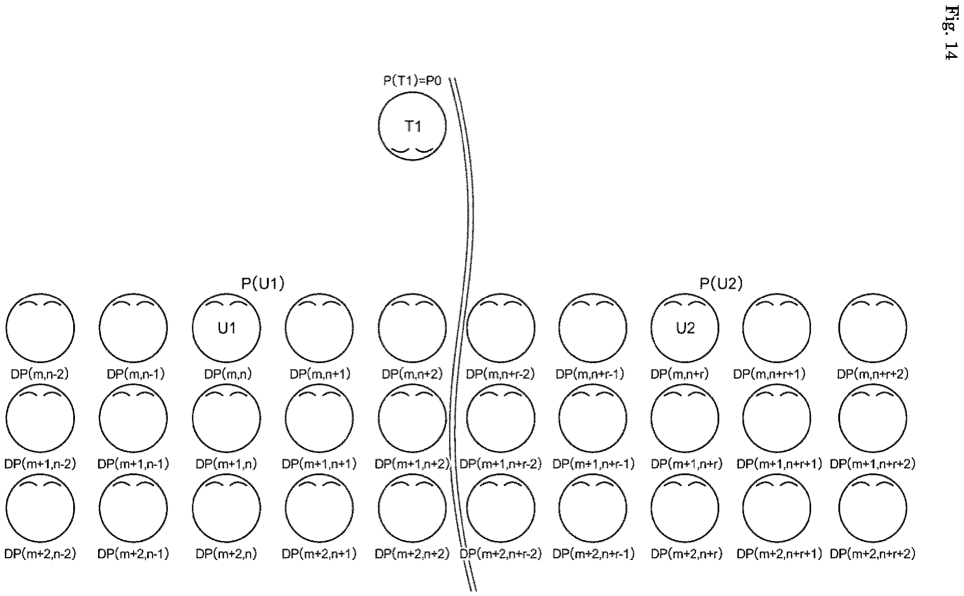

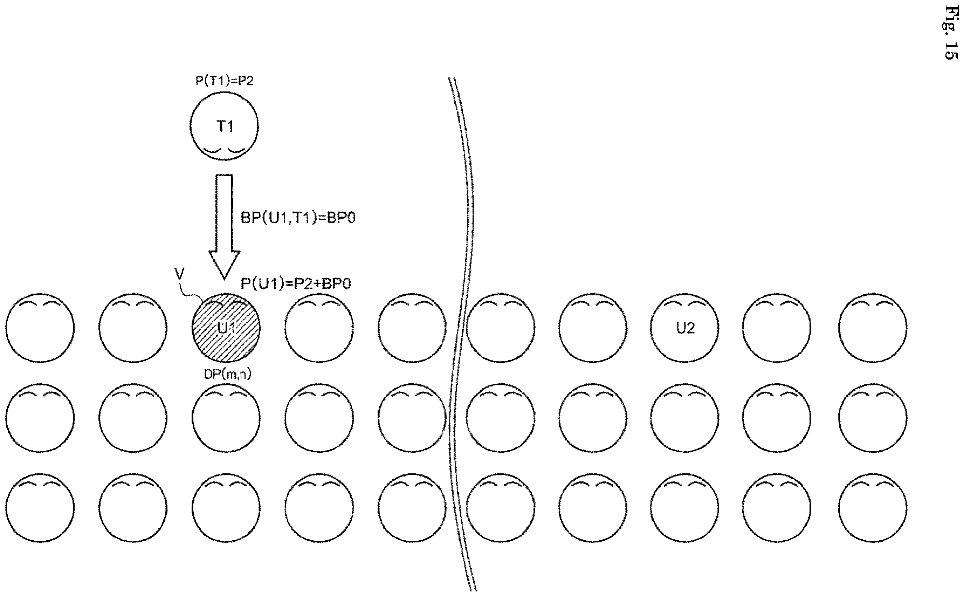

   Fig. 14 is a diagram for explaining a configuration of venue layout used in fifth to ninth setting forms described in Figs. 15 to 25.
[Fig. 15]
   Fig. 15 is a diagram for explaining an example 1 of a fifth setting form of venue layout.
[Fig. 16]

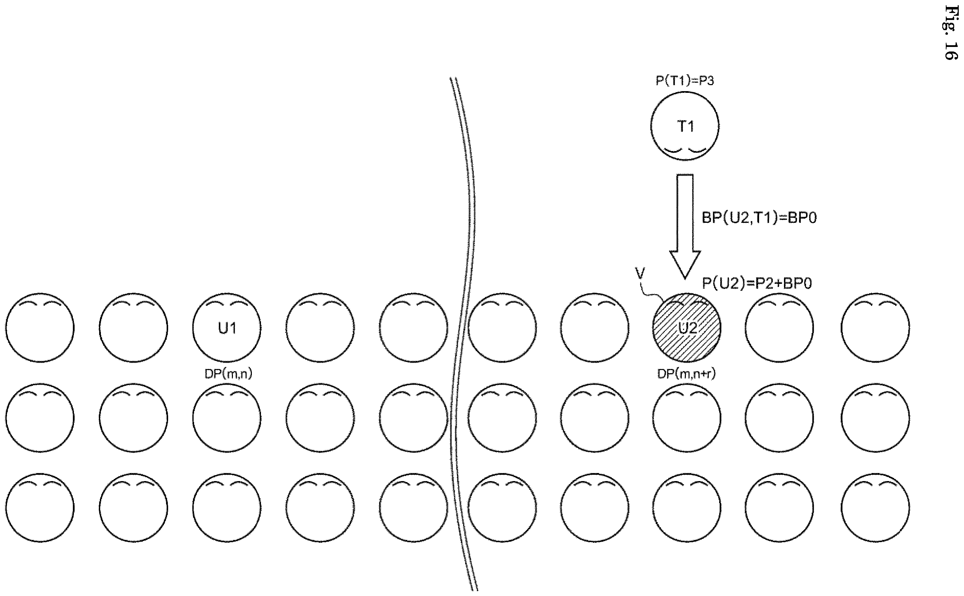

   Fig. 16 is a diagram for explaining an example 2 of the fifth setting form of venue layout.
[Fig. 17]

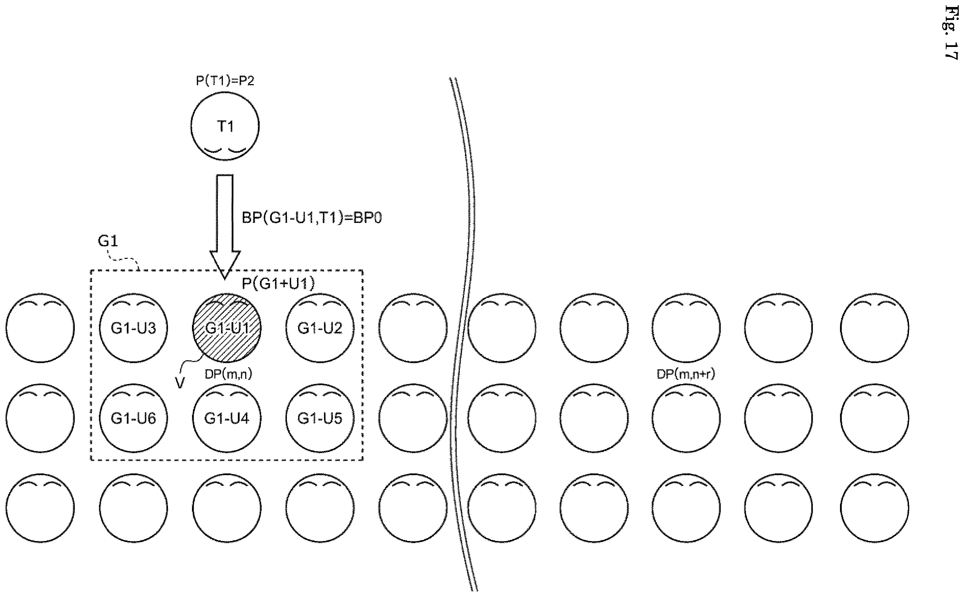

   Fig. 17 is a diagram for explaining an example 1 of a sixth setting form of venue layout.
[Fig. 18]

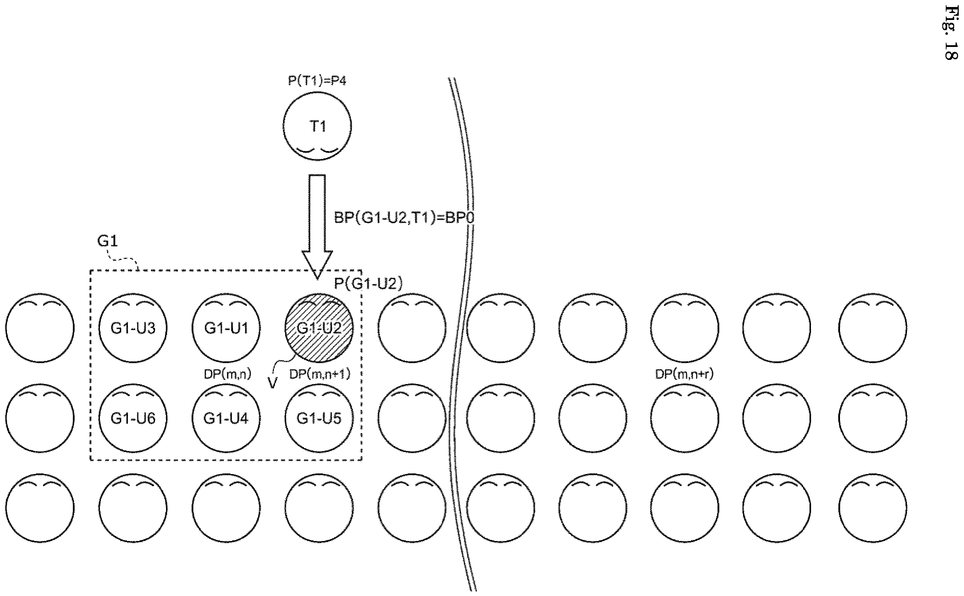

   Fig. 18 is a diagram for explaining an example 2 of the sixth setting form of venue layout.
[Fig. 19]

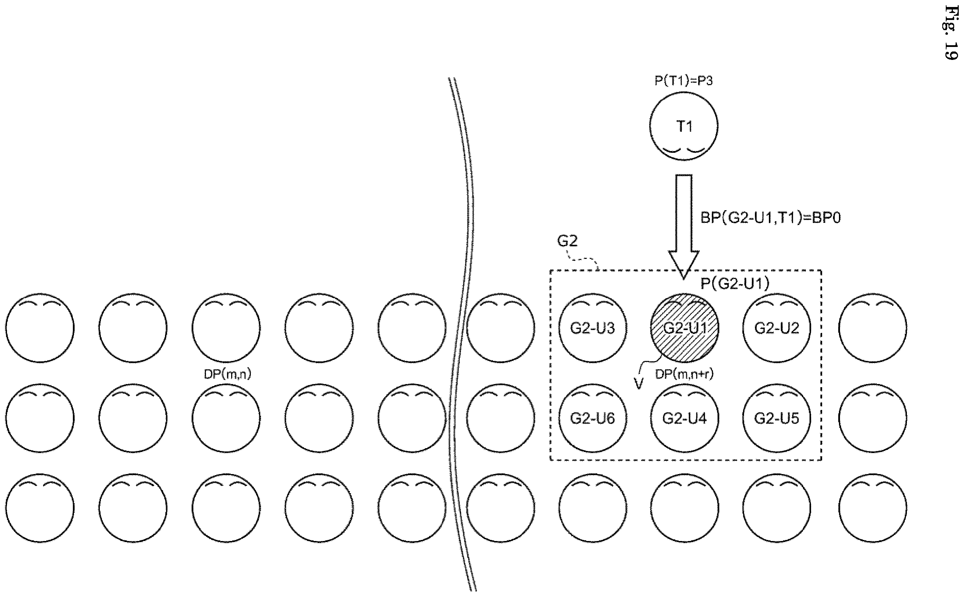

   Fig. 19 is a diagram for explaining an example 3 of the sixth setting form of venue layout.
[Fig. 20]

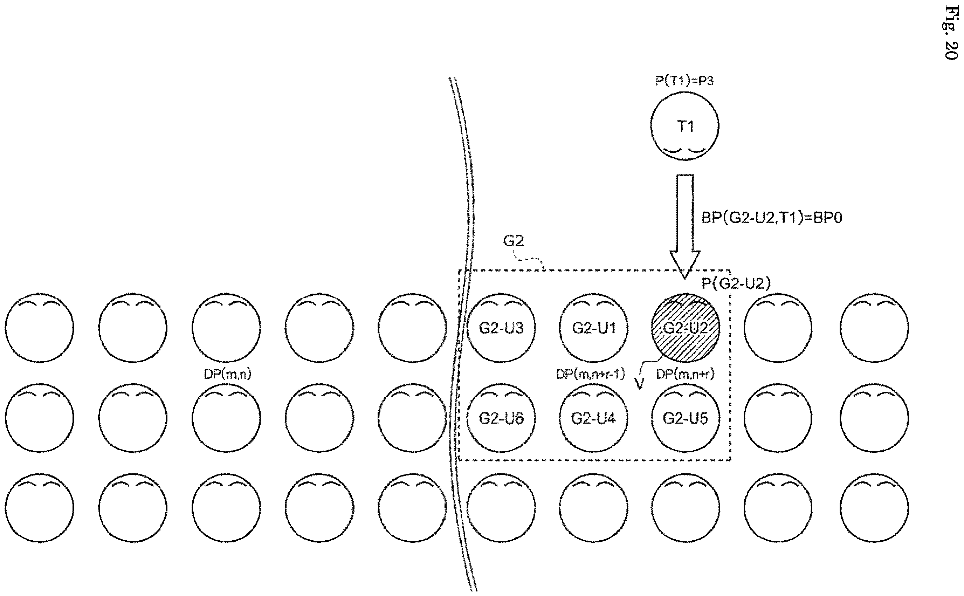

   Fig. 20 is a diagram for explaining an example 4 of the sixth setting form of venue layout.
[Fig. 21]

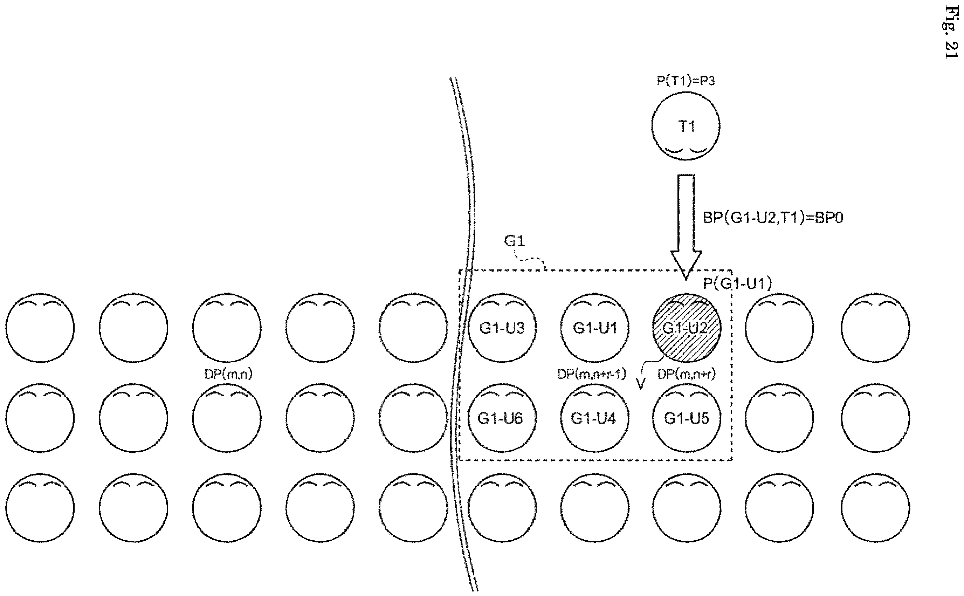

   Fig. 21 is a diagram for explaining an example 1 of a seventh setting form of venue layout.
[Fig. 22]

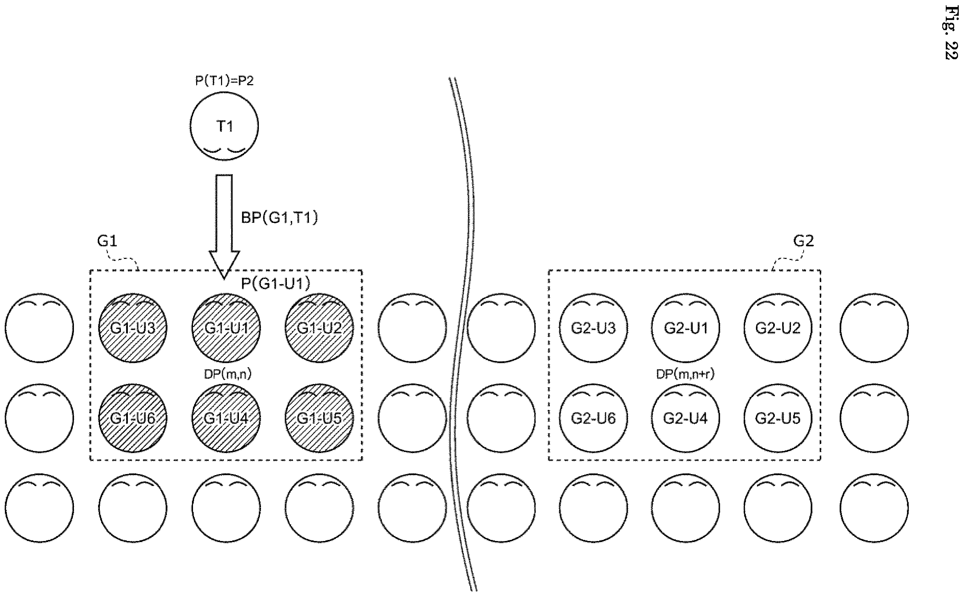

   Fig. 22 is a diagram for explaining an example 1 of an eighth setting form of venue layout.
[Fig. 23]

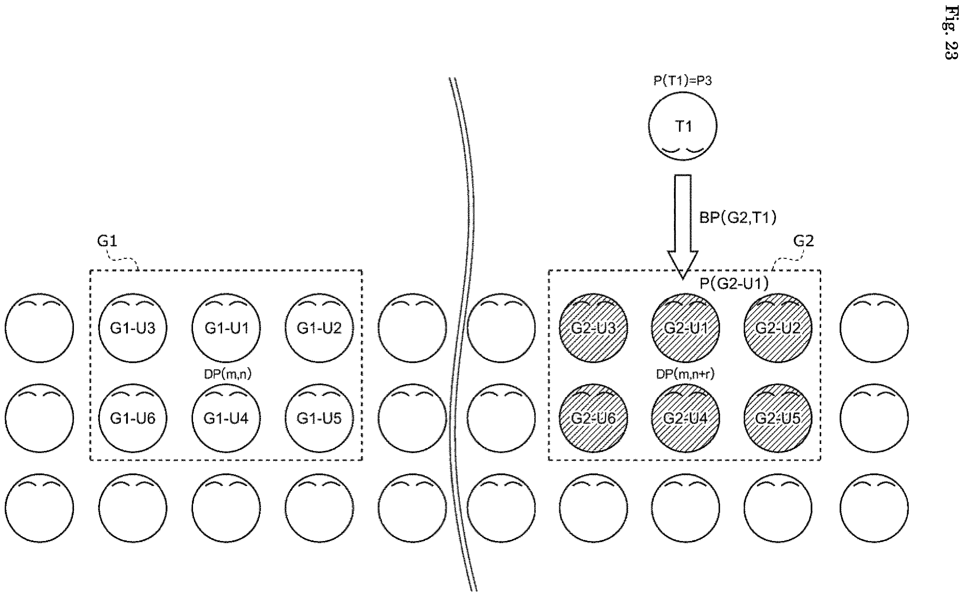

   Fig. 23 is a diagram for explaining an example 2 of the eighth setting form of venue layout.
[Fig. 24]

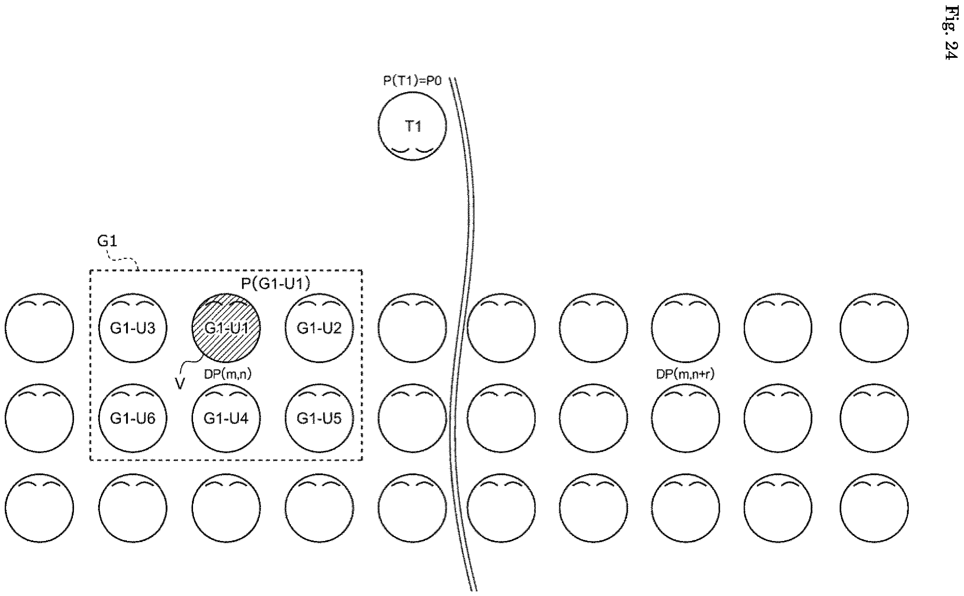

   Fig. 24 is a diagram for explaining an example 1 of a ninth setting form of venue layout.
[Fig. 25]

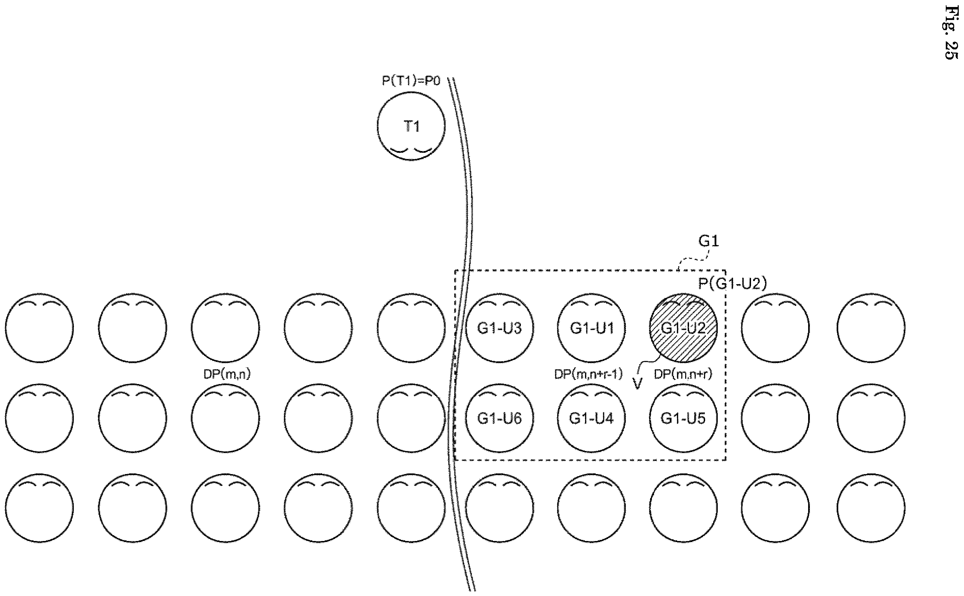

   Fig. 25 is a diagram for explaining an example 2 of the ninth setting form of venue layout.
[Fig. 26]

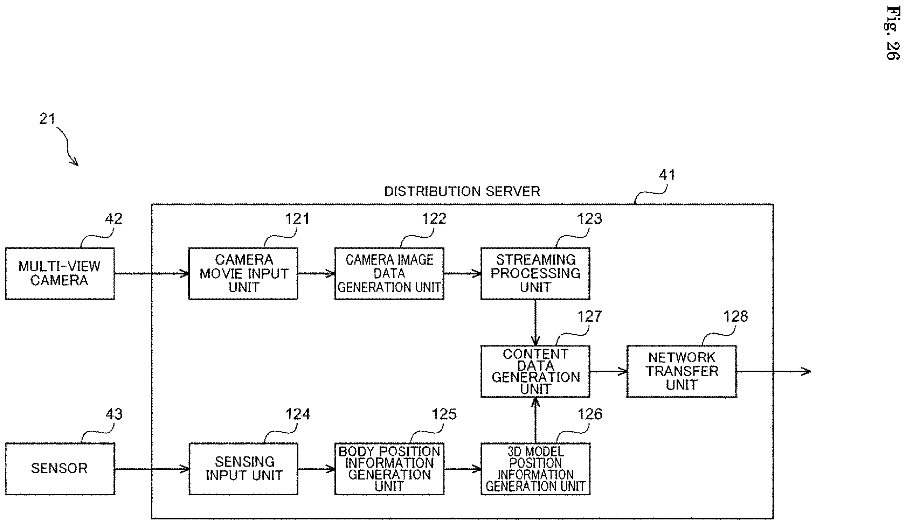

   Fig. 26 is a block diagram illustrating, as an example, a functional configuration regarding content distribution of the server system in Fig. 1.
[Fig. 27]

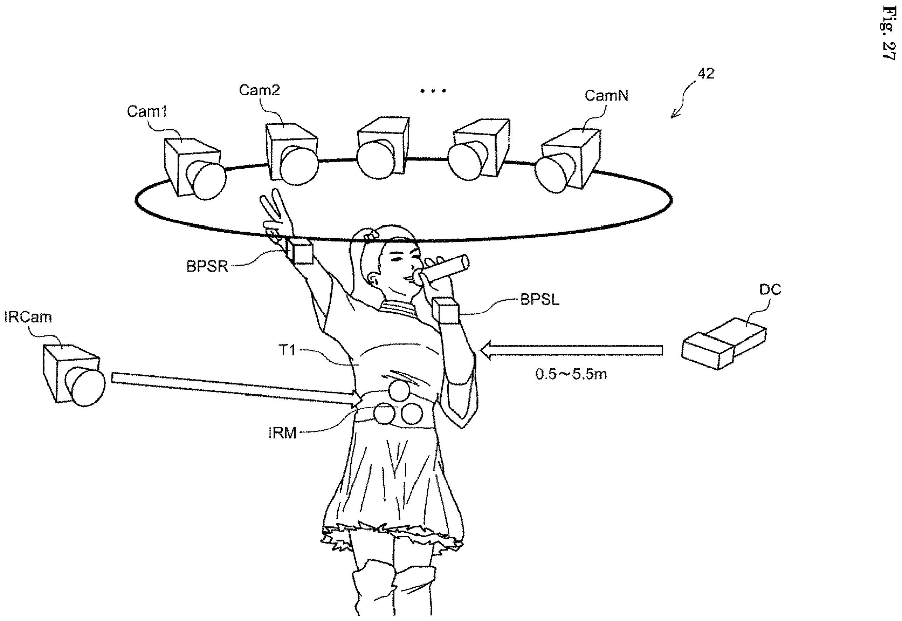

   Fig. 27 is a diagram for explaining a multi-view camera and a sensor.
[Fig. 28]

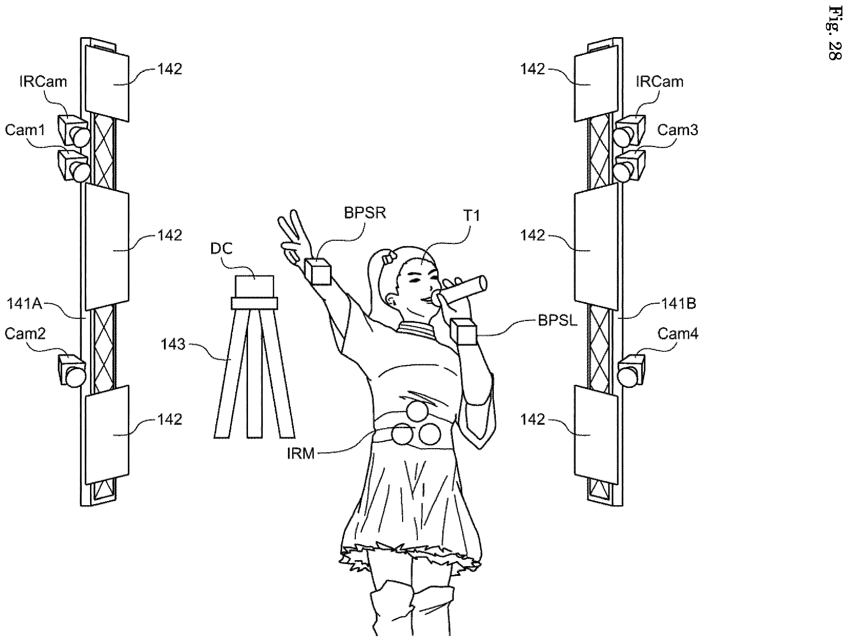

   Fig. 28 is a diagram illustrating a state in which a distributor is imaged in a studio.
[Fig. 29]

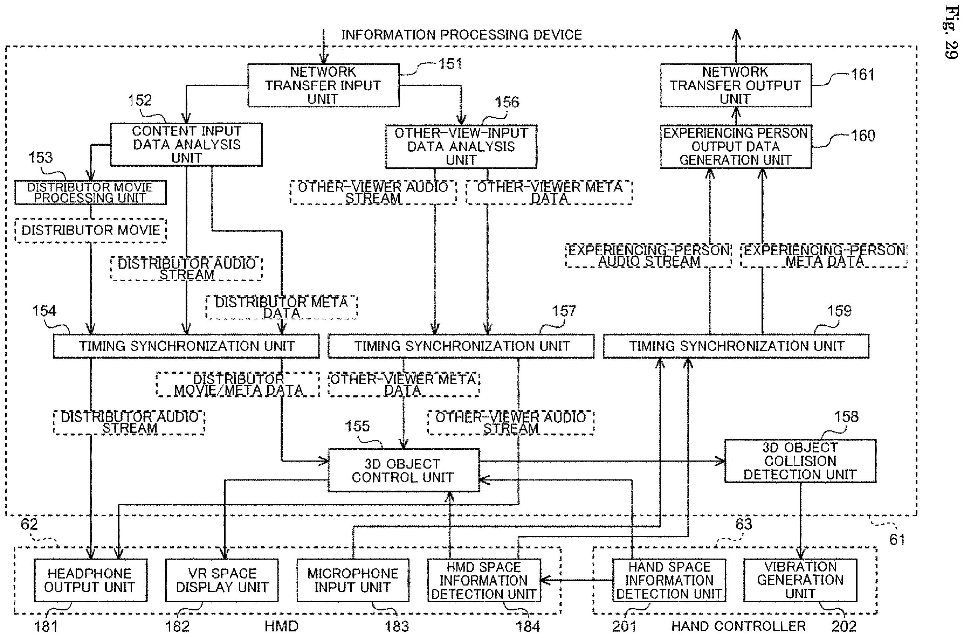

   Fig. 29 is a block diagram illustrating, as an example, a functional configuration regarding content reception or the like of the client system in Fig. 1.
[Fig. 30]

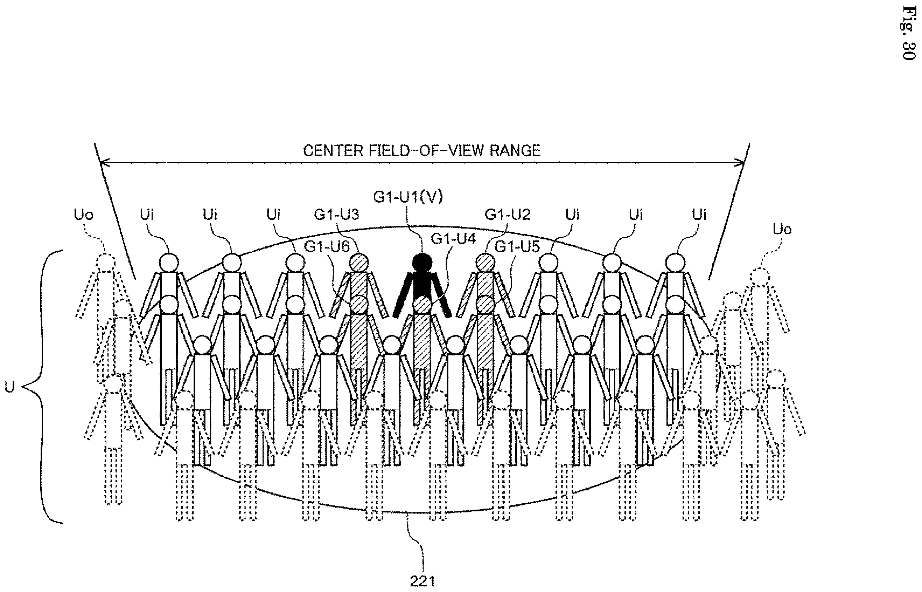

   Fig. 30 is a diagram for explaining a first form of object control performed by a 3D object control unit.
[Fig. 31]

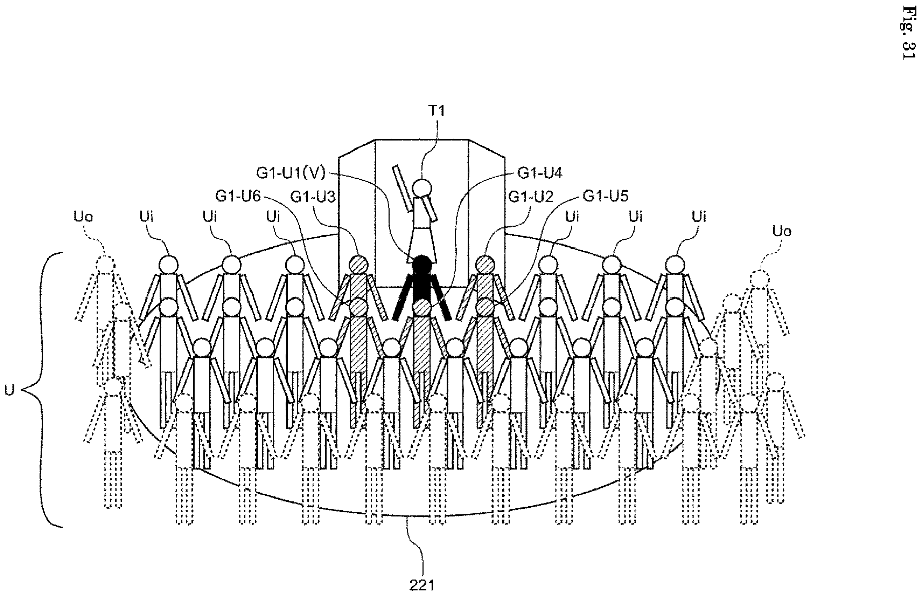

   Fig. 31 is a diagram for explaining the first form of the object control performed by the 3D object control unit.
[Fig. 32]

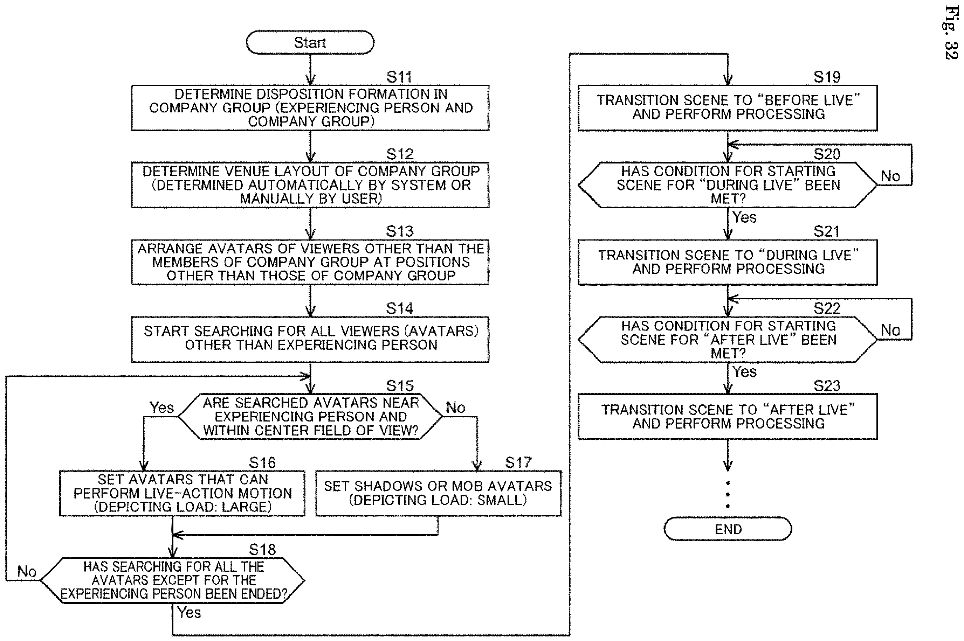

   Fig. 32 is a flowchart illustrating a processing procedure in the first form of the object control performed by the 3D object control unit.
[Fig. 33]

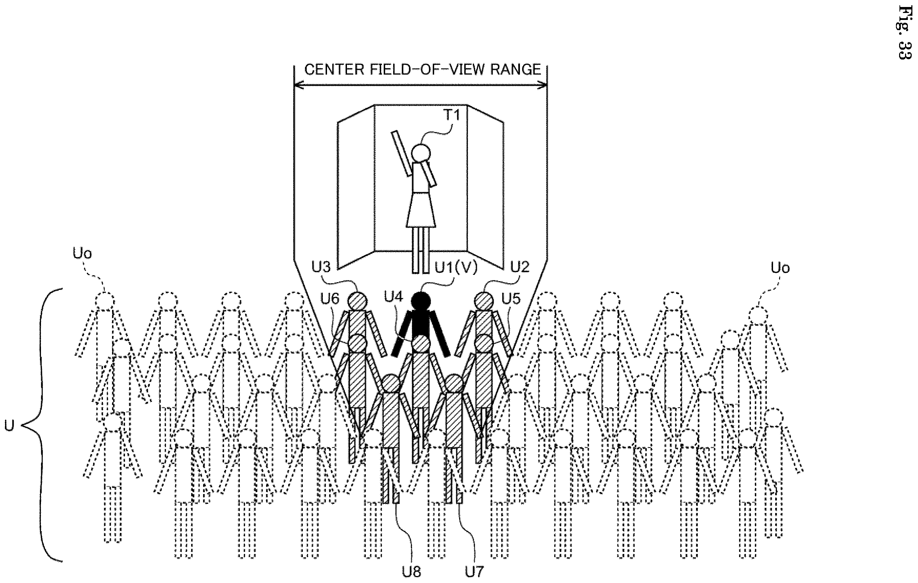

   Fig. 33 is a diagram for explaining a second form of object control performed by the 3D object control unit.
[Fig. 34]

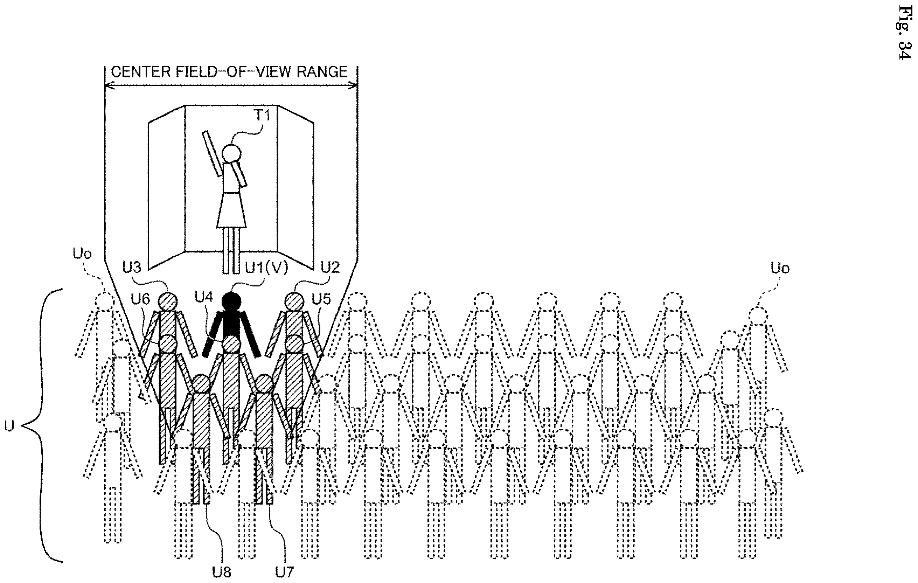

   Fig. 34 is a diagram for explaining the second form of the object control performed by the 3D object control unit.
[Fig. 35]

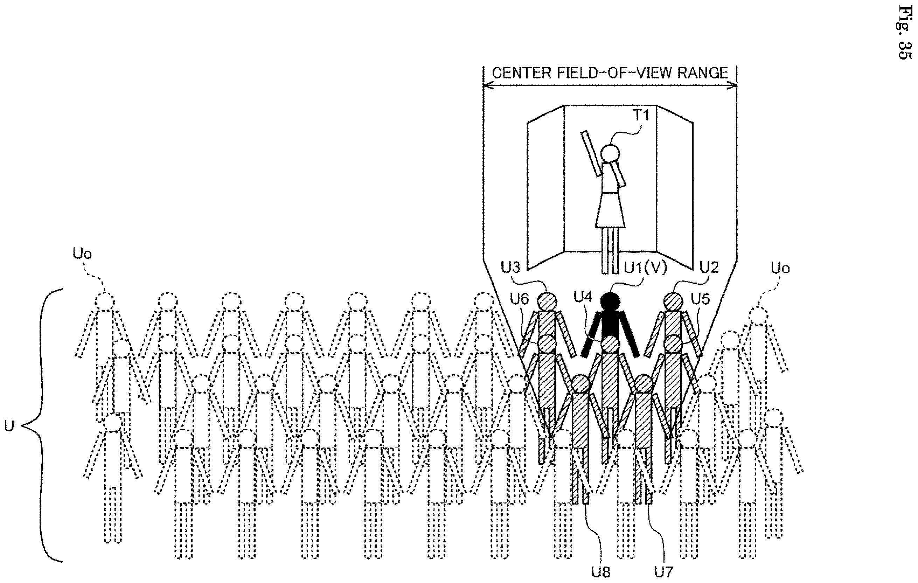

   Fig. 35 is a diagram for explaining the second form of the object control performed by the 3D object control unit.
[Fig. 36]

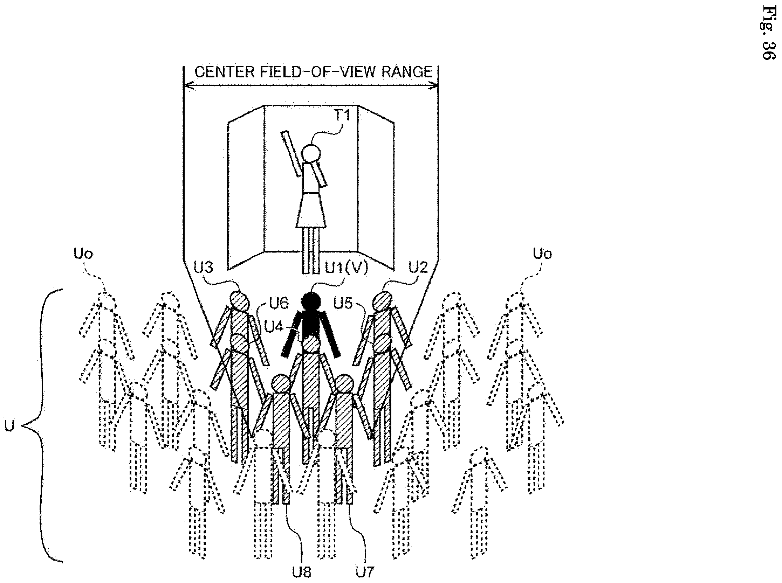

   Fig. 36 is a diagram illustrating a modification example of avatar layout in Figs. 33 to 35.
[Fig. 37]

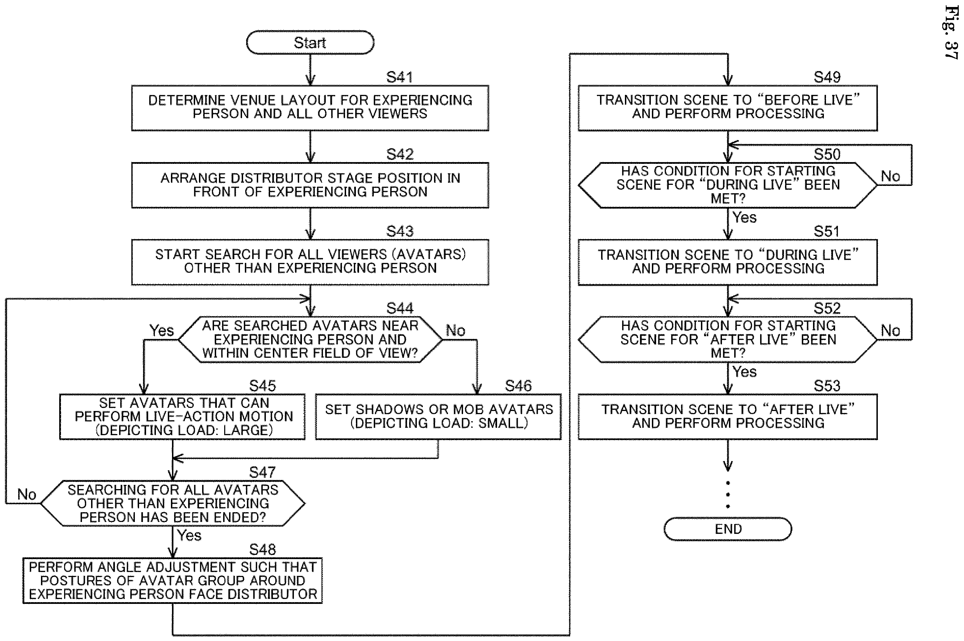

   Fig. 37 is a flowchart illustrating a processing procedure in a second form of object control performed by the 3D object control unit.
[Fig. 38]

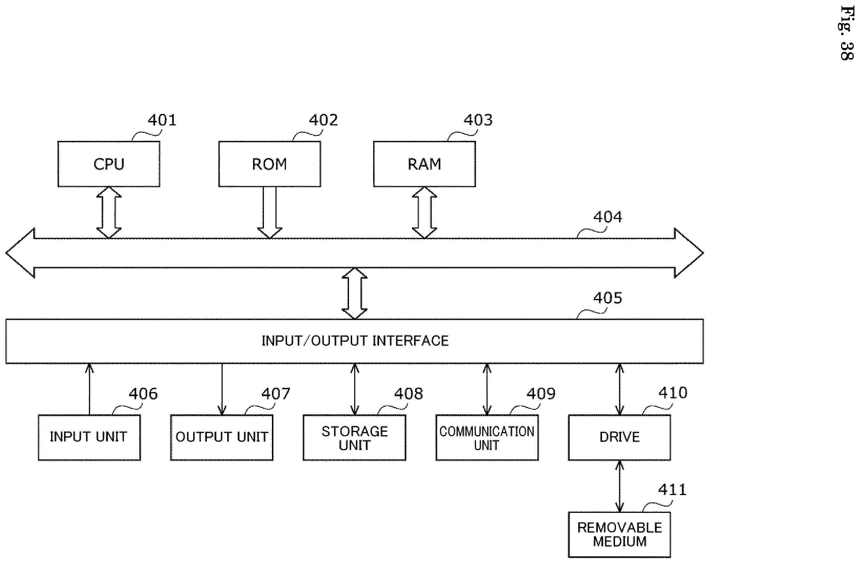

   Fig. 38 is a block diagram illustrating a configuration example of hardware of a computer that executes a series of processes by a program.

### [Description of Embodiments]

Hereinafter, embodiments of the present technology will be described with reference to the drawings.

### <<Entertainment System 11 to Which Present Technology Is Applied>>

### <Overview of Overall Configuration>

Fig. 1 is a block diagram illustrating, as an example, of an overview of an overall configuration of an entertainment system 11 to which the present technology is applied.

The entertainment system 11 in Fig. 1 is a system that holds events (live events and the like) such as concerts and recitals using virtual reality (VR) technologies. The entertainment system 11 includes a server system 21, a plurality of client systems 22, and a network 23.

The server system 21 generates distribution data including content (own movies and audio) that a distributor distributes to multiple viewers who participate in a predetermined event and supplies the distribution data to the client system 22 that are communicatively connected thereto via the network 23. Note that in the present specification, a term "view" can be used for a case in which only either watching or listening is indicated.

The client system 22 is a system used by each viewer who participates in an event held by the server system 21. Although a plurality of viewers can use one client system 22, it is assumed that one viewer uses one client system 22 in the present embodiment. Therefore, the number of client systems 22 corresponds to the number of viewers. Note that the number of client systems 22 is not limited to a specific number.

Each client system 22 generates a movie and audio in which a stage, a live-action movie of a distributor (a live-action avatar using a live-action movie, for example), and various objects (3D objects) such as avatars that are copies of viewers are arranged in a virtual space constituting an event venue on the basis of distribution data supplied from the client system 22 and presents the movie and the audio to the viewers.

Also, the client system 22 supplies data regarding the position, the posture, the motion, and the avatar of the viewer who uses the client system 22 itself to the other client systems 22. Additionally, the client system 22 acquires, via the network 23, data regarding the positions, the postures, the motions, and the avatars of the other viewers who are using the other client systems 22. Note that the various kinds of data may be exchanged among the client systems 22 via the server system 21 or via another server.

The client system 22 controls the positions, the postures, and the motions of the avatars or the like of the other viewers to be arranged in the virtual space, on the basis of the data regarding the positions, the postures, the motions, the avatars, and the like of the other viewers acquired from the other client system 22.

Moreover, in a case in which voice chatting or text chatting is performed between the viewers, the client system 22 supplies audio of the viewer who uses the client system 22 itself or a text input by the viewer to the client system 22 of the counterpart with whom the voice chatting or the text chatting is performed via the network 23. Also, the client system 22 acquires audio of the viewer of the client system 22 of the counterpart or text input by the viewer from the client system 22 of the counterpart via the network 23 and presents the audio or the text to the viewer of the client system 22 itself.

The network 23 is a communication network that connects the server system 21 and the information processing device 61 such that they can communicate with each other. The network 23 may include an arbitrary communication network such as a wide area network (WAN) (including the Internet), a local area network (LAN), a public line network, or a mobile communication network, for example.

### (Server System 21)

In Fig. 1, the server system 21 includes, for example, a distribution server 41 and a multi-view camera 42.

The distribution server 41 controls communication with the client system 22 via the network 23. The distribution server 41 establishes communication connection with the client system 22 that has appropriately applied for participation in an event, for example, and supplies distribution data to the client system 22.

Also, the distribution server 41 generates a live-action movie and audio of the distributor to be distributed to the client system 22 as data for transmission (movie stream data and audio stream data) and supplies the data to the client system 22.

For example, the distribution server 41 acquires, by the multi-view camera 42, a movie obtained by imaging the distributor with a green screen located behind the distributor from multiple views. As the multi-view camera 42, a plurality of cameras are disposed around the distributor, and the distributor is imaged by the cameras from different positions.

The distribution server 41 generates a multi-view movie by removing movies of unnecessary objects other than the distributor from the multiple-point-of-view movie acquired from the multi-view camera 42. Then, the distribution server 41 supplies data obtained by encoding the multi-view movie as movie stream data included in the distribution data to the client system 22.

Also, the distribution server 41 acquires audio of the distributor that has been stereoscopically collected by a plurality of microphones or ambisonics microphones (not illustrated) disposed around the distributor. The distribution server 41 supplies data obtained by encoding the acquired audio as audio stream data included in the distribution data to the client system 22.

Also, the distribution server 41 supplies objects data representing the shapes, the textures, the positions, and the like of various objects arranged in the virtual space constituting the event venue as meta data included in the distribution data to the client system 22. The meta data includes venue layout data indicating the position where a live-action avatar using a live-action movie as a copy of the distributor is arranged in the virtual space and the positions where avatars (avatars of arbitrarily created characters) as copies of the viewers who participate in the event are arranged. The position where the live-action avatar of the distributor is arranged in the virtual space is a distribution position where the distributor distributes the content, and the positions where the avatars of the viewers are arranged are viewing positions where the viewers view the content distributed by the distributor.

### (Client System 22)

The client system 22 includes, for example, the information processing device 61, a head mounted display 62 (hereinafter, referred to as an HMD 62), and a hand controller 63.

The HMD 62 and the hand controller 63 are connected to the information processing device 61 via a communication interface to which peripheral devices are connected.

The information processing device 61 is a stationary-type game device that controls display and audio of the HMD 62, for example. However, the information processing device 61 may be a personal computer, a tablet terminal, a smartphone, a portable-type game device, or the like. Also, the information processing device 61 may be incorporated in the HMD 62.

The information processing device 61 controls communication between the distribution server 41 in the server system 21 and the information processing device 61 of another client system 22 via the network 23.

The information processing device 61 logs into the distribution server 41 of the server system 21 and applies for participation in an event held by the server system 21 on the basis of a user operation detected by the hand controller 63, for example. Once participation in the event is accepted, distribution data regarding the event is supplied from the distribution server 41 to the information processing device 61.

The hand controller 63 includes, for example, an operation button and a motion sensor. The motion sensor detects parallel movement of the hand controller 63 in three orthogonal axial directions and rotation movement about the three orthogonal axes and detects the position, the posture, and the motion of six degrees of freedom (6DoF) of the hand controller 63. The hand controller 63 detects an operation of the operation button or the position, the posture, and the motion of the hand controller 63 as a user operation and supplies the user operation to the information processing device 61.

Also, the information processing device 61 generates a movie that the HMD 62 is caused to display and audio that a headphone that can be attached to and detached from the HMD 62 is caused to output and supplies the movie and the audio to the HMD 62.

The information processing device 61 creates 3D models of various objects in the virtual space constituting the event venue and generates a video in which (the various objects in) the virtual space is imaged (rendered) in a predetermined line-of-view direction from a viewpoint at a predetermined position, on the basis of the distribution data and the like from the distribution server 41. The creation and the rendering of the various objects are repeatedly executed at a predetermined cycle.

The viewpoint at the time of the rendering is a viewing position at which the viewer who uses the HMD 62 connected to the information processing device 61 views the content of the distributor. The line-of-view direction at the time of the rendering is a line-of-view direction of the HMD 62. The information processing device 61 supplies the movie generated through the rendering to the HMD 62 and causes the HMD 62 to display it. Note that the movie generated through the rendering includes a movie for the right eye and a movie for the left eye with parallax, for example, and is a 3D movie. However, the video may be a 2D movie, and the display device that displays the movie may not be the HMD 62.

Additionally, the information processing device 61 generates stereo audio in a case in which the audio distributed from the distribution position of the content of the distributor is viewed at the viewing position of the viewer who uses the HMD 62 in the virtual space on the basis of the audio stream data that is audio of the distributor included in the distribution data from the distribution server 41, and supplies the stereo audio to the HMD 62.

The HMD 62 includes a display unit that is attached to a head of a user (viewer) and displays a movie, a headphone that is attachable/detachable and outputs audio, and the like. The HMD 62 is not limited to a specific shape.

Also, the HMD 62 includes a motion sensor. The motion sensor detects parallel movement of the HMD 62 in the three orthogonal axial directions and rotation movement around the three orthogonal axial directions and detects the position, the posture, and the motion of the 6DoF of the HMD 62.

The information processing device 61 renders the virtual space with a direction in the virtual space corresponding to the front direction of the HMD 62 in the actual space defined as a line-of-view direction at the time of the rendering, on the basis of the position, the posture, and the motion of the HMD 62 detected by the motion sensor of the HMD 62. Also, the information processing device 61 generates a video in a field-of-view range that can be displayed on the display unit of the HMD 62 (hereinafter, referred to as a field-of-view range of the HMD 62) through the rendering of the virtual space.

### <Layout of Objects>

Here, there are fixed objects with no changes in states, such as a stage, seats. And the like in the event venue and mobile objects with changes in states (the positions, the postures, and the motions) of the live-action avatar (for example, a volumetric movie) of the distributor, avatars of the viewers, and the like, as the various objects arranged in the virtual space.

In regard to the fixed objects, the information processing device 61 acquires the object data indicating the shapes, the textures, the positions, and the like from the meta data included in the distribution data from the distribution server 41, creates 3D models of the fixed objects in the virtual space, and maps the textures on the 3D models at the time of the rendering.

In regard to the avatar of each viewer that is a mobile object, the information processing device 61 acquires the viewing position of each viewer from the meta data (data of the venue layout) included in the distribution data from the distribution server 41 and acquires the shape, the texture, the position, the posture, and the motion from an information processing device 61 of another client system 22. The information processing device 61 of each client system 22 supplies avatar data indicating the basic shape and the texture of the avatar of the viewer who uses the information processing device 61 itself and 6DoF data indicating the position, the posture, and the motion (the positions, the postures, and the motions of the head and the hands) of the viewer as meta data to the information processing device 61 of another client system 22. The 6DoF data indicating the positions, the postures, and the motions of the head and the hands of the viewer is detected by the motion sensor of each of the HMD 62 and the hand controller 63.

The information processing device 61 acquires the shape, the texture, the position, the posture, and the motion of the avatar of each viewer from the meta data (the avatar data and the 6DoF data) from the information processing device 61 of the client system 22 that each viewer uses.

The information processing device 61 creates the 3D model of the avatar of each viewer in the virtual space and maps the texture on the 3D model at the time of the rendering on the basis of the position (viewing position) of the avatar of each viewer acquired from the meta data from the distribution server 41 and the shape, the texture, the position, the posture, and the motion of the avatar of each viewer acquired from the meta data (avatar data and 6DoF data) from the information processing device 61 of each client system 22. In this manner, a movie of the avatar of each viewer moving in accordance with a live-action motion of each viewer is generated.

For the live-action avatar of the distributor that is mobile object, the information processing device 61 acquires the position (distribution position) from the meta data (data of venue layout) included in the distribution data from the distribution server 41. Also, the information processing device 61 acquires a multi-view video of the distributor from the video stream data included in the distribution data from the distribution server 41 and generates 3D shape data and the texture of the distributor from the multi-view movie. Then, the information processing device 61 creates a 3D model of the distributor in the virtual space from the position and the 3D shape data of the live-action avatar and maps the texture generated from the live-action movie on the 3D model of the distributor at the time of the rendering. In this manner, a movie including the live-action movie of the distributor as a copy of the distributor at the distribution position of the distributor is generated.

Note that the information processing device 61 is not limited to the method of generating the live-action avatar of the distributor and may create a live-action movie of the distributor when the distribution position is viewed from the viewpoint position at the time of the rendering from the multi-view movie acquired from the distribution server 41 and arrange the live-action movie at the distribution position, for example. A method for arranging the live-action movie of the distributor as a copy of the distributor at the distribution position is not limited to a specific method. Also, the copy of the distributor may be an avatar that does not use the live-action movie.

Also, it is assumed that the distribution position of the distributor where the live-action avatar is arranged and the viewing position of each viewer where the avatar of each viewer is arranged are fixed to predetermined positions in the present embodiment. However, in a case in which the parallel motion of the head of the viewer is equal to or greater than a specific amount, for example, the viewer may be determined to have moved as a whole, and the viewing position of the avatar of the viewer may be moved.

Also, in a case in which the viewer who uses the client system 22 to which the information processing device 61 itself belongs performs voice chatting or text chatting with a viewer who uses another client system 22 during participation in the event, the information processing device 61 designates the viewer or a group as the counterpart of the chatting (conversation) for the distribution server 41 on the basis of a user operation performed on the hand controller 63 or the like at the time upon the participation on the event.

The distribution server 41 causes the information processing devices 61 of the client systems 22 that the viewers who perform chatting together use to set a chatting mode and causes the information processing devices 61 to establish communication connection therebetween, on the basis of the designation of the counterpart of the chatting from the information processing device 61.

Each information processing device 61 in the chatting mode acquires audio of the viewer through the microphone provided in the HMD 62 or the like connected to the information processing device 61 itself or acquires a text input through a user operation performed on the hand controller 63 or the like connected to the information processing device 61 itself. Then, the information processing device 61 in the chatting mode encodes the acquired audio or text and supplies it as audio stream data or text data to the information processing device 61 as the counterpart of the chatting.

The information processing device 61 in the chatting mode decodes the audio stream data or the text data supplied from the information processing device 61 as the counterpart of the chatting, causes the headphone of the HMD 62 to output the decoded audio, and causes the display unit of the HMD 62 to display the decoded text. In order to indicate from which viewer from among the viewers in the virtual space the audio or the text has been sent at this time, the information processing device 61 may cause a speech balloon image to be displayed at the position of the avatar of the viewer who is a transmission source of the chatting and may cause the text sent through the chatting to be displayed in the speech balloon image in the case of the text chatting.

### <Setting of Venue Layout>

Next, setting of venue layout representing the viewing position of each viewer (the viewing position where the content is viewed) and the distribution position (the distribution position of the content) of the distributor in the virtual space constituting the event venue will be described.

Fig. 2 is a block diagram illustrating, as an example, a functional configuration regarding setting of venue layout of the server system 21 and the client system 22 in Fig. 1. Note that in the drawing, the same reference signs are applied to the components corresponds to those in the entertainment system 11 in Fig. 1, and description thereof will be omitted. Also, the information processing device 61 of an arbitrary one client system 22 from among the plurality of client systems 22 in Fig. 1 is illustrated in Fig. 2.

Additionally, there may be a case in which venue layout is set for each viewer and the venue layout differs for each viewer. In the following description, viewers to which the set venue layout is applied will be referred to as experiencing persons. Therefore, the viewing positions for them set by venue layout for the experiencing persons themselves are viewing positions where the experiencing persons actually undergo the experience through the HMD 62. On the other hand, viewing positions of predetermined viewers set by the venue layout for viewers (experiencing persons) other than the predetermined viewers may differ from the viewing positions where the viewers actually undergo the experience. Also, the description of Fig. 2 will be provided on the assumption of a case in which venue layout for the viewer who uses the information processing device 61 illustrated in Fig. 2 is set, and the viewer who uses the information processing device 61 in Fig. 2 is thus the experiencing person.

In Fig. 2, the distribution server 41 of the server system 21 includes a communication unit 81, a venue information transmission unit 82, a user information acquisition unit 83, a venue layout setting unit 84, a layout information transmission unit 85, and a user state storage unit 86.

The communication unit 81 controls communication with the information processing device 61 via the network 23.

The venue information transmission unit 82 transmits information regarding the event venue of the event to be held (event venue information) to the information processing device 61 via the communication unit 81.

Fig. 3 is a diagram illustrating, as an example, a state where the distributor (live-action avatar) and the viewers (avatars) are arranged in the virtual space constituting the event venue.

In the virtual space in Fig. 3, a live-action avatar of a distributor T1 is arranged with its front side facing the front side in the closer direction of the paper surface, and avatars of multiple viewers U are arranged with their front side facings the direction of the distributor T1.

The event venue information transmitted by the venue information transmission unit 82 to the information processing device 61 is information representing positions that can be set (can be selected) as the distribution position of the distributor T1 and the viewing positions of the viewers U in the virtual space constituting the event venue as illustrated in Fig. 3.

In Fig. 2, the user information acquisition unit 83 acquires user information regarding the user (viewer) from the information processing device 61. The user information includes best viewing position information, company group information, and user state information.

The best viewing position information represents a relative positional relationship between the viewing position of the experiencing person and the distribution position of the distributor T1 and is a positional relationship designated (determined) by the experiencing person as an optimal viewing position (best viewing position) for viewing the content. For example, the viewing position at the shortest distance from the distribution position of the distributor from among the viewing positions that can be set is typically a front of the distributor, which is considered to be an optimal viewing position. In a case in which the experiencing person designates such a viewing position, a positional relationship (a viewing position with) in which the relative positional relationship between the viewing position of the experiencing person and the distribution position of the distributor T1 has the shortest distance is designated.

Also, in regard to the relative positional relationship between the viewing position of the experiencing person and the distribution position of the distributor T1, the experiencing person may be able to designate an arbitrary positional relationship, such as (a viewing position of) a positional relationship with a viewing position that is separated obliquely from the distribution position of the distributor T1 at a predetermined angle by a predetermined distance. Also, a plurality of types of positional relationships that the experiencing person can designate may be prepared in advance, and the experiencing person may be able to select the optimal positional relationship for the experiencing person from among the prepared positional relationships. Also, there may be a case in which the experiencing person directly designates any viewing position from among viewing positions that can be set (that can be selected). This case also corresponds to a case in which the experiencing person designates a relative positional relationship between the viewing position of the experiencing person and the distribution position of the distributor T1.

Additionally, the relative positional relationship between the viewing position of the experiencing person and the distribution position of the distributor T1 may be automatically set to a positional relationship with which the shortest distance can be obtained therebetween or a positional relationship determined in advance as an optimal viewing position at which an optimal viewing environment for the distribution position can be obtained, for example.

Note that in the following description, the designation of the relative positional relationship between the viewing position of the experiencing person and the distribution position of the distributor T1 such that the viewing position of the experiencing person is an optimal viewing position will also simply be referred to as designation of an optimal viewing position of the experiencing person (viewer).

The company group information is information regarding (members of) a company group to which the experiencing person belongs. For example, the viewers or a group chatting during participation in the event is automatically set as a company group. However, a company group may be able to be designated separately from the chatting group. Also, the information processing device 61 of the viewer for which a company group has been designated may be automatically set to a chatting mode in which it can perform chatting.

The user state information is information regarding the position, the posture, and the motion of the experiencing person (the positions, the postures, and the motions of the head and the hands). Although the viewing position of the viewer is assumed to be fixed in the present embodiment, information regarding the position of the experiencing person is included in the user state information in a case in which the viewing position is changed with movement of the viewer.

The user information acquisition unit 83 supplies the user information acquired from the information processing device 61 to the venue layout setting unit 84 and supplies the user state information to the user state storage unit 86.

The venue layout setting unit 84 sets venue layout for the experiencing person on the basis of the user information from the information processing device 61. There are some forms for the setting of the venue layout, and details thereof will be described later. The venue layout setting unit 84 supplies information (layout information) regarding the set venue layout to the layout information transmission unit 85.

The layout information transmission unit 85 supplies the information regarding the venue layout from the venue layout setting unit 84 to the communication unit 81 and transmits the information as data regarding the aforementioned venue layout to the information processing device 61 via the communication unit 81.

The user state storage unit 86 stores the latest information out of the user state information from the user information acquisition unit 83. The user state information stored in the user state storage unit 86 is referred to in order to cause states (the position, the posture, the motion, and the viewing position) of the avatar of each viewer U in the virtual space to be maintained before and after switching of scenes even in a case in which communication is temporarily disconnected at the time of switching each of scenes including a standby scene before the distributor T1 starts distribution of content (before live), a content distribution scene when the content is being distributed (during live), and a lingering scene after the distribution of the content is ended (after live), for example.

In Fig. 2, the client system 22 includes a communication unit 101, a venue information acquisition unit 102, a best viewing position designation unit 103, a company group designation unit 104, a user state acquisition unit 105, a user information transmission unit 106, and a layout information acquisition unit 107.

The communication unit 101 controls communication with the distribution server 41 via the network 23 in the information processing device 61.

The venue information acquisition unit 102 acquire the event venue information transmitted from the venue information transmission unit 82 of the distribution server 41 via the communication unit 101 in the information processing device 61. The event venue information is information representing the positions that can be set (can be selected) as the distribution position of the distributor T1 and the viewing position of the viewer U in the virtual space constituting the event venue as illustrated in Fig. 3.

The event venue information acquired by the venue information acquisition unit 102 is displayed on the display unit of the HMD 62, for example, and is referred to in a case in which the experiencing person designates the viewing position (a relative positional relationship between the viewing position of the experiencing person and the distribution position of the distributor T1).

The best viewing position designation unit 103 is constituted by the information processing device 61 and the hand controller 63, for example. The best viewing position designation unit 103 allows the experiencing person to perform designation using the hand controller 63 or the like. Since the designation of the optimal viewing position of the experiencing person is as described above for the user information acquisition unit 83 in the distribution server 41, description thereof will be omitted here.

The relative positional relationship between the viewing position of the experiencing person and the distribution position of the distributor T1 designated by the best viewing position designation unit 103 is supplied as best viewing position information to the user information transmission unit 106.

The company group designation unit 104 is constituted by the information processing device 61 and the hand controller 63, for example. The company group designation unit 104 designates a company group in which the experiencing person desires to participate as a member, using the hand controller 63. A method for creating a company group is not limited to a specific method. For example, information regarding a company group created by an arbitrary viewer may be provided from the distribution server 41 to each client system 22, and the company group in which the viewer participates as a member may be able to be designated using the company group designation unit 104.

Alternatively, viewers or a group performing chatting during participation in the event may be automatically set in the company group, for example. Information regarding the company group designated by the company group designation unit 104 is supplied as company group information to the user information transmission unit 106.

The user state acquisition unit 105 is constituted by the information processing device 61 and the HMD 62, for example. The user state acquisition unit 105 acquires the position, the posture, the motion and the like of the experiencing person (the positions, the postures, and the motions of the head and the hands) using the motion sensor of the HMD 62. The information regarding the position, the posture, the motion, and the like of the experiencing person acquired by the user state acquisition unit 105 is supplied to the user information transmission unit 106.

The user information transmission unit 106 supplies the best viewing position information, the company group information, and the user state information supplied from the best viewing position designation unit 103, the company group designation unit 104, and the user state acquisition unit 105, respectively, as user information to the communication unit 101 and supplies the best viewing position information, the company group information, and the user state information to the distribution server 41 via the communication unit 101.

The layout information acquisition unit 107 acquires the data regarding the venue layout transmitted from the layout information transmission unit 85 of the distribution server 41 via the communication unit 101. The data regarding the venue layout represents venue layout for the experiencing person set by the venue layout setting unit 84 of the distribution server 41 and represents the distribution position of the distributor T1, the viewing position of the experiencing person, and the viewing positions of the viewers other than the experiencing person in the virtual space.

The information processing device 61 arranges a live-action avatar (3D model) at the distribution position of the distributor T1 and arranges an avatar (3D model) of each viewer at the viewing position of each viewer in the virtual space constituting the event venue in accordance with the data regarding the venue layout acquired by the layout information acquisition unit 107. Note that an avatar of the experiencing person may not be arranged or an avatar of only a body part below the head may be arranged at the viewing position of the experiencing person.

Also, the information processing device 61 sets the viewpoint at the time of rendering the virtual space as the viewpoint position of the experiencing person.

Note that the setting of the venue layout performed by the processing units (the communication unit 81, the venue information transmission unit 82, the user information acquisition unit 83, the venue layout setting unit 84, the layout information transmission unit 85, and the user state storage unit 86) of the distribution server 41 is executed for each of the viewers who participate in the event and view the content at the same time, and the venue layout for each viewer in a case in which each viewer is assumed to be an experiencing person is set. Then, data regarding the venue layout for each viewer is supplied to the information processing device 61 of the client system 22 used by each viewer. However, the setting of the venue layout for each viewer may not be performed by the distribution server 41, and the information processing device 61 of the client system 22 used by each viewer may set the venue layout corresponding to each viewer. Also, the setting of the venue layout may be performed by a server other than the distribution server 41.

### <Setting of Venue Layout (Processing of Venue Layout Setting Unit 84)>

Next, setting forms of a venue layout achieved by the venue layout setting unit 84 in Fig. 2 will be described. As the setting forms of the venue layout, first to ninth setting forms will be exemplified. All the first to ninth setting forms are forms in which the viewing position of the experiencing person and the distribution position are set such that a relative positional relationship between the viewing position of the experiencing person and the distribution position of the distributor is a positional relationship determined through designation or the like of an optimal viewing position for the experiencing person. Also, the first to fourth setting forms are forms in which the distribution position of the distributor is set with priority out of the viewing position of the experiencing person and the distribution position of the distributor, and the fifth to eighth setting forms are forms in which the viewing position of the experiencing person is set with priority. The ninth setting form is a form that is different from any of the first to eighth setting forms.

### <First Setting Form of Venue Layout>

### (Example 1)

Fig. 4 is a diagram for explaining an example 1 of the first setting form of venue layout. Note that Fig. 4 represents a virtual space constituting an event venue and the height direction corresponds to the direction that is vertical to the paper surface.

The first setting form of venue layout is an example case in which the distribution position of the distributor is fixed to a predetermined position.

Fig. 4 illustrates a case in which venue layout for the predetermined viewer U1 is set and a case in which the viewer U1 is an experiencing person V.

Also, it is assumed that the viewer U1 has designated the viewing position at which the distance between the viewing position of the viewer and the distribution position of the distributor is the shortest distance as an optimal viewing position using the best viewing position designation unit 103 (see Fig. 2) of the client system 22 that the viewer U1 himself/herself uses. In a case in which there is no description regarding designation of the optimal viewing position below, it is assumed that the viewing position (or the distribution position) at which the distance between the viewing position of the viewer and the distribution position of the distributor is the shortest distance has been designated as an optimal viewing position. Additionally, the optimal viewing position may be set not only on the assumption that the distance between the viewing position of the viewer and the distribution position of the distributor is the shortest distance but also on the assumption that the position is located in front of the live-action avatar of the distributor arranged at the distribution position.

In the virtual space in Fig. 4, the viewing available positions DP(m, n), DP(m, n + 1), DP(m, n - 1), DP(m + 1, n), ...represent the positions that can be set as the viewing positions of the viewer (hereinafter, all the viewing available positions will be represented as DP).

In the first setting form of venue layout, the distribution position P(T1) of the distributor T1 is set at a predetermined position P0.

Also, the viewing position P(U1) of the viewer U1 who is the experiencing person V is set at the front viewing available position DP(m, n) at the shortest distance to the distribution position P(T1) of the distributor T1. In other words, the viewing position P(U1) of the viewer U1 is set at the viewing available position DP(m, n) that is the viewing position P(U1) when a vector BP(U1, T1) from the distribution position P(T1) toward the viewing position P(U1) of the viewer U1 is a vector BP0 with the minimum size in a case in which the viewing position P(U1) of the viewer U1 is changed to each position of the viewing available position DP.

### (Processing in Example 1 of First Setting Form)

The venue layout setting unit 84 of the distribution server 41 in Fig. 2 acquires best viewing position information of the viewer U1 who is the experiencing person V from the user information acquisition unit 83. The best viewing position information of the viewer U1 is information regarding the optimal viewing position designated by the best viewing position designation unit 103 of the client system 22 used by the viewer U1. Also, the venue layout setting unit 84 sets the distribution position P(T1) of the distributor T1 and the viewing position P(U1) of the viewer U1 who is the experiencing person V such that the condition designated by the best viewing position information of the viewer U1 is met.

Thus, the venue layout setting unit 84 sets the distribution position P(T1) of the distributor T1 at the position P0 corresponding to the center of the stage, for example. Note that the distribution position P(T1) of the distributor T1 may be a position designated on the side on which the content is provided to the viewer or may be a position designated by the experiencing person V. In a case in which the experiencing person V designates the distribution position P(T1), the distribution position P(T1) may differ for each experiencing person (each viewer). Also, in a case in which a plurality of distributors are present, the experiencing person V may be able to select with respect to which of the distributors the experiencing person V desires to view at an optimal viewing position. In that case, the distributor selected by the experiencing person V and the distribution position of the distributor are defined as the distributor T1 and the distribution position P(T1) in Fig. 4. The same applies to the distribution position P(T1) of the distributor T1 in the first to third setting forms described below.

Also, the venue layout setting unit 84 sets the viewing position P(U1) of the viewer U1 who is the experiencing person V at the viewing available position DP(m, n) at the shortest distance from the distribution position P(T1) of the distributor T1 as the optimal viewing position, from among the viewing available positions DP.

Note that the viewing positions of the viewers other than the experiencing person V are set by an arbitrary method in the first setting form of venue layout.

Here, the vector BP(U1, T1) from the distribution position P(T1) of the distributor T1 toward the viewing position P(U1) of the viewer U1 represents a relative positional relationship between the viewing position P(U1) and the distribution position P(T1).

In the first setting form, the case in which the best viewing position designation unit 103 (see Fig. 2) designates, as the optimal viewing position, the viewing position when the distance between the viewing position of the viewer (experiencing person) and the distribution position of the distributor is the shortest distance (the case in which (the condition of) the relative positional relationship with the shortest distance between the optimal viewing position and the distribution position is designated) has been assumed. The present invention is not limited to this case, and the venue layout setting unit 84 performs the following processing under an arbitrary condition (positional relationship) designated by the best viewing position designation unit 103. The venue layout setting unit 84 detects, as the optimal viewing position, the viewing position P(U1) when the vector BP(U1, T1) from the distribution position P(T1) of the distributor T1 toward the viewing position P(U1) of the viewer U1 best matches the positional relationship designated by the best viewing position designation unit 103 (best viewing position information) in a case in which the viewing position P(U1) of the viewer U1 is changed within a range of the positions that can be set (viewing available positions DP). Then, the venue layout setting unit 84 sets the viewing position P(U1) of the viewer U1 at the detected optimal viewing position.

In Fig. 4, in a case in which the viewing position P(U1) of the viewer U1 is changed to each position out of the viewing available positions DP, the viewing position P(U1) of the viewer U1 is set at the viewing available position DP(m, n) that is a viewing position P(U1) when the vector from the distribution position P(T1) toward the viewing position P(U1) becomes the vector BP0 with the minimum size.

Also, although the optimal viewing position means a viewing position at which the optimal viewing environment is obtained, the optimal viewing environment also depends on preference of the viewer, and it is thus possible to state that the optimal viewing position is a viewing position determined through designation by the viewer (experiencing person), a system, or the like instead.

Specifically, as a method of designating the optimal viewing position, there is a first designation method of directly designating the optimal viewing position from among the viewing available positions. As another method, there is a second designation method of designating a relative positional relationship (itself) between the optimal viewing position and the distribution position P(T1) of the distributor T1.

On the other hand, it is also possible to change the distribution position P(T1) of the distributor T1 for each viewer as an advantage of the virtual world that is different from the real world. In other words, it is possible to define a fixed viewing position as the optimal viewing position by changing the distribution position P(T1) of the distributor T1 and to define the viewing position as the optimal viewing position by changing both the viewing position and the distribution position P(T1) of the distributor T1.

As a method of designating the optimal viewing position in such a case in which the distribution position P(T1) of the distributor T1 is not fixed, there is a third designation method of directly designating the distribution position P(T1) of the distributor T1 with respect to the fixed viewing position, in addition to the second designation method.

In the present specification, it is possible to employ an arbitrary method as a specific designation method from among the first to third designation methods in a case in which designation of the optimal viewing position (or the viewing position) is referred to, in a case in which designation of the relative positional relationship between the optimal viewing position (or the viewing position) and the distribution position P(T1) of the distributor T1 is referred to, in a case in which designation of the distribution position P(T1) of the distributor T1 is referred to, or in a case of description of indication corresponding thereto, regardless of whether the designation is made directly or indirectly. Also, the same applies not only to the designation of the optimal viewing position (viewing position), the relative positional relationship, and the distribution position P(T1) but also determination, setting, and the like thereof.

### (Example 2)

Fig. 5 is a diagram for explaining an example 2 of the first setting form of venue layout. Note that Fig. 5 represents the virtual space constituting the same event venue as that in Fig. 4, and the height direction corresponds to the direction that is vertical to the paper surface.

Fig. 5 illustrates a case in which venue layout for a viewer U2 who is different from the viewer U1 in Fig. 4 has been set and illustrates a case in which the viewer U2 is defined as the experiencing person V.

In the first setting form of venue layout, the distribution position P(T1) of the distributor T1 is set at the predetermined position P0 similarly to the case in Fig. 4, in the virtual space in Fig. 5.

Also, the viewing position P(U2) of the viewer U2 who is the experiencing person V is set at the front viewing available position DP(m, n) at the shortest distance from the distribution position P(T1) of the distributor T1 in the same manner as the viewing position P(U 1) of the viewer U1 when the viewer U1 in Fig. 4 is the experiencing person V.

In other words, in a case in which the viewing position P(U2) of the viewer U2 is changed to each position from among the viewing available positions DP, the viewing position P(U2) of the viewer U2 is set at the viewing available position DP(m, n) that is the viewing position P(U2) when the vector BP(U2, T1) from the distribution position P(T1) of the distributor T1 toward the viewing position P(U2) of the viewer U2 is the vector BP0 with the minimum size.

### (Processing in Example 2 of First Setting Form)

The venue layout setting unit 84 of the distribution server 41 in Fig. 2 acquires best viewing position information of the viewer U2 who is the experiencing person V from the user information acquisition unit 83. The best viewing position information of the viewer U2 is information regarding the optimal viewing position designated by the best viewing position designation unit 103 of the client system 22 used by the viewer U2. Then, the venue layout setting unit 84 sets the distribution position P(T1) of the distributor T1 and the viewing position P(U2) of the viewer U2 who is the experiencing person V such that the condition designated by the best viewing position information of the viewer U2 is met.

Note that the processing of setting the distribution position P(T1) of the distributor T1 and the viewing position P(U2) of the viewer U2 who is the experiencing person V performed by the venue layout setting unit 84 is the same as that in the case of Fig. 4, and description thereof will thus be omitted.

According to the aforementioned first setting form of venue layout, each viewer can view the content distributed by the distributor T1 at each optimal viewing position even in a case in which multiple viewers view the content distributed by the distributor T1 at the same time in the same space.

### <Second Setting Form of Venue Layout>

### (Example 1)

Fig. 6 is a diagram for explaining an example 1 of a second setting form of venue layout. Note that Fig. 6 represents the virtual space constituting the same event venue as that in Fig. 4, and the height direction corresponds to a direction that is vertical to the paper surface. The distribution position P(T1) of the distributor T1 and the viewing available positions DP in the virtual space in Fig. 6 are the same as those in Fig. 4, and only some of the viewing available positions DP are illustrated with the reference sign.

The second setting form of venue layout is an example case in which the distribution position of the distributor is fixed to a predetermined position.

Fig. 6 illustrates a case in which venue layout for the predetermined viewer G1-U1 in the company group G1 has been set and illustrates a case in which the viewer G1-U1 is defined as the experiencing person V.

Also, it is assumed that the viewer G1-U1 belonging to the company group G1 has been designated by the company group designation unit 104 (see Fig. 2) of the client system 22 that the viewer G1-U1 himself/herself uses. In addition, it is assumed that viewers G1-U1 to G1-U6 belong to the company group G1.

In the second setting form of venue layout, the distribution position P(T1) of the distributor T1 is set at the predetermined position P0 similarly to the case in Fig. 4 in the virtual space in Fig. 6.

Additionally, the viewing position P(G1-U1) of the viewer G1-U1 who is the experiencing person V is set at the front viewing available position DP(m, n) at the shortest distance from the distribution position P(T1) of the distributor T1.

In other words, in a case in which the viewing position P(G1-U1) of the viewer G1-U1 is changed to each position from among the viewing available positions DP, the viewing position P(G1-U1) of the viewer G1-U1 is set at the viewing available position DP(m, n) that is the viewing position P(G1-U1) when the vector BP(G1-U1, T1) from the distribution position P(T1) of the distributor T1 toward the viewing position P(G1-U1) of the viewer G1-U1 is the vector BP0 with the minimum size.

Also, the viewing positions of the viewers G1-U2 to G1-U6 who are members of the company group G1 to which the viewer G1-U1 belongs are set near the viewing position P(G1-U1) of the viewer G1-U1. The viewing positions of the viewers G1-U1 to G1-U6 are the viewing available positions DP(m, n), DP(m, n + 1), DP(m, n - 1), DP(m + 1, n), DP(m + 1, n + 1), and DP(m + 1, n - 1), respectively (see Fig. 4).

### (Processing in Example 1 of Second Setting Form)

The venue layout setting unit 84 of the distribution server 41 in Fig. 2 acquires best viewing position information of the viewer G1-U1 who is the experiencing person V from the user information acquisition unit 83. The best viewing position information of the viewer G1-U1 is information regarding the optimal viewing position designated by the best viewing position designation unit 103 of the client system 22 used by the viewer G1-U1. Then, the venue layout setting unit 84 sets the distribution position P(T1) of the distributor T1 and the viewing position P(G1-U1) of the viewer G1-U1 who is the experiencing person V such that the condition designated by the best viewing position information of the viewer G1-U1 is met.

Thus, the venue layout setting unit 84 sets the distribution position P(T1) of the distributor T1 at the position P0 corresponding to the center of the stage, for example.

Also, the venue layout setting unit 84 sets the viewing position P(G1-U1) of the viewer G1-U1 who is the experiencing person V at the viewing available position DP(m, n) at the shortest distance from the distribution position P(T1) of the distributor T1 as the optimal viewing position, from among the viewing available positions DP.

In other words, the venue layout setting unit 84 detects, as the optimal viewing position, the viewing position P(G1-U1), when the vector BP(G1-U1, T1) from the distribution position P(T1) toward the viewing position P(G1-U1) best matches the positional relationship designated by the best viewing position designation unit 103 (best viewing position information) in a case in which the viewing position P(G1-U1) of the viewer G1-U1 is changed to each position from among the viewing available positions DP. Then, the venue layout setting unit 84 sets the viewing position P(G1-U1) of the viewer G1-U1 at the detected optimal viewing position.

Also, the venue layout setting unit 84 acquires the company group information of the viewer G1-U1 who is the experiencing person V from the user information acquisition unit 83 (see Fig. 2). The company group information of the viewer G1-U1 is information regarding the company group designated by the company group designation unit 104 (see Fig. 2) of the client system 22 used by the viewer G1-U1. The venue layout setting unit 84 detects the company group to which the viewer G1-U1 who is the experiencing person V belongs and the members thereof on the basis of the acquired company group information of the viewer G1-U1. Then, the venue layout setting unit 84 sets the viewing positions of the members other than the experiencing person V in the detected company group.

At this time, the viewing position of each of the members in the detected company group is set to be adjacent to any of the viewing positions. Furthermore, the viewing position of each member may be set such that the distance between the most separated viewing positions from among the viewing positions of each member of the company group is the shortest.

Note that the layout (positional relationship) of the viewing positions from among the members in the company group is determined in advance to meet the aforementioned condition. As a method for determining the layout of the viewing positions from among the members in the company group, the layout may be determined by the members in the company group, may be randomly determined, or may be determined such that the viewing positions are arranged from the position that is the closest to the distribution position of the distributor T1 in the order of logging-in the distribution server 41 (in the order in which participation in the event is applied), for example.

In the example in Fig. 6, the company group to which the viewer G1-U1 who is the experiencing person V belongs is the company group G1, and the members of the company group G1 are the viewers G1-U1 to G1-U6.

In this case, the venue layout setting unit 84 sets the viewing positions of the viewers G1-U1 to G1-U6 who are the members of the company group G1 to which the viewer G1-U1 who is the experiencing person V belongs, in accordance with the layout of the viewing positions from among the members of the company group G1. However, the viewing position P(G1-U1) of the viewer G1-U1 who is the experiencing person V is set at the viewing available position DP(m, n) defined as the optimal viewing position as described above.

According to the example in Fig. 6, layout of the viewing positions from among the members of the company group G1 in two split lines, namely the front line and the back like, has been determined. The viewer G1-U1 who is the experiencing person V is arranged at the center of the front line, the viewer G1-U2 is arranged on the right side in the front line, and the viewer G1-U3 is arranged on the left side in the front line. Additionally, the viewer G1-U4 is arranged at the center of the back line, the viewer G1-U5 is arranged on the right side in the back line, and the viewer G1-U6 is arranged on the left side in the back line.

The venue layout setting unit 84 sets the viewing positions of the members other than the viewer G1-U1 in the company group G1 such that the viewing position P(G1-U1) of the viewer G1-U1 who is the experiencing person V is the viewing available position DP(m, n) that is the optimal viewing position in accordance with the layout of the viewing positions from among the members in the company group G1 in this manner.

In this manner, the viewing positions of the viewers G1-U1 to G1-U6 who belong to the company group G1 are set to the viewing available positions DP(m, n), DP(m, n + 1), DP(m,n - 1), DP(m + 1, n), DP(m + 1, n + 1), and DP(m + 1, n - 1) (see Fig. 4), respectively, as illustrated in Fig. 6.

Note that the viewing positions of the viewers other than the members of the company group G1 are set by an arbitrary method.

### (Example 2)

Fig. 7 is a diagram for explaining an example 2 of a second setting form of venue layout. Note that Fig. 7 represents the virtual space constituting the same event venue as that in Fig. 4, and the height direction corresponds to a direction that is vertical to the paper surface. The distribution position P(T1) of the distributor T1 and the viewing available positions DP in the virtual space in Fig. 7 are the same as those in Fig. 4, and only some of the viewing available positions DP are illustrated with the reference sign.

Fig. 7 illustrates a case in which venue layout for a viewer G1-U2 who is different from the viewer G1-U1 in Fig. 6 and belongs to the same company group G1 as that in Fig. 6 has been set and a case in which the viewer G1-U2 is defined as the experiencing person V.

Also, it is assumed that the viewer G1-U2 belonging to the company group G1 has been designated by the company group designation unit 104 (see Fig. 2) of the client system 22 that the viewer G1-U1 himself/herself uses. Additionally, it is assumed that viewers G1-U1 to G1-U6 belong to the company group G1 similarly to the case in Fig. 6.

In addition, it is assumed that the viewer G1-U2 has designated, as the optimal viewing position, the viewing position when the distance between the viewing position of the viewer and the distribution position of the distributor is the shortest distance, by the best viewing position designation unit 103 (see Fig. 2) of the client system 22 that the viewer G1-U2 himself/herself uses.

In the second setting form of venue layout, the distribution position P(T1) of the distributor T1 is set at the predetermined position P0 similarly to the case in Fig. 6 in the virtual space in Fig. 7.

Additionally, the viewing position P(G1-U2) of the viewer G1-U2 who is the experiencing person V is set at the front viewing available position DP(m, n) at the shortest distance from the distribution position P(T1) of the distributor T1.

In other words, in a case in which the viewing position P(G1-U2) of the viewer G1-U2 is changed to each position from among the viewing available positions DP, the viewing position P(G1-U2) of the viewer G1-U2 is set at the viewing available position DP(m, n) that is the viewing position P(G1-U2) when the vector BP(G1-U2, T1) from the distribution position P(T1) of the distributor T1 toward the viewing position P(G1-U2) of the viewer G1-U2 is the vector BP0 with the minimum size.

Also, the viewing positions of the viewers G1-U1 and G1-U3 to G1-U6 who are members of the company group G1 to which the viewer G1-U2 belongs are set near the viewing position P(G1-U2) of the viewer G1-U2. The viewing positions of the viewers G1-U1 to G1-U6 are the viewing available positions DP(m, n - 1), DP(m, n), DP(m, n - 2), DP(m + 1, n - 1), DP(m + 1, n), and DP(m + 1, n - 2) (see Fig. 4), respectively.

### (Processing in Example 2 of Second Setting Form)

The venue layout setting unit 84 of the distribution server 41 in Fig. 2 acquires best viewing position information of the viewer G1-U2 who is the experiencing person V from the user information acquisition unit 83. The best viewing position information of the viewer G1-U2 is information regarding the optimal viewing position designated by the best viewing position designation unit 103 of the client system 22 used by the viewer G1-U2. Then, the venue layout setting unit 84 sets the distribution position P(T1) of the distributor T1 and the viewing position P(G1-U2) of the viewer G1-U2 who is the experiencing person V such that the condition designated by the best viewing position information of the viewer G1-U2 is met.

Thus, the venue layout setting unit 84 sets the distribution position P(T1) of the distributor T1 at the position P0 similarly to Fig. 6.

Also, the venue layout setting unit 84 sets the viewing position P(G1-U2) of the viewer G1-U2 who is the experiencing person V at the viewing available position DP(m, n) at the shortest distance from the distribution position P(T1) of the distributor T1 as the optimal viewing position, from among the viewing available positions DP.

In other words, the venue layout setting unit 84 detects, as the optimal viewing position, the viewing position P(G1-U2), when the vector BP(G1-U2, T1) from the distribution position P(T1) toward the viewing position P(G1-U2) best matches the positional relationship designated by the best viewing position designation unit 103 (best viewing position information) in a case in which the viewing position P(G1-U2) of the viewer G1-U2 is changed to each position from among the viewing available positions DP. Then, the venue layout setting unit 84 sets the viewing position P(G1-U2) of the viewer G1-U2 at the detected optimal viewing position.

Also, the venue layout setting unit 84 acquires the company group information of the viewer G1-U2 who is the experiencing person V from the user information acquisition unit 83 (see Fig. 2). The company group information of the viewer G1-U2 is information regarding the company group designated by the company group designation unit 104 (see Fig. 2) of the client system 22 used by the viewer G1-U2. The venue layout setting unit 84 detects the company group to which the viewer G1-U2 who is the experiencing person V belongs and the members thereof on the basis of the acquired company group information of the viewer G1-U2. Then, the venue layout setting unit 84 sets the viewing positions of the members other than the experiencing person V in the detected company group.

In the example in Fig. 7, the company group to which the viewer G1-U2 who is the experiencing person V belongs is the company group G1, and the members of the company group G1 are viewers G1-U1 to G1-U6.

In this case, the venue layout setting unit 84 sets the viewing positions of the viewers G1-U1 to G1-U6 who are members of the company group G1 to which the viewer G1-U2 who is the experiencing person V belongs, in accordance with the layout of the viewing positions from among the members of the company groups G1 determined in advance. However, the viewing position P(G1-U2) of the viewer G1-U2 who is the experiencing person V is set at the viewing available position DP(m, n) defined as the optimal viewing position as described above.

The layout of the viewing positions from among the members of the company group G1 is determined in advance as illustrated in Fig. 6.

The venue layout setting unit 84 performs the setting in accordance with the layout of the viewing positions from among the members of the company group G1 determined in advance as described above such that the viewing position P(G1-U2) of the viewer G1-U2 who is the experiencing person V is the viewing available position DP(m, n) that is the optimal viewing position. In this manner, the viewing positions of the viewers G1-U1 to G1-U6 who belong to the company group G1 are set to the viewing available position DP(m, n - 1), DP(m, n), DP(m, n - 2), DP(m + 1, n - 1), DP(m + 1, n), and DP(m + 1, n - 2) (see Fig. 4), respectively, as illustrated in Fig. 7.

Note that the viewing positions of the viewers other than the members of the company group G1 are set by an arbitrary method.

The layout of the viewing positions of the viewers G1-U1 to G1-U6 in Fig. 7 is achieved by moving to the left side as a whole by the amount corresponding to one line with respect to the layout of the viewers G1-U1 to G1-U6 in Fig. 6. According to this, the layout of the viewing positions (relative positional relationship) of the viewers G1-U1 to G1-U6 from among the members of the company group G1 is set to be the same regardless of which of the members of the company group G1 the experiencing person V corresponds to.

### (Example 3)

Fig. 8 is a diagram for explaining an example 3 of a second setting form of venue layout. Note that Fig. 8 represents the virtual space constituting the same event venue as that in Fig. 4, and the height direction corresponds to a direction that is vertical to the paper surface. The distribution position P(T1) of the distributor T1 and the viewing available positions DP in the virtual space in Fig. 8 are the same as those in Fig. 4, and only some of the viewing available positions DP are illustrated with the reference sign.

In Fig. 8, the optimal viewing position designated by the viewer G1-U2 using the best viewing position designation unit 103 (see Fig. 2) of the client system 22 that the viewer G1-U2 himself/herself uses is different from that in the case of Fig. 7, and the other conditions are common to those in the case of Fig. 7.

It is assumed that the viewer G1-U2 who is the experiencing person V has designated the viewing available position DP(m + 1, n + 2) at which the viewing position of the viewer is located in a direction oblique to the distribution position of the distributor using the best viewing position designation unit 103 of the client system 22 that the viewer G1-U2 himself/herself uses. However, the designation of the optimal viewing position is not limited to a case in which the viewing available position DP(m + 1, n + 2) is directly designated.

In the second setting form of venue layout, the distribution position P(T1) of the distributor T1 is set at the predetermined position P0 similarly to the case in Fig. 6 in the virtual space in Fig. 8.

Also, the viewing position P(G1-U2) of the viewer G1-U2 who is the experiencing person V is set at the viewing available position DP(m + 1, n + 2) in the direction oblique to the distribution position P(T1) of the distributor T1.

In other words, the viewing position P(G1-U2) of the viewer G1-U2 is set at the viewing available position DP(m + 1, n + 2) that is the viewing position P(G1-U2) when the vector BP(G1-U2, T1) from the distribution position P(T1) of the distributor T1 toward the viewing position P(G1-U2) of the viewer G1-U2 best matches the condition of the optimal viewing position designated by the viewer G1-U2 who is the experiencing person V in a case in which the viewing position P(G1-U2) of the viewer G1-U2 is changed to each of the viewing available positions DP.

Also, the viewing positions of the viewers G1-U1 and G1-U3 to G1-U6 who are members of the company group G1 to which the viewer G1-U2 belongs are set near the viewing position P(G1-U2) of the viewer G1-U2. The viewing positions of the viewers G1-U1 to G1-U6 are the viewing available positions DP(m + 1, n + 1), DP(m + 1, n + 2), DP(m, n), DP(m + 2, n + 1), DP(m + 2, n + 2), and DP(m + 2, n)(see Fig. 4), respectively.

### (Processing in Example 3 of Second Setting Form)

The venue layout setting unit 84 of the distribution server 41 in Fig. 2 acquires best viewing position information of the viewer G1-U2 who is the experiencing person V from the user information acquisition unit 83. The best viewing position information of the viewer G1-U2 is information regarding the optimal viewing position designated by the best viewing position designation unit 103 of the client system 22 used by the viewer G1-U2. Then, the venue layout setting unit 84 sets the distribution position P(T1) of the distributor T1 and the viewing position P(G1-U2) of the viewer G1-U2 who is the experiencing person V such that the condition designated by the best viewing position information of the viewer G1-U2 is met.

Thus, the venue layout setting unit 84 sets the distribution position P(T1) of the distributor T1 at the position P0 similarly to Fig. 6.

Also, the venue layout setting unit 84 detects, as the optimal viewing position, the viewing position P(G1-U2) when a vector that best matches the positional relationship designated by the best viewing position designation unit 103 (best viewing position information) is obtained from among vectors BP(G1-U2, T1) when the viewing position P(G1-U2) of the viewer G1-U2 is changed to each of the viewing available positions DP. Then, the venue layout setting unit 84 sets the viewing position P(G1-U2) of the viewer G1-U2 at the detected optimal viewing position. In the example in Fig. 8, the viewing available position DP(m + 1, n + 2) is detected as the optimal viewing position.

Also, the venue layout setting unit 84 acquires the company group information of the viewer G1-U2 who is the experiencing person V from the user information acquisition unit 83 (see Fig. 2). The company group information of the viewer G1-U2 is information regarding the company group designated by the company group designation unit 104 (see Fig. 2) of the client system 22 used by the viewer G1-U2. The venue layout setting unit 84 detects the company group G1 to which the viewer G1-U2 who is the experiencing person V belongs and the viewers G1-U1 to G1-U6 who are the members thereof using the acquired company group information of the viewers G1-U2.

The venue layout setting unit 84 sets the viewing positions of the viewers G1-U1 and G1-U3 to G1-U6 who are the detected members other than the viewer G1-U2 in the company group G1 in accordance with the layout of the viewing positions from among the members of the company group G1. The layout of the viewing positions from among the members of the company group G1 is determined in advance as illustrated in Fig. 6.

In this manner, the viewing positions of the viewers G1-U1 to G1-U6 who belongs to the company group G1 are set to the viewing available positions DP(m + 1, n + 1), DP(m + 1, n + 2), DP(m + 1, n), DP(m + 2, n + 1), DP(m + 2, n + 2), and DP(m + 2, n) (see Fig. 4), respectively, as in Fig. 8.

Note that the viewing positions of the viewers other than the members of the company group G1 are set by an arbitrary method.

The layout of the viewing positions of the viewers G1-U1 to G1-U6 in Fig. 8 is achieved by moving as a whole by the amount corresponding to two lines to the right side and by the amount corresponding to one line to the back side with respect to the layout of the viewing positions of the viewers G1-U1 to G1-U6 in Fig. 6. According to this, the layout (relative positional relationship) of the viewing positions of the viewers G1-U1 to G1-U6 from among the members of the company group G1 is set to be the same regardless of which of the members of the company group G1 the experiencing person V corresponds to and which position the optimal viewing position designated by the experiencing person V is.

### (Example 4)

Fig. 9 is a diagram for explaining an example 4 of a second setting form of venue layout. Note that Fig. 9 represents the virtual space constituting the same event venue as that in Fig. 4, and the height direction corresponds to a direction that is vertical to the paper surface. The distribution position P(T1) of the distributor T1 and the viewing available positions DP in the virtual space in Fig. 9 are the same as those in Fig. 4, and only some of the viewing available positions DP are illustrated with the reference sign.

Fig. 9 illustrates a case in which the venue layout for a viewer G2-U1 who is different from the viewer G1-U1 in Fig. 6 and belongs to a company group G2 that is different from that in Fig. 6 is set and illustrates a case in which the viewer G2-U1 is defined as the experiencing person V.

Also, it is assumed that the viewer G2-U1 belonging to the company group G2 has been designated by the company group designation unit 104 (see Fig. 2) of the client system 22 that the viewer G2-U1 himself/herself uses. In addition, it is assumed that viewers G2-U1 to G2-U6 belong to the company group G2.

In the second setting form of venue layout, the distribution position P(T1) of the distributor T1 is set at the predetermined position P0 similarly to the case in Fig. 6 in the virtual space in Fig. 9.

Additionally, the viewing position P(G2-U1) of the viewer G2-U1 who is the experiencing person V is set at the front viewing available position DP(m, n) at the shortest distance from the distribution position P(T1) of the distributor T1.

In other words, in a case in which the viewing position P(G2-U1) of the viewer G2-U1 is changed to each position from among the viewing available positions DP, the viewing position P(G2-U1) of the viewer G2-U1 is set at the viewing available position DP(m, n) that is the viewing position P(G2-U1) when the vector BP(G2-U1, T1) from the distribution position P(T1) of the distributor T1 toward the viewing position P(G2-U1) of the viewer G2-U1 is the vector BP0 with the minimum size.

Also, the viewing positions of the viewers G2-U2 to G2-U6 who are members of the company group G2 to which the viewer G2-U1 belongs are set near the viewing position P(G2-U1) of the viewer G2-U1. The viewing positions of the viewers G2-U1 to G2-U6 are the viewing available positions DP(m, n), DP(m, n + 1), DP(m,n - 1), DP(m + 1, n), DP(m + 1, n + 1), and DP(m + 1, n - 1), respectively (see Fig. 4).

### (Processing in Example 4 of Second Setting Form)

The venue layout setting unit 84 of the distribution server 41 in Fig. 2 acquires best viewing position information of the viewer G2-U1 who is the experiencing person V from the user information acquisition unit 83. The best viewing position information of the viewer G2-U1 is information regarding the optimal viewing position designated by the best viewing position designation unit 103 of the client system 22 used by the viewer G2-U1. Then, the venue layout setting unit 84 sets the distribution position P(T1) of the distributor T1 and the viewing position P(G2-U1) of the viewer G2-U1 who is the experiencing person V such that the condition designated by the best viewing position information of the viewer G2-U1 is met.

Thus, the venue layout setting unit 84 sets the distribution position P(T1) of the distributor T1 at the position P0 similarly to Fig. 6.

Also, the venue layout setting unit 84 sets the viewing position P(G2-U1) of the viewer G2-U1 who is the experiencing person V at the viewing available position DP(m, n) at the shortest distance from the distribution position P(T1) of the distributor T1 as the optimal viewing position, from among the viewing available positions DP.

In other words, the venue layout setting unit 84 detects, as the optimal viewing position, the viewing position P(G2-U1) when a vector that best matches the positional relationship designated by the best viewing position designation unit 103 (best viewing position information) is obtained from among vectors BP(G2-U1, T1) when the viewing position P(G2-U1) of the viewer G2-U1 is changed to each of the viewing available positions DP. Then, the venue layout setting unit 84 sets the viewing position P(G2-U1) of the viewer G2-U1 at the detected optimal viewing position.

Also, the venue layout setting unit 84 acquires the company group information of the viewer G2-U1 who is the experiencing person V from the user information acquisition unit 83 (see Fig. 2). The company group information of the viewer G2-U1 is information regarding the company group designated by the company group designation unit 104 (see Fig. 2) of the client system 22 used by the viewer G2-U1. The venue layout setting unit 84 detects the company group G2 to which the viewer G2-U1 who is the experiencing person V belongs and the viewers G2-U1 to G2-U6 who are the members thereof on the basis of the acquired company group information of the viewers G2-U1.

The venue layout setting unit 84 sets the viewing positions of the viewers G2-U2 to G2-U6 who are members other than the viewer G2-U1 in the detected company group G2 in accordance with the layout of the viewing positions determined in advance from among the members of the company group G2.

According to the example in Fig. 9, layout of the viewing positions from among the members of the company group G2 in two split lines, namely the front line and the back like, has been determined. The viewer G2-U1 who is the experiencing person V is arranged at the center of the front line, the viewer G2-U2 is arranged on the right side in the front line, and the viewer G2-U3 is arranged on the left side in the front line. Additionally, the viewer G2-U4 is arranged at the center of the back line, the viewer G2-U5 is arranged on the right side in the back line, and the viewer G2-U6 is arranged on the left side in the back line.

The venue layout setting unit 84 performs the setting in accordance with the layout of the viewing positions from among the members of the company group G2 such that the viewing position P(G2-U1) of the viewer G2-U1 who is the experiencing person V is the viewing available position DP(m, n) that is the optimal viewing position in this manner.

In this manner, the viewing positions of the viewers G2-U1 to G2-U6 who belong to the company group G2 are set to the viewing available positions DP(m, n), DP(m, n + 1), DP(m,n - 1), DP(m + 1, n), DP(m + 1, n + 1), and DP(m + 1, n - 1) (see Fig. 4), respectively, as illustrated in Fig. 9.

Note that the viewing positions of the viewers other than the members of the company group G2 are set by an arbitrary method.

In comparison between Fig. 9 and Fig. 6 are compared, the viewers in the surrounding portion of the experiencing person V are switched with the entire company group to which the experiencing person V belongs.

### (Example 5)

Fig. 10 is a diagram for explaining an example 5 of the second setting form of venue layout. Note that Fig. 10 represents the virtual space constituting the same event venue as that in Fig. 4, and the height direction corresponds to the direction that is vertical to the paper surface. The distribution position P(T1) of the distributor T1 and the viewing available positions DP in the virtual space in Fig. 10 are the same as those in Fig. 4, and only some of the viewing available positions DP are illustrated with the reference sign.

Fig. 10 illustrates a case in which venue layout for a viewer G2-U2 who is different from the viewer G2-U1 in Fig. 9 and belongs to the same company group G2 as that in Fig. 9 is set and illustrates a case in which the viewer G2-U2 is defined as the experiencing person V.

Also, it is assumed that the viewer G2-U2 belonging to the company group G2 has been designated by the company group designation unit 104 (see Fig. 2) of the client system 22 that the viewer G2-U2 himself/herself uses. Additionally, it is assumed that viewers G2-U1 to G2-U6 belong to the company group G2 similarly to the case in Fig. 9.

In addition, it is assumed that the viewer G2-U2 has designated, as the optimal viewing position, the viewing position when the distance between the viewing position of the viewer and the distribution position of the distributor is the shortest distance, by the best viewing position designation unit 103 (see Fig. 2) of the client system 22 that the viewer G2-U2 himself/herself uses.

In the second setting form of venue layout, the distribution position P(T1) of the distributor T1 is set at the predetermined position P0 similarly to the case in Fig. 6 in the virtual space in Fig. 10.

Additionally, the viewing position P(G2-U2) of the viewer G2-U2 who is the experiencing person V is set at the front viewing available position DP(m, n) at the shortest distance from the distribution position P(T1) of the distributor T1.

In other words, in a case in which the viewing position P(G2-U2) of the viewer G2-U2 is changed to each position from among the viewing available positions DP, the viewing position P(G2-U2) of the viewer G2-U2 is set at the viewing available position DP(m, n) that is the viewing position P(G2-U2) when the vector BP(G2-U2, T1) from the distribution position P(T1) of the distributor T1 toward the viewing position P(G2-U2) of the viewer G2-U2 is the vector BP0 with the minimum size.

Also, the viewing positions of the viewers G2-U1 and G2-U3 to G2-U6 who are members of the company group G2 to which the viewer G2-U2 belongs are set near the viewing position P(G2-U2) of the viewer G2-U2. The viewing positions of the viewers G2-U1 to G2-U6 are the viewing available positions DP(m,n - 1), DP(m, n), DP(m, n - 2), DP(m + 1, n - 1), DP(m + 1, n), and DP(m + 1, n - 2) (see Fig. 4), respectively.

### (Processing in Example 5 of Second Setting Form)

The venue layout setting unit 84 of the distribution server 41 in Fig. 2 acquires best viewing position information of the viewer G2-U2 who is the experiencing person V from the user information acquisition unit 83. The best viewing position information of the viewer G2-U2 is information regarding the optimal viewing position designated by the best viewing position designation unit 103 of the client system 22 used by the viewer G2-U2. Then, the venue layout setting unit 84 sets the distribution position P(T1) of the distributor T1 and the viewing position P(G2-U2) of the viewer G2-U2 who is the experiencing person V such that the condition designated by the best viewing position information of the viewer G2-U2 is met.

Thus, the venue layout setting unit 84 sets the distribution position P(T1) of the distributor T1 at the position P0 similarly to Fig. 6.

Also, the venue layout setting unit 84 sets the viewing position P(G2-U2) of the viewer G2-U2 who is the experiencing person V at the viewing available position DP(m, n) at the shortest distance from the distribution position P(T1) of the distributor T1 as the optimal viewing position, from among the viewing available positions DP.

In other words, the venue layout setting unit 84 detects, as the optimal viewing position, the viewing position P(G2-U2) when a vector that best matches the positional relationship designated by the best viewing position designation unit 103 (best viewing position information) is obtained from among the vectors BP(G2-U2, T1) when the viewing position P(G2-U2) of the viewer G2-U2 is changed to each of the viewing available positions DP. Then, the venue layout setting unit 84 sets the viewing position P(G2-U2) of the viewer G2-U2 at the detected optimal viewing position.

Also, the venue layout setting unit 84 acquires the company group information of the viewer G2-U2 who is the experiencing person V from the user information acquisition unit 83 (see Fig. 2). The company group information of the viewer G2-U2 is information regarding the company group designated by the company group designation unit 104 (see Fig. 2) of the client system 22 used by the viewer G2-U2. The venue layout setting unit 84 detects the company group G2 to which the viewer G2-U2 who is the experiencing person V belongs and the viewers G2-U1 to G2-U6 who are the members thereof using the acquired company group information of the viewers G2-U2.

The venue layout setting unit 84 sets the viewing positions of the viewers G2-U1 and G2-U3 to G2-U6 who are the detected members other than the viewer G2-U2 in the company group G2 in accordance with the layout of the viewing positions from among the members of the company group G2. The layout of the viewing positions from among the members of the company group G2 is determined in advance as illustrated in Fig. 9.

In this manner, the viewing positions of the viewers G2-U1 to G2-U6 who belong to the company group G2 are set to the viewing available positions DP(m,n - 1), DP(m, n), DP(m, n - 2), DP(m + 1, n - 1), DP(m + 1, n), and DP(m + 1, n - 2), respectively (see Fig. 4), as illustrated in Fig. 10.

Note that the viewing positions of the viewers other than the members of the company group G2 are set by an arbitrary method.

The layout of the viewing positions of the viewers G2-U1 to G2-U6 in Fig. 10 is achieved by moving to the left side as a whole by the amount corresponding to one line with respect to the layout of the viewing positions of the viewers G2-U1 to G2-U6 in Fig. 9. According to this, the layout (relative positional relationship) of the viewing positions of the viewers G2-U1 to G2-U6 from among the members of the company group G2 is set to be the same regardless of which of the members of the company group G2 the experiencing person V corresponds to.

According to the second setting form of venue layout as described above, each viewer can view the content distributed by the distributor at each optimal viewing position even in a case in which multiple viewers view the content distributed by the distributor at the same time in the same space.

Also, in a case in which a group such as a company group is set, the viewers as companies are arranged near the experiencing person. Therefore, the experiencing person can easily know states of the companies with a sense of actually meeting them during participation in the event. Additionally, in a case in which it is possible to perform voice chatting or text chatting in the company group, or in a case in which the viewers or the group chatting together is defined as a company group, it is possible to easily perform chatting even during participation in the event.

Also, the layout of the viewing positions from among the members (among members) of the company group is the same regardless of which of the viewers belonging to the company group the experiencing person is. Therefore, a matter in which both viewers belonging to the same company group recognize that their counterparts are present on their right side, for example, does not occur, for example. For example, a situation in which they face mutually opposite sides when they want to face each other for chatting or the like does not occur.

### <Third Setting Form of Venue Layout>

### (Example 1)

Fig. 11 is a diagram for explaining an example 1 of a third setting form of venue layout. Note that Fig. 11 represents the virtual space constituting the same event venue as that in Fig. 4, and the height direction corresponds to the direction that is vertical to the paper surface. The distribution position P(T1) of the distributor T1 and the viewing available position DP in the virtual space in Fig. 11 are the same as those in Fig. 4, and only some of the viewing available positions DP are illustrated with the reference sign.

The third setting form of venue layout is an example case in which the distribution position of the distributor is fixed to a predetermined position.

Fig. 11 illustrates a case in which venue layout for an arbitrary viewer from among the viewers G1-U1 to G1-U6 who belong to the company group G1 is set and illustrates a case in which the venue layout for all the viewers from among the viewers G1-U1 to G1-U6 is the same.

Also, it is assumed that a representative has been determined in the company group G1, and the representative has designated, as the optimal viewing position, the viewing position at which the distance between the position of the company group G1 and the distribution position of the distributor is the shortest distance, using the best viewing position designation unit 103 (see Fig. 2) of the client system 22 that the representative himself/herself uses. Note that designation of a relative positional relationship between the position of the company group G1 and the distribution position of the distributor will be described later.

In the third setting form of venue layout, the distribution position P(T1) of the distributor T1 is set at the predetermined position P0 similarly to the case of Fig. 4, in the virtual space in Fig. 11.

Also, the position (which will be described later) of the company group G1 is set at the front position at the shortest distance from the distribution position P(T1) of the distributor T1.

In other words, the position of the company group G1 when the vector BP(G1, T1) from the distribution position P(T1) of the distributor T1 toward the position of the company group G1 is the vector with the minimum size is detected as the optimal viewing position in a case in which the position of the company group G1 is changed within a range of positions that can be set. Then, the position of the company group G1 is set at the detected optimal viewing position.

In the example of Fig. 11, the viewing position P(G1-U1) of the viewer G1-U1 is set as the position of the company group G1, and the viewing position P(G1-U1) of the viewer G1-U1 is set at the viewing available position DP(m, n).

Also, the viewing positions of the viewers G1-U2 to G1-U6 who are members of the company group G1 to which the viewer G1-U1 belongs are set near the viewing position P(G1-U1) of the viewer G1-U1. The viewing positions of the viewers G1-U1 to G1-U6 are the viewing available positions DP(m, n), DP(m, n + 1), DP(m,n - 1), DP(m + 1, n), DP(m + 1, n + 1), and DP(m + 1, n - 1), respectively (see Fig. 4).

### (Processing in Example 1 of Third Setting Form)

The venue layout setting unit 84 of the distribution server 41 in Fig. 2 acquires the company group information of the experiencing person V from the user information acquisition unit 83 when venue layout is set for an arbitrary viewer (experiencing person V) who belongs to the company group G1. The company group information of the experiencing person V is information regarding the company group designated by the company group designation unit 104 (see Fig. 2) of the client system 22 that the experiencing person V uses. The venue layout setting unit 84 detects the company group G1 to which the experiencing person V belongs and the viewers G1-U1 to G1-U6 who are members thereof on the basis of the acquired company group information of the experiencing person V.

Also, the venue layout setting unit 84 acquires the best viewing position information of the company group G1 to which the experiencing person V belongs from the user information acquisition unit 83. The best viewing position information of the company group G1 is information regarding the optimal viewing position of the company group G1, is designated by the best viewing position designation unit 103 of the client system 22 that the representative of the company group G1 uses, and is acquired by the user information acquisition unit 83. It is assumed that the representative of the company group G1 is determined in advance.

Here, the position of the (entire) company group means the viewing position at which the members of the company group are integrally arranged in the virtual space. Specifically, the members of the company group G1 are arranged at the viewing available positions DP in accordance with the layout of the viewing positions determined in advance from among the members of the company group G1 similarly to the second setting form, for example. At this time, the viewing positions of all the members of the company group G1 are determined by determining which position out of the viewing available positions DP the viewing position of a predetermined viewer who belongs to the company group G1 is to be set at, with reference to the viewing position of the reference viewer. It is assumed that the viewing position of the reference viewer represents the position of the company group G1.

It is assumed that the position of the company group is the viewing position of the viewer arranged at the center on the most front side in the layout of the viewing positions from among the members of the company group, for example.

Note that the reference position of the company group may not be the viewing position of the predetermined viewer and may be, for example, a center position or the like of a region including the viewing positions of the members of the company group.

In the example of Fig. 11, the layout of each of the viewing positions of the viewers G1-U1 to G1-U6 who are members of the company group G1 from among the members of the company group G1 is determined in advance similarly to the case of Fig. 6. Then, the viewing position P(G1-U1) of the viewer G1-U1 arranged at the center on the front most side in the layout of the viewing positions from among the members of the company group G1 is set at the position of the company group G1.

Also, it is assumed that the representative of the company group G1 has designated the optimal viewing position for the position of the company group G1 in advance by the best viewing position designation unit 103 of the client system 22 that the representative himself/herself uses.

In the example of Fig. 11, it is assumed that the representative of the company group G1 has designated the optimal viewing position of the viewing position P(G1-U1) of the viewer G1-U1 that is the position of the company group G1. Hereinafter, it is assumed that the representative of the company group G1 has designated the viewing position when the distance between the viewing position P(G1-U1) of the viewer G1-U1 and the distribution position P(T1) of the distributor T1 is the shortest distance as the optimal viewing position of the viewing position P(G1-U1) of the viewer G1-U1 that is the position of the company group G1.

The venue layout setting unit 84 sets the distribution position P(T1) of the distributor T1 at the position P0 corresponding to the center of the stage similarly to the case of Fig. 4, for example.

Also, the venue layout setting unit 84 sets, as the optimal viewing position, the viewing position P(G1-U1) of the viewer G1-U1 that is the position of the company group G1 at the viewing available position DP(m, n) at which the distance from the distribution position P(T1) of the distributor T1 is the shortest distance from among the viewing available positions DP.

In other words, the venue layout setting unit 84 detects, as the optimal viewing position, the viewing position P(G1-U1) (=P(G1-U1, T1)at which the vector BP(G1, T1) from the distribution position P(T1) toward the company group G1 best matches the positional relationship designated by the best viewing position designation unit 103 (best viewing position information) in a case in which the viewing position P(G1-U1) of the viewer G1-U1 that is the position of the company group G1 is changed to each of the viewing available positions DP. Also, the venue layout setting unit 84 sets the viewing position P(G1-U1) of the viewer G1-U1 at the detected optimal viewing position.

Also, the venue layout setting unit 84 also sets the viewing positions of the members other than the viewer G1-U1 in the company group G1 in accordance with the layout of the viewing positions from among the members of the company group G1 such that the viewing position P(G1-U1) of the viewer G1-U1 that is the position of the company group G1 is the viewing available position DP(m, n).

In this manner, the viewing positions of the viewers G1-U1 to G1-U6 who belong to the company group G1 are set to the viewing available positions DP(m, n), DP(m, n + 1), DP(m,n - 1), DP(m + 1, n), DP(m + 1, n + 1), and DP(m + 1, n - 1) (see Fig. 4), respectively, as illustrated in Fig. 11.

Note that the viewing positions of the viewers other than the members of the company group G1 are set by an arbitrary method.

According to the third setting form of venue layout, the venue layout in Fig. 11 is set if the experiencing person V is any of the members of the company group G1. Therefore, the venue layout is common to all the viewers G1-U1 to G1-U6 who are the members of the company group G1. In other words, in the third setting form of venue layout, the venue layout is set in units of company groups.

### (Example 2)

Fig. 12 is a diagram for explaining an example 2 of a third setting form of venue layout. Note that Fig. 12 represents the virtual space constituting the same event venue as that in Fig. 4, and the height direction corresponds to the direction that is vertical to the paper surface. The distribution position P(T1) of the distributor T1 and the viewing available position DP in the virtual space in Fig. 12 are the same as those in Fig. 4, and only some of the viewing available positions DP are illustrated with the reference sign.

Fig. 12 illustrates a case in which venue layout for an arbitrary viewer from among viewers G2-U1 to G2-U6 who belong to a company group G2 that is different from the company group G1 in Fig 11 is set and illustrates a case in which the venue layout for all the viewers from among the viewers G2-U1 to G2-U6 is the same.

Also, it is assumed that a representative has been determined in the company group G2, and the representative has designated, as the optimal viewing position, the viewing position at which the distance between the position of the company group G2 and the distribution position of the distributor is the shortest distance, using the best viewing position designation unit 103 (see Fig. 2) of the client system 22 that the representative himself/herself uses.

In the third setting form of venue layout, the distribution position P(T1) of the distributor T1 is set at the predetermined position P0 similarly to the case of Fig. 11, in the virtual space in Fig. 12.

Also, the position of the company group G2 is set at a front position at the shortest distance from the distribution position P(T1) of the distributor T1.

In other words, the position of the company group G2 when the vector BP(G2, T1) from the distribution position P(T1) of the distributor T1 toward the position of the company group G2 is the vector with the minimum size is detected as the optimal viewing position in a case in which the position of the company group G2 is changed within a range of positions that can be set. Then, the position of the company group G2 is set at the detected optimal viewing position.

In the example of Fig. 12, the viewing position P(G2-U1) of the viewer G2-U1 is set as the position of the company group G2, and the viewing position P(G2-U1) of the viewer G2-U1 is set at the viewing available position DP(m, n).

Also, the viewing positions of the viewers G2-U2 to G2-U6 who are members of the company group G2 to which the viewer G2-U1 belongs are set near the viewing position P(G2-U1) of the viewer G2-U1. The viewing positions of the viewers G2-U1 to G2-U6 are the viewing available positions DP(m, n), DP(m, n + 1), DP(m,n - 1), DP(m + 1, n), DP(m + 1, n + 1), and DP(m + 1, n - 1), respectively (see Fig. 4).

Note that the viewing positions of the viewers other than the members of the company group G2 are set by an arbitrary method.

Since the processing for setting the venue layout in Fig. 12 is the same as that in the case of Fig. 11, description thereof will be omitted.

According to the third setting form of venue layout as described above, each viewer can view the content distributed by the distributor at the viewing position that is optimal in units of company groups even in a cse in which multiple viewers view the content distributed by the distributor at the same time in the same space.

Also, in a case in which a group such as a company group is set, the viewers as companies are arranged near the experiencing person. Therefore, the experiencing person can easily know states of the companies with a sense of actually meeting them during participation in the event. Additionally, in a case in which it is possible to perform voice chatting or text chatting in the company group, or in a case in which the viewers or the group chatting together is defined as a company group, it is possible to easily perform chatting even during participation in the event.

Also, the layout of the viewing positions from among the members (among members) of the company group is the same regardless of which of the viewers belonging to the company group the experiencing person is. Therefore, a matter in which both viewers belonging to the same company group recognize that their counterparts are present on their right side, for example, does not occur, for example. For example, a situation in which they face mutually opposite sides when they want to face each other for chatting or the like does not occur.

### <Fourth Setting Form of Venue Layout>

### (Example 1)

Fig. 13 is a diagram for explaining an example 1 of a fourth setting form of venue layout. Note that Fig. 13 represents the virtual space that constitutes the same event venue as that in Fig. 4, and the height direction corresponds to the direction that is vertical to the paper surface. The distribution position P(T1) of the distributor T1 and the viewing available positions DP in the virtual space in Fig. 13 are the same as those in Fig. 4, and some of the viewing available positions DP are illustrated with the reference sign.

The fourth setting form of venue layout is a modification example of the third setting form in Figs. 11 and 12 and is an example case in which the distribution position of the distributor is changed.

Fig. 13 illustrates a case in which venue layout for the viewer G2-U2 who belongs to the company group G2 is set and illustrates a case in which the viewer G2-U2 is defined as the experiencing person V.

Also, it is assumed that the viewer G2-U2 belonging to the company group G2 has been designated by the company group designation unit 104 (see Fig. 2) of the client system 22 that the viewer G2-U2 himself/herself uses. In addition, it is assumed that viewers G2-U1 to G2-U6 belong to the company group G2.

Also, it is assumed that the viewer G2-U2 has designated, as the optimal viewing position, the viewing position when the distance between the viewing position of the viewer (experiencing person) and the distribution position of the distributor is the shortest distance, using the best viewing position designation unit 103 (see Fig. 2) of the client system 22 that the viewer G2-U2 himself/herself uses.

Also, it is assumed that a representative has been determined in the company group G2, and the representative has designated, as the optimal viewing position, the viewing position at which the distance between the position of the company group G2 and the distribution position of the distributor is the shortest distance, using the best viewing position designation unit 103 (see Fig. 2) of the client system 22 that the representative himself/herself uses.

According to the fourth setting form of venue layout, the position of the company group G2 in the virtual space of Fig. 13 is set at the front position at the shortest distance from the predetermined fixed position P0 where the distribution position P(T1) of the distributor T1 is originally to be set, completely similarly to Fig. 12.

In other words, the position of the company group G2 when the vector from the position P0 toward the position of the company group G2 is a vector with the minimum size is detected as the optimal viewing position in a case in which the position of the company group G2 is changed within a range of positions that can be set. Then, the position of the company group G2 is set at the detected optimal viewing position.

In the example of Fig. 13, the viewing position P(G2-U1) of the viewer G2-U1 is set as the position of the company group G2, and the viewing position P(G2-U1) of the viewer G2-U1 is set at the viewing available position DP(m, n), similarly to Fig. 12.

Also, the viewing positions of the viewers G2-U2 to G2-U6 who are members of the company group G2 to which the viewer G2-U1 belongs are set near the viewing position P(G2-U1) of the viewer G2-U1. The viewing positions of the viewers G2-U1 to G2-U6 are the viewing available positions DP(m, n), DP(m, n + 1), DP(m, n - 1), DP(m + 1, n), DP(m + 1, n + 1), and DP(m + 1, n - 1), respectively (see Fig. 4).

Note that the viewing positions of the viewers other than the members of the company group G2 are set by an arbitrary method.

On the other hand, the distribution position P(T1) of the distributor T1 is set at a position P1 that is different from the position P0 in the case of Fig. 12. The position P1 is a front position at the shortest distance from the viewing available position DP(m, n + 1) that is the viewing position P(G2-U2) of the viewer G2-U2 who is the experiencing person V.

In other words, the distribution position P(T1) is set at the position P1 that is the distribution position P(T1) when the vector BP(G2-U2, T1) from the distribution position P(T1) of the distributor T1 toward the viewing position P(G2-U2) of the viewer G2-U2 is the vector BP0 with the minimum size in a case in which the distribution position P(T1) of the distributor T1 is changed within a range of positions that can be set.

### (Processing in Example 1 of Fourth Setting Form)

The venue layout setting unit 84 of the distribution server 41 in Fig. 2 acquires company group information of the viewer G2-U2 from the user information acquisition unit 83 when the venue layout for the viewer G2-U2 who is the experiencing person V is set. The company group information of the viewer G2-U2 is information regarding the company group designated by the company group designation unit 104 (see Fig. 2) of the client system 22 that the viewer G2-U2 uses. The venue layout setting unit 84 detects the company group G2 to which the viewer G2-U2 who is the experiencing person V belongs and the viewers G2-U1 to G2-U6 who are the members thereof using the acquired company group information of the viewers G2-U2.

Also, the venue layout setting unit 84 acquires the best viewing position information of the company group G2 to which the experiencing person V belongs from the user information acquisition unit 83. The best viewing position information of the company group G2 is information regarding the optimal viewing position of the company group G2, is designated by the best viewing position designation unit 103 of the client system 22 that the representative of the company group G2 uses, and is acquired by the user information acquisition unit 83. It is assumed that the representative of the company group G2 is determined in advance.

In the example of Fig. 13, the layout of each the viewing positions of the viewers G2-U1 to G2-U6 who are members of the company group G2 from among the members of the company group G2 is determined in advance similarly to the case of Fig. 12. Also, the viewing position P(G2-U1) of the viewer G2-U1 arranged at the center on the most front side in the layout of the viewing positions from among the members of the company group G2 is set as the position of the company group G2.

Also, it is assumed that the representative of the company group G2 has designated the optimal viewing position for the position of the company group G2 in advance by the best viewing position designation unit 103 of the client system 22 that the representative himself/herself uses.

In the example of Fig. 13, it is assumed that the representative of the company group G2 has designated the optimal viewing position of the viewing position P(G2-U1) of the viewer G2-U1 that is the position of the company group G2. Hereinafter, it is assumed that the representative of the company group G2 has designated the viewing position when the distance between the viewing position P(G2-U1) of the viewer G2-U1 and the distribution position P(T1) of the distributor T1 is the shortest distance as the optimal viewing position of the viewing position P(G2-U1) of the viewer G2-U1 that is the position of the company group G2.

The venue layout setting unit 84 temporarily sets the distribution position P(T1) of the distributor T1 at the position P0 corresponding to the center of the stage similarly to the case of Fig. 12, for example. Note that the position P0 at which the distribution position P(T1) of the distributor T1 is temporarily set may not be the position P0 similarly to the distribution position P(T1) of the distributor T1 in the first setting form.

Also, the venue layout setting unit 84 sets, as the optimal viewing position, the viewing position P(G2-U1) of the viewer G2-U1 that is the position of the company group G2 at the viewing available position DP(m, n) at which the distance from the distribution position P(T1) of the distributor T1 is the shortest distance from among the viewing available positions DP.

In other words, the venue layout setting unit 84 detects, as the optimal viewing position, the viewing position P(G2-U1) when the vector from the distribution position P(T1) (temporarily set position P0) toward the viewing position P(G2-U1) best matches the positional relationship designated by the best viewing position designation unit 103 (best viewing position information) in a case in which the viewing position P(G2-U1) of the viewer G2-U1 that is the position of the company group G2 is changed to each position from among the viewing available positions DP. Then, the venue layout setting unit 84 sets the viewing position P(G2-U1) of the viewer G2-U1 at the detected optimal viewing position.

Also the venue layout setting unit 84 sets the viewing positions of the members other than the viewer G2-U1 in the company group G2 in accordance with the layout of the viewing positions from among the members of the company group G2 such that the viewing position of the viewer G2-U1 that is the position of the company group G2 is the viewing available position DP(m, n).

In this manner, the viewing positions of the viewers G2-U1 to G2-U6 who belong to the company group G1 are set to the viewing available positions DP(m, n), DP(m, n + 1), DP(m,n - 1), DP(m + 1, n), DP(m + 1, n + 1), and DP(m + 1, n - 1) (see Fig. 4), respectively, as illustrated in Fig. 13.

Note that the viewing positions of the viewers other than the members of the company group G2 are set by an arbitrary method.

In this stage, the layout of the distribution position P(T1) of the distributor T1 and the viewing positions of the viewers G2-U1 to G2-U6 who are members of the company group G2 is the same as that in the case of Fig. 12.

In the fourth setting form of venue layout, the venue layout setting unit 84 further sets the distribution position P(T1) at the position at which the distance between the distribution position P(T1) of the distributor T1 and the viewing position P(G2-U2) of the viewer G2-U2 who is the experiencing person V is the shortest from among the positions that can be set as the distribution position P(T1) of the distributor T1.

In other words, the venue layout setting unit 84 detects, as the optimal viewing position (the distribution position P(T1) with the viewing position P(G2-U2) defined as an optimal viewing position; hereinafter, referred to as an optimal position), the distribution position P(T1) when the vector BP(G1-U2, T1) from the distribution position P(T1) toward the viewing position P(G2-U2) is the vector BP0 with the minimum size in a case in which the distribution position P(T1) of the distributor T1 is changed within a range of positions that can be set. Note that the position P1 is detected as the optimal position in the example of Fig. 13.

Then, the venue layout setting unit 84 sets the distribution position P(T1) of the distributor T1 at the detected optimal position P1.

According to the fourth setting form of venue layout as described above, each viewer can view the content distributed by the distributor at the optimal viewing position even in a case in which multiple viewers view the content distributed by the distributor at the same time in the same space.

Also, in a case in which a group such as a company group is set, the viewers as companies are arranged near the experiencing person. Therefore, the experiencing person can easily know states of the companies with a sense of actually meeting them during participation in the event. Additionally, in a case in which it is possible to perform voice chatting or text chatting in the company group, or in a case in which the viewers or the group chatting together is defined as a company group, it is possible to easily perform chatting even during participation in the event.

Also, the layout of the viewing positions from among the members (among members) of the company group is the same regardless of which of the viewers belonging to the company group the experiencing person is. Therefore, a matter in which both viewers belonging to the same company group recognize that their counterparts are present on their right side, for example, does not occur, for example. For example, a situation in which they face mutually opposite sides when they want to face each other for chatting or the like does not occur.

Also, since the distribution position of the distributor is not greatly changed, it is possible to curb inconsistency with the background (such as a stage) of the distributor.

### <Configuration of Venue Layout in Fifth to Ninth Setting Forms>

Fig. 14 is a diagram for explaining a configuration of venue layout used in fifth to ninth setting forms of venue layout described in Figs. 15 to 25. Note that Fig. 14 represents a virtual space constituting an event venue and the height direction corresponds to the direction that is vertical to the paper surface.

In the fifth setting form to the ninth setting form of venue layout, the viewing position is set at a different position for each viewer defined as an experiencing person.

In the virtual space in Fig. 14, the viewing available positions DP(m, n), DP(m, n + 1), DP(m,n - 1), DP(m + 1, n), ..., and the viewing available positions DP(m, n + r), DP(m, n + r + 1), DP(m, n + r - 1), DP(m + 1, n + r), ... represent the positions that can be set as the viewing positions of the viewers (hereinafter, all the viewing available positions will be referred to as DP).

The viewers U1 and U2 are viewers to be focused as experiencing persons in the following explanation. In a case in which the viewer U1 is defined as an experiencing person, the viewing position P(U1) of the viewer U1 is set at the viewing available position DP(m, n). In a case in which the viewer U2 is defined as an experiencing person, the viewing position P(U2) of the viewer U2 is set at the viewing available position DP(m, n + r).

Also, the viewing position when each viewer is an experiencing person is determined in advance such that it is not set at the same viewing available position DP similarly to the case in the real world. Therefore, it is only the viewer U1 that the viewing position thereof when it is an experiencing person is set at the viewing available position DP(m, n), and it is only the viewer U2 that the viewing position thereof when it is an experiencing person is set at the viewing available position DP(m, n + r). Note that the viewing position when it is an experiencing person is a position at which the viewer who is an experiencing person performs viewing in the virtual space.

Also, the distribution position P(T1) of the distributor T1 is indicated at the position P0 when it is set at the center of the stage of the event venue, for example. However, the distribution position P(T1) of the distributor T1 is appropriately changed in accordance with the viewing position of the viewer who is the experiencing person.

### <Fifth Setting Form of Venue Layout>

### (Example 1)

Fig. 15 is a diagram for explaining an example 1 of the fifth setting form of venue layout. Note that Fig. 15 represents the virtual space constituting the event venue in Fig. 14, and the height direction corresponds to the direction that is vertical to the paper surface. The viewing available positions DP in the virtual space in Fig. 15 are the same as those in Fig. 14, and only some of the viewing available positions DP is illustrated with the reference sign.

Fig. 15 illustrates a case in which venue layout for the viewer U1 in Fig. 14 is set and illustrates a case in which the viewer U1 is defined as the experiencing person V.

In addition, it is assumed that the viewer U1 has designated, as the optimal viewing position, the viewing position when the distance between the viewing position of the viewer and the distribution position of the distributor is the shortest distance, by the best viewing position designation unit 103 (see Fig. 2) of the client system 22 that the viewer U1 himself/herself uses.

In the fifth setting form of venue layout, the viewing position P(U1) of the viewer U1 who is the experiencing person V is set at the viewing available position DP(m, n) determined in advance in the virtual space in Fig. 15.

Also, the distribution position P(T1) of the distributor T1 is set at a front position P2 at the shortest distance from the viewing position P(U1) (= DP(m, n)) of the viewer U1 who is the experiencing person V from among the positions that can be set.

In other words, the distribution position P(T1) is set, as the optimal viewing position (optimal position), at the position P2 that is the distribution position P(T1) when the vector BP(U1, T1) from the distribution position P(T1) of the distributor T1 toward the viewing position P(U1) of the viewer U1 is the vector BP0 with the minimum size in a case in which the distribution position P(T1) of the distributor T1 is changed within a range of positions that can be set. The optimal viewing position (optimal position) described here means the distribution position P(T1) of the distributor T1 when the viewing position P(U1) of the viewer U1 who is the experiencing person V is the optimal viewing position (viewing environment).

### (Processing in Example 1 of Fifth Setting Form)

The venue layout setting unit 84 of the distribution server 41 in Fig. 2 acquires best viewing position information of the viewer U1 who is the experiencing person V from the user information acquisition unit 83. The best viewing position information of the viewer U1 is information regarding the optimal viewing position designated by the best viewing position designation unit 103 of the client system 22 used by the viewer U1. Then, the venue layout setting unit 84 sets the distribution position P(T1) of the distributor T1 and the viewing position P(U1) of the viewer U1 who is the experiencing person V such that the condition designated by the best viewing position information of the viewer U1 is met.

Thus, the venue layout setting unit 84 sets the viewing position P(U1) of the viewer U1 who is the experiencing person V at the viewing available position DP(m, n) determined in advance. For example, the venue layout setting unit 84 may allow the viewers who participate in the event to select, as viewing positions when they are experiencing persons V, any positions that have not been selected by the other viewers from among the viewing available positions DP in the order in which the viewers log in the distribution server 41 or apply for the participation in the event.

Also, the venue layout setting unit 84 may automatically allocate any one of the viewing available positions DP to each of the viewers who participate in the event such that it does not overlap the viewing positions of the other viewers.

Also, the venue layout setting unit 84 sets the distribution position P(T1) of the distributor T1 at the position at which the distance from the viewing available position DP(m, n) where the viewing position P(U1) of the viewer U1 who is the experiencing person V is set is the shortest distance, from among the positions that can be set as the distribution position P(T1) of the distributor T1.

In other words, the venue layout setting unit 84 detects, as the optimal position, the distribution position P(T1) when the vector BP(U1, T1) from the distribution position P(T1) toward the viewing position P(U1) of the viewer U1 is the vector BP0 with the minimum size in a case in which the distribution position P(T1) of the distributor T1 is changed within a range of positions that can be set. Then, the venue layout setting unit 84 sets the distribution position P(T1) of the distributor T1 at the detected optimal position.

In the fifth setting form, a case in which the best viewing position designation unit 103 (see Fig. 2) has designated, as the optimal viewing position, the viewing position when the distance between the viewing position of the viewer (experiencing person) and the distribution position of the distributor is the shortest distance (a case in which (the condition of) the relative positional relationship between the viewing position and the distribution position is designated to have the shortest distance) is assumed. The present invention is not limited to this case, and the venue layout setting unit 84 performs the processing as follows under an arbitrary condition (positional relationship) designated by the best viewing position designation unit 103. The venue layout setting unit 84 detects, as the optimal position, the distribution position P(T1) when the vector BP(U1, T1) from the distribution position P(T1) toward the viewing position P(U1) best matches the positional relationship (condition) designated by the best viewing position designation unit 103 (best viewing position information) in a case in which the distribution position P(T1) is changed within a range of positions that can be set. Then, the venue layout setting unit 84 sets the distribution position P(T1) of the distributor T1 at the detected optimal position. In the sixth to eighth setting forms, the optimal position that matches an arbitrary condition designated by the best viewing position designation unit 103 (best viewing position information) is also detected in a similar manner.

Note that the viewing positions of the viewers other than the viewer U1 who is an experiencing person V are set by an arbitrary method. For example, the viewing positions of the viewers other than the viewer U1 who is an experiencing person V may be set at the viewing available positions DP allocated in advance to the viewers at the viewing positions thereof when they are experiencing persons.

### (Example 2)

Fig. 16 is a diagram for explaining an example 2 of the fifth setting form of venue layout. Note that Fig. 16 represents the virtual space constituting the event venue in Fig. 14, and the height direction corresponds to the direction that is vertical to the paper surface. The viewing available positions DP in the virtual space in Fig. 16 are the same as those in Fig. 14, and only some of the viewing available positions DP is illustrated with the reference sign.

Fig. 16 illustrates a case in which venue layout for the viewer U2 in Fig. 14 is set and illustrates a case in which the viewer U2 is defined as the experiencing person V.

In addition, it is assumed that the viewer U1 has designated, as the optimal viewing position, the viewing position when the distance between the viewing position of the viewer and the distribution position of the distributor is the shortest distance, by the best viewing position designation unit 103 (see Fig. 2) of the client system 22 that the viewer U1 himself/herself uses.

In the sixth setting form of venue layout, the viewing position P(U2) of the viewer U2 who is the experiencing person V is set at the viewing available position DP(m, n + r) determined in advance in the virtual space in Fig. 16.

Also, the distribution position P(T1) of the distributor T1 is set at a front position P3 at the shortest distance from the viewing position P(U1) (= DP(m, n + r)) of the viewer U2 who is the experiencing person V from among the positions that can be set.

In other words, the distribution position P(T1) is set, as the optimal position, at the position P3 that is the distribution position P(T1) when the vector BP(U2, T1) from the distribution position P(T1) of the distributor T1 toward the viewing position P(U2) of the viewer U2 is the vector BP0 with the minimum size in a case in which the distribution position P(T1) of the distributor T1 is changed within a range of positions that can be set.

Note that since the processing of setting the venue layout in Fig. 16 is similar to that in Fig. 15, description thereof will be omitted.

According to the fifth setting form of venue layout described above, each viewer can view the content distributed by the distributor T1 at each optimal viewing position even in a case in which multiple viewers view the content distributed by the distributor T1 at the same time in the same space.

### <Sixth Setting Form of Venue Layout>

### (Example 1)

Fig. 17 is a diagram for explaining an example 1 of the sixth setting form of venue layout. Note that Fig. 17 represents the virtual space constituting the event venue in Fig. 14, and the height direction corresponds to the direction that is vertical to the paper surface. The viewing available positions DP in the virtual space in Fig. 17 are the same as those in Fig. 14, and only some of the viewing available positions DP is illustrated with the reference sign.

Fig. 17 illustrates a case in which venue layout for the viewer G1-U1 is set in a case in which the viewer U1 in Fig. 14 is the viewer G1-U1 in the company group G1 and illustrates a case in which the viewer G1-U1 is defined as the experiencing person V.

Also, it is assumed that the viewer G1-U1 belonging to the company group G1 has been designated by the company group designation unit 104 (see Fig. 2) of the client system 22 that the viewer G1-U1 himself/herself uses. In addition, it is assumed that viewers G1-U1 to G1-U6 belong to the company group G1.

In addition, it is assumed that the viewer G1-U1 has designated, as the optimal viewing position, the viewing position when the distance between the viewing position of the viewer and the distribution position of the distributor is the shortest distance, by the best viewing position designation unit 103 (see Fig. 2) of the client system 22 that the viewer G1-U1 himself/herself uses.

In the sixth setting form of venue layout, the viewing position P(G1-U1) of the viewer G1-U1 (the viewer U1 in Fig. 14) who is the experiencing person V is set at the viewing available position DP(m, n) determined in advance in the virtual space in Fig. 17.

Also, the distribution position P(T1) of the distributor T1 is set at a front position P2 at the shortest distance from the viewing position P(G1-U1) (= DP(m, n)) of the viewer G1-U1 who is the experiencing person V from among the positions that can be set.

In other words, the distribution position P(T1) is set at the position P2 that is the distribution position P(T1) when the vector BP(G1-U1, T1) from the distribution position P(T1) of the distributor T1 toward the viewing position P(G1-U1) of the viewer G1-U1 is the vector BP0 with the minimum size in a case in which the distribution position P(T1) of the distributor T1 is changed within a range of positions that can be set.

Also, the viewing positions of the viewers G1-U2 to G1-U6 who are members of the company group G1 to which the viewer G1-U1 belongs are set near the viewing position P(G1-U1) of the viewer G1-U1. The viewing positions of the viewers G1-U1 to G1-U6 are the viewing available positions DP(m, n), DP(m, n + 1), DP(m,n - 1), DP(m + 1, n), DP(m + 1, n + 1), and DP(m + 1, n - 1), respectively (see Fig. 14).

### (Processing in Example 1 of Sixth Setting Form)

The venue layout setting unit 84 of the distribution server 41 in Fig. 2 acquires best viewing position information of the viewer G1-U1 who is the experiencing person V from the user information acquisition unit 83. The best viewing position information of the viewer G1-U1 is information regarding the optimal viewing position designated by the best viewing position designation unit 103 of the client system 22 used by the viewer G1-U1. Then, the venue layout setting unit 84 sets the distribution position P(T1) of the distributor T1 and the viewing position P(G1-U1) of the viewer G1-U1 who is the experiencing person V such that the condition designated by the best viewing position information of the viewer G1-U1 is met.

Thus, the venue layout setting unit 84 sets the viewing position P(G1-U1) of the viewer G1-U1 who is the experiencing person V at the viewing available position DP(m, n) determined in advance.

Also, the venue layout setting unit 84 sets the distribution position P(T1) of the distributor T1 at the position at which the distance from the viewing available position DP(m, n) where the viewing position P(G1-U1) of the viewer G1-U1 who is the experiencing person V is set is the shortest distance, from among the positions that can be set as the distribution position P(T1) of the distributor T1.

In other words, the venue layout setting unit 84 detects, as the optimal position, the distribution position P(T1) when the vector BP(G1-U1, T1) from the distribution position P(T1) toward the viewing position P(G1-U1) of the viewer G1-U1 is the vector BP0 with the minimum size in a case in which the distribution position P(T1) of the distributor T1 is changed within a range of positions that can be set. Then, the venue layout setting unit 84 sets the distribution position P(T1) of the distributor T1 at the detected optimal position.

Also, the venue layout setting unit 84 acquires the company group information of the viewer G1-U1 who is the experiencing person V from the user information acquisition unit 83 (see Fig. 2). The company group information of the viewer G1-U1 is information regarding the company group designated by the company group designation unit 104 (see Fig. 2) of the client system 22 used by the viewer G1-U1. The venue layout setting unit 84 detects the company group G1 to which the viewer G1-U1 who is the experiencing person V belongs and the viewers G1-U1 to G1-U6 who are the members thereof on the basis of the acquired company group information of the viewers G1-U1.

The venue layout setting unit 84 sets the viewing positions of the detected viewers G1-U2 to G1-U6 who are members other than the viewer G1-U1 in the company group G1 in accordance with the layout of the viewing positions from among the members of the company group G1.

Note that since the condition and the like in regard to the layout of the viewing positions from among the members of the company group G1 are the same as those in the second setting form and the like of venue layout in Fig. 6, description thereof will be omitted.

In this manner, the viewing positions of the viewers G1-U1 to G1-U6 who belong to the company group G1 are set to the viewing available positions DP(m, n), DP(m, n + 1), DP(m,n - 1), DP(m + 1, n), DP(m + 1, n + 1), and DP(m + 1, n - 1) (see Fig. 14), respectively, as illustrated in Fig. 17.

Note that the viewing positions of the viewers other than the members of the company group G1 are set by an arbitrary method.

### (Example 2)

Fig. 18 is a diagram for explaining an example 2 of the sixth setting form of venue layout. Note that Fig. 18 represents the virtual space constituting the event venue in Fig. 14, and the height direction corresponds to the direction that is vertical to the paper surface. The viewing available positions DP in the virtual space in Fig. 18 are the same as those in Fig. 14, and only some of the viewing available positions DP is illustrated with the reference sign.

Fig. 18 illustrates a case in which venue layout for the viewer G1-U2 is set in a case in which the viewer U2 in Fig. 14 is the viewer G1-U2 of the company group G1 in Fig. 17 and illustrates a case in which the viewer G1-U2 is defined as the experiencing person V.

Also, it is assumed that the viewer G1-U2 belonging to the company group G1 has been designated by the company group designation unit 104 (see Fig. 2) of the client system 22 that the viewer G1-U2 himself/herself uses. In addition, it is assumed that viewers G1-U1 to G1-U6 belong to the company group G1.

In addition, it is assumed that the viewer G1-U2 has designated, as the optimal viewing position, the viewing position when the distance between the viewing position of the viewer and the distribution position of the distributor is the shortest distance, by the best viewing position designation unit 103 (see Fig. 2) of the client system 22 that the viewer G1-U2 himself/herself uses.

In the sixth setting form of venue layout, the viewing position P(G1-U2) of the viewer G1-U2 (the viewer U2 in Fig. 14) who is the experiencing person V is set at the viewing available position (m, n + 1) instead of the viewing available position DP(m, n + r) determined in advance in the virtual space in Fig. 18.

The viewing available position (m, n + 1) is the viewing position of the viewer G1-U2 in the venue layout set for the viewer G1-U1 in a case in which the viewer G1-U1 (the viewer U1 in Fig. 14) in Fig. 17 is defined as the experiencing person V.

In other words, in the sixth setting form, the viewing position of each of the viewer G1-U1 to the viewer G1-U6 who belong to the same company group G1 when each of them is the experiencing person V is set at the viewing available position DP corresponding to the layout of the viewing positions from among the members of the company group G1.

Note that since Fig. 17 is also referred to in the seventh setting form of venue layout, which will be described later, setting of the viewing position of the viewer who belong to the same company group when the viewer is the experiencing person at the viewing available position DP corresponding to the layout of the viewing positions from among the members of the company group G1 is not illustrated.

Also, the distribution position P(T1) of the distributor T1 is set at a front position P4 at the shortest distance from the viewing position P(G1-U2) (= DP(m, n + 1) of the viewer G1-U2 who is the experiencing person V from among the positions that can be set.

In other words, the distribution position P(T1) is set at the position P4 that is the distribution position P(T1) when the vector BP(G 1- U2, T1) from the distribution position P(T1) of the distributor T1 toward the viewing position P(G1-U2) of the viewer G1-U2 is the vector BP0 with the minimum size in a case in which the distribution position P(T1) of the distributor T1 is changed within a range of positions that can be set.

Also, the viewing positions of the viewers G1-U1 and G1-U3 to G1-U6 who are the members of the company group G1 to which the viewer G1-U2 belongs are set near the viewing position P(G1-U2) of the viewer G1-U2. The viewing positions of the viewers G1-U1 to G1-U6 are the viewing available positions DP(m, n), DP(m, n + 1), DP(m,n - 1), DP(m + 1, n), DP(m + 1, n + 1), and DP(m + 1, n - 1) (see Fig. 14), respectively, each of which is the same as that in Fig. 17.

### (Processing in Example 2 of Sixth Setting Form)

The venue layout setting unit 84 of the distribution server 41 in Fig. 2 acquires best viewing position information of the viewer G1-U2 who is the experiencing person V from the user information acquisition unit 83. The best viewing position information of the viewer G1-U2 is information regarding the optimal viewing position designated by the best viewing position designation unit 103 of the client system 22 used by the viewer G1-U2. Then, the venue layout setting unit 84 sets the distribution position P(T1) of the distributor T1 and the viewing position P(G1-U2) of the viewer G1-U2 who is the experiencing person V such that the condition designated by the best viewing position information of the viewer G1-U2 is met.

The venue layout setting unit 84 sets the viewing position P(G1-U2) of the viewer G1-U1 who is the experiencing person V at the viewing available position DP(m, n + 1) determined in advance. This will be described later.

Also, the venue layout setting unit 84 sets the distribution position P(T1) of the distributor T1 at the position at which the distance from the viewing available position DP(m, n + 1) where the viewing position P(G1-U2) of the viewer G1-U2 who is the experiencing person V is the shortest distance, from among the positions that can be set as the distribution position P(T1) of the distributor T1.

In other words, the venue layout setting unit 84 detects, as the optimal position, the distribution position P(T1) when the vector BP(G1-U2, T1) from the distribution position P(T1) toward the viewing position P(G1-U2) of the viewer G1-U2 is the vector BP0 with the minimum size in a case in which the distribution position P(T1) of the distributor T1 is changed within a range of positions that can be set. Then, the venue layout setting unit 84 sets the distribution position P(T1) of the distributor T1 at the detected optimal position.

Also, the venue layout setting unit 84 sets the viewing position of each viewer when the viewer is an experiencing person, for each company group before the venue layout for each viewer is set.

The venue layout setting unit 84 acquires company group information regarding the company group designated by the company group designation unit 104 (see Fig. 2) of the client system 22 that each viewer uses from the user information acquisition unit 83 and recognizes a member configuration and the like of each company group from the company group information. If the company group G1 is focused, the venue layout setting unit 84 detects the members of the company group G1 from the company group information.

The members of the company group G1 in Fig. 17 and Fig. 18 are the viewers G1-U1 to G1-U6.

The venue layout setting unit 84 sets the viewing positions of the viewers G1-U1 to G1-U6 who are members of the company group G1 when they are experiencing persons in accordance with the layout of the viewing positions determined in advance from among the members of the company group G1.

Also, the venue layout setting unit 84 sets the viewing positions of the members of the company groups other than the company group G1 when they are experiencing persons in accordance with the layout of the viewing positions determined in advance from among the members. At that time, the venue layout setting unit 84 does not set the viewing positions of the plurality of viewers (the viewing positions when they are experiencing persons) in an overlapping manner at one setting available position.

Also, the venue layout setting unit 84 acquires the company group information of the viewer G1-U2 from the user information acquisition unit 83 (see Fig. 2) when the venue layout of the viewer G1-U2 who is the experiencing person V is set. The company group information of the viewer G1-U2 is information regarding the company group designated by the company group designation unit 104 (see Fig. 2) of the client system 22 used by the viewer G1-U2. The venue layout setting unit 84 detects the company group G1 to which the viewer G1-U2 who is the experiencing person V belongs and the viewers G1-U1 to G1-U6 who are the members thereof using the acquired company group information of the viewers G1-U2.

The venue layout setting unit 84 sets the viewing positions of the viewers G1-U1 and G1-U3 to G1-U6 who are the detected members other than the viewer G1-U2 in the company group G1 in accordance with the layout of the viewing positions from among the members of the company group G1. However, since the venue layout setting unit 84 sets the viewing positions of the viewers G1-U1 and G1-U3 to G1-U6 as the viewing positions when they are experiencing persons in accordance with the layout of the viewing positions from among the members of the company group G1, the viewing positions of the viewers G1-U1 and G1-U3 to G1-U6 when they are experiencing persons may be applied directly to the setting of the venue layout.

In this manner, the viewing positions of the viewers G1-U1 to G1-U6 who belong to the company group G1 are set to the viewing available positions DP(m, n), DP(m, n + 1), DP(m,n - 1), DP(m + 1, n), DP(m + 1, n + 1), and DP(m + 1, n - 1) (see Fig. 14), respectively, as in Fig. 18, and are set to the positions that are close to each other.

### (Example 3)

Fig. 19 is a diagram for explaining an example 3 of the sixth setting form of venue layout. Note that Fig. 19 represents the virtual space constituting the event venue in Fig. 14, and the height direction corresponds to the direction that is vertical to the paper surface. The viewing available positions DP in the virtual space in Fig. 19 are the same as those in Fig. 14, and only some of the viewing available positions DP is illustrated with the reference sign.

Fig. 19 illustrates a case in which venue layout for the viewer G2-U1 is set when the viewer U2 in Fig. 14 is the viewer G2-U1 of the company group G2 that is different from the company group G1 in Fig. 17 and illustrates a case in which the viewer G2-U1 is defined as the experiencing person V1.

Also, it is assumed that the viewer G2-U1 belonging to the company group G2 has been designated by the company group designation unit 104 (see Fig. 2) of the client system 22 that the viewer G2-U1 himself/herself uses. In addition, it is assumed that viewers G2-U1 to G2-U6 belong to the company group G2.

In addition, it is assumed that the viewer G2-U1 has designated, as the optimal viewing position, the viewing position when the distance between the viewing position of the viewer and the distribution position of the distributor is the shortest distance, by the best viewing position designation unit 103 (see Fig. 2) of the client system 22 that the viewer G2-U1 himself/herself uses.

In the sixth setting form of venue layout, the viewing position P(G2-U1) of the viewer G2-U1 (the viewer U2 in Fig. 14) who is the experiencing person V is set at the viewing available position DP(m, n + r) determined in advance in the virtual space in Fig. 19.

Also, the distribution position P(T1) of the distributor T1 is set at a front position P3 at the shortest distance from the viewing position P(G2-U1) (= DP(m, n + r)) of the viewer G2-U1 who is the experiencing person V from among the positions that can be set.

In other words, the distribution position P(T1) is set at the position P3 that is the distribution position P(T1) when the vector BP(G2-U1, T1) from the distribution position P(T1) of the distributor T1 toward the viewing position P(G2-U1) of the viewer G2-U1 is the vector BP0 with the minimum size in a case in which the distribution position P(T1) of the distributor T1 is changed within a range of positions that can be set.

Also, the viewing positions of the viewers G2-U2 to G1-U6 who are members of the company group G2 to which the viewer G2-U1 belongs are set near the viewing position P(G2-U1) of the viewer G2-U1. The viewing positions of the viewers G2-U1 to G2-U6 are viewing available positions DP(m, n + r), DP(m, n + r + 1), DP(m, n +r - 1), DP(m + 1, n + r), DP(m + 1, n + r + 1), and DP(m + 1, n + r - 1) (see Fig. 14), respectively.

Here, the viewing positions of the viewers G2-U1 to G2-U6 who are members of the company group G2 when they are experiencing persons are set in accordance with the layout of the viewing positions from among the members of the company group G2 similarly to the company group G1 in Fig. 18.

Therefore, the venue layout setting unit 84 of the distribution server 41 in Fig. 2 can obtain the layout in Fig. 19 by applying the viewing positions of the viewers G2-U1 to G2-U6 when they are experiencing persons directly to the setting of venue layout for the viewer G2-U1.

Note that since the setting processing of venue layout in Fig. 19 is similar to that in Figs. 17 and 18, description thereof will be omitted.

### (Example 4)

Fig. 20 is a diagram for explaining an example 4 of the sixth setting form of venue layout. Note that Fig. 20 represents the virtual space constituting the event venue in Fig. 14, and the height direction corresponds to the direction that is vertical to the paper surface. The viewing available positions DP in the virtual space in Fig. 19 are the same as those in Fig. 14, and only some of the viewing available positions DP is illustrated with the reference sign.

Fig. 20 illustrates a case in which venue layout for the viewer G2-U2 is set when the viewer U2 in Fig. 14 is the viewer G2-U2 of the company group G2 that is different from the company group G1 in Fig. 17 and illustrates a case in which the viewer G2-U2 is defined as the experiencing person V1.

Also, it is assumed that the viewer G2-U2 belonging to the company group G2 has been designated by the company group designation unit 104 (see Fig. 2) of the client system 22 that the viewer G2-U2 himself/herself uses. In addition, it is assumed that viewers G2-U1 to G2-U6 belong to the company group G2.

In addition, it is assumed that the viewer G2-U2 has designated, as the optimal viewing position, the viewing position when the distance between the viewing position of the viewer and the distribution position of the distributor is the shortest distance, by the best viewing position designation unit 103 (see Fig. 2) of the client system 22 that the viewer G2-U2 himself/herself uses.

In the sixth setting form of venue layout, the viewing position P(G2-U2) of the viewer G2-U2 (the viewer U2 in Fig. 14) who is the experiencing person V is set at the viewing available position DP(m, n + r) determined in advance in the virtual space in Fig. 20.

Also, the distribution position P(T1) of the distributor T1 is set at a front position P3 at the shortest distance from the viewing position P(G2-U2) (= DP(m, n + r)) of the viewer G2-U2 who is the experiencing person V from among the positions that can be set.

In other words, the distribution position P(T1) is set at the position P3 that is the distribution position P(T1) when the vector BP(G2-U2, T1) from the distribution position P(T1) of the distributor T1 toward the viewing position P(G2-U2) of the viewer G2-U2 is the vector BP0 with the minimum size in a case in which the distribution position P(T1) of the distributor T1 is changed within a range of positions that can be set.

Also, the viewing positions of the viewer G2-U1 and G2-U3 to G1-U6 who are members of the company group G2 to which the viewer G2-U2 belongs are set near the viewing position P(G2-U2) of the viewer G2-U2. The viewing positions of the viewers G2-U1 to G2-U6 are the viewing available positions DP(m, n +r - 1), DP(m, n + r), DP(m, n + r - 2), DP(m + 1, n + r - 1), DP(m + 1, n + r), and DP(m + 1, n + r - 2) (see Fig. 14), respectively.

Here, the viewer G2-U2 is located next to the viewer G2-U1 on its right side in the layout of the viewing positions from among the members of the company group G2. The viewing position of the viewer U2 in Fig. 14 who is an experiencing person V does not change between a case in which the viewer U2 is the viewer G2-U1 in Fig. 19 and a case in which the viewer U2 is the viewer G2-U2 in Fig. 20. Therefore, in comparison between Fig. 19 and Fig. 20, the viewing positions of the viewers G2-U1 to G2-U6 who are members of the company group G2 are displaced to the left side by the amount corresponding to one line in Fig. 20.

Note that since the processing of setting the venue layout in Fig. 20 is similar to that Figs. 17 to 19, description thereof will be omitted.

According to the sixth setting form of venue layout described above, each viewer can view the content distributed by the distributor at each optimal viewing position even in a case in which multiple viewers view the content distributed by the distributor at the same time in the same space.

Also, in a case in which a group such as a company group is set, the viewers as companies are arranged near the experiencing person. Therefore, the experiencing person can easily know states of the companies with a sense of actually meeting them during participation in the event. Additionally, in a case in which it is possible to perform voice chatting or text chatting in the company group, or in a case in which the viewers or the group chatting together is defined as a company group, it is possible to easily perform chatting even during participation in the event.

Also, the layout of the viewing positions from among the members (among members) of the company group is the same regardless of which of the viewers belonging to the company group the experiencing person is. Therefore, a matter in which both viewers belonging to the same company group recognize that their counterparts are present on their right side, for example, does not occur, for example. For example, a situation in which they face mutually opposite sides when they want to face each other for chatting or the like does not occur.

### <Seventh Setting Form of Venue Layout>

### (Example 1)

Fig. 21 is a diagram for explaining an example 1 of the seventh setting form of venue layout. Note that Fig. 21 represents the virtual space constituting the event venue in Fig. 14, and the height direction corresponds to the direction that is vertical to the paper surface. The viewing available positions DP in the virtual space in Fig. 21 are the same as those in Fig. 14, and only some of the viewing available positions DP is illustrated with the reference sign.

Fig. 21 illustrates a case in which venue layout for the viewer G1-U2 is set in a case in which the viewer U2 in Fig. 14 is the viewer G1-U2 of the company group G1 in Fig. 17 and illustrates a case in which the viewer G1-U2 is defined as the experiencing person V.

Also, it is assumed that the viewer G1-U2 belonging to the company group G1 has been designated by the company group designation unit 104 (see Fig. 2) of the client system 22 that the viewer G1-U2 himself/herself uses. In addition, it is assumed that viewers G1-U1 to G1-U6 belong to the company group G1.

In addition, it is assumed that the viewer G1-U2 has designated, as the optimal viewing position, the viewing position when the distance between the viewing position of the viewer and the distribution position of the distributor is the shortest distance, by the best viewing position designation unit 103 (see Fig. 2) of the client system 22 that the viewer G1-U2 himself/herself uses.

In the seventh setting form of venue layout, the viewing position P(G1-U2) of the viewer G1-U2 (the viewer U2 in Fig. 14) who is the experiencing person V is set at the viewing available position DP(m, n + r) determined in advance in the virtual space in Fig. 21.

Here, Fig. 21 means that the viewing position of the viewer G1-U2 when the viewer G1-U2 is the experiencing person is not set near the viewer G1-U1 (the viewer U1 in Fig. 14) in Fig. 17 who is the member of the same company group G1, unlike the case of Fig. 18.

Also, the distribution position P(T1) of the distributor T1 is set at a front position P3 at the shortest distance from the viewing position P(G1-U2) (= DP(m, n + r)) of the viewer G1-U2 who is the experiencing person V from among the positions that can be set.

In other words, the distribution position P(T1) is set at the position P3 that is the distribution position P(T1) when the vector BP(G1-U2, T1) from the distribution position P(T1) of the distributor T1 toward the viewing position P(G1-U2) of the viewer G1-U2 is the vector BP0 with the minimum size in a case in which the distribution position P(T1) of the distributor T1 is changed within a range of positions that can be set.

Also, the viewing positions of the viewer G1-U1 and G1-U3 to G1-U6 who are members of the company group G1 to which the viewer G1-U2 belongs are set near the viewing position P(G1-U2) of the viewer G1-U2. The viewing positions of the viewers G1-U1 to G1-U6 are the viewing available positions DP(m, n +r - 1), DP(m, n + r), DP(m, n + r - 2), DP(m + 1, n + r - 1), DP(m + 1, n + r), and DP(m + 1, n + r - 2) (see Fig. 14), respectively.

### (Processing in Example 1 of Seventh Setting Form)

The venue layout setting unit 84 of the distribution server 41 in Fig. 2 acquires best viewing position information of the viewer G1-U2 who is the experiencing person V from the user information acquisition unit 83. The best viewing position information of the viewer G1-U2 is information regarding the optimal viewing position designated by the best viewing position designation unit 103 of the client system 22 used by the viewer G1-U2. Then, the venue layout setting unit 84 sets the distribution position P(T1) of the distributor T1 and the viewing position P(G1-U2) of the viewer G1-U2 who is the experiencing person V such that the condition designated by the best viewing position information of the viewer G1-U2 is met.

Thus, the venue layout setting unit 84 sets the viewing position P(G1-U2) of the viewer G1-U2 who is the experiencing person V at the viewing available position DP(m, n + r) determined in advance.

Also, the venue layout setting unit 84 sets the distribution position P(T1) of the distributor T1 at the position at which the distance from the viewing available position DP(m, n + r) where the viewing position P(G1-U2) of the viewer G1-U2 who is the experiencing person V is set is the shortest distance, from among the positions that can be set as the distribution position P(T1) of the distributor T1.

In other words, the venue layout setting unit 84 detects, as the optimal viewing position, the distribution position P(T1) when the vector BP(G1-U2, T1) from the distribution position P(T1) toward the viewing position P(G1-U2) of the viewer G1-U2 is the vector BP0 with the minimum size in a case in which the distribution position P(T1) of the distributor T1 is changed within a range of positions that can be set. Then, the venue layout setting unit 84 sets the distribution position P(T1) of the distributor T1 at the detected optimal viewing position.

Also, the venue layout setting unit 84 acquires the company group information of the viewer G1-U2 who is the experiencing person V from the user information acquisition unit 83 (see Fig. 2). The company group information of the viewer G1-U2 is information regarding the company group designated by the company group designation unit 104 (see Fig. 2) of the client system 22 used by the viewer G1-U2. The venue layout setting unit 84 detects the company group G1 to which the viewer G1-U2 who is the experiencing person V belongs and the viewers G1-U1 to G1-U6 who are the members thereof using the acquired company group information of the viewers G1-U2.

The venue layout setting unit 84 sets the viewing positions of the detected viewers G1-U1 and G1-U3 to G1-U6 who are the members other than the viewer G1-U2 in the company group G1 in accordance with the layout of the viewing positions from among the members of the company group G1.

Note that since the condition and the like in regard to the layout of the viewing positions from among the members of the company group G1 are the same as those in the second setting form and the like of venue layout in Fig. 6, description thereof will be omitted.

In this manner, the viewing positions of the viewers G1-U1 to G1-U6 who belong to the company group G1 are set to the viewing available positions DP(m, n +r - 1), DP(m, n + r), DP(m, n + r - 2), DP(m + 1, n + r - 1), DP(m + 1, n + r), and DP(m + 1, n + r - 2), respectively as in Fig. 21.

Note that if the setting processing in the seventh setting form is applied to a case in which the viewer U1 in Fig. 14 is the viewer G1-U1 who is a member of the company group G1, venue layout that is similar to that in Fig. 17 is set. Therefore, the members of the company group are present at close locations in each virtual space even in a case in which the members of the same company group are viewing the content at the mutually separated viewing positions.

According to the seventh setting form of venue layout described above, each viewer can view the content distributed by the distributor at each optimal viewing position even in a case in which multiple viewers view the content distributed by the distributor at the same time in the same space.

Also, in a case in which a group such as a company group is set, the viewers as companies are arranged near the experiencing person. Therefore, the experiencing person can easily know states of the companies with a sense of actually meeting them during participation in the event. Additionally, in a case in which it is possible to perform voice chatting or text chatting in the company group, or in a case in which the viewers or the group chatting together is defined as a company group, it is possible to easily perform chatting even during participation in the event.

Also, the layout of the viewing positions from among the members (among members) of the company group is the same regardless of which of the viewers belonging to the company group the experiencing person is. Therefore, a matter in which both viewers belonging to the same company group recognize that their counterparts are present on their right side, for example, does not occur, for example. For example, a situation in which they face mutually opposite sides when they want to face each other for chatting or the like does not occur.

### <Eighth Setting Form of Venue Layout>

### (Example 1)

Fig. 22 is a diagram for explaining an example 1 of the eighth setting form of venue layout. Note that Fig. 22 represents the virtual space constituting the event venue in Fig. 14, and the height direction corresponds to the direction that is vertical to the paper surface. The viewing available positions DP in the virtual space in Fig. 22 are the same as those in Fig. 14, and only some of the viewing available positions DP is illustrated with the reference sign.

Fig. 22 illustrates a case in which venue layout for an arbitrary viewer from among the viewers G1-U1 to G1-U6 who belong to the company group G1 is set in a case in which the viewer U1 in Fig. 14 is the viewer G1-U1 in the company group G1 and illustrates a case in which venue layout for all the viewers from among the viewers G1-U1 to G1-U6 is the same.

Also, it is assumed that a representative has been determined in the company group G1, and the representative has designated, as the optimal viewing position, the viewing position at which the distance between the position of the company group G1 and the distribution position of the distributor is the shortest distance, using the best viewing position designation unit 103 (see Fig. 2) of the client system 22 that the representative himself/herself uses.

In the eighth setting form of venue layout, the viewing position of the viewer G1-U1 (the viewer U1 in Fig. 14) is set at the viewing available position DP(m, n) determined in advance in the virtual space in Fig. 22.

Also, the viewing positions of the viewers G1-U2 to G1-U6 who are members of the company group G1 to which the viewer G1-U1 belongs are set near the viewing position of the viewer G1-U1 in accordance with the layout of the viewing positions determined in advance from among the members of the company group G1. The viewing positions of the viewers G1-U1 to G1-U6 are the viewing available positions DP(m, n), DP(m, n + 1), DP(m,n - 1), DP(m + 1, n), DP(m + 1, n + 1), and DP(m + 1, n - 1) (see Fig. 14), respectively.

Also, in the example of Fig. 22, the viewing position P(G1-U1) of the viewer G1-U1 is set as the position of the company group G1. The distribution position P(T1) of the distributor T1 is set at the front position P2 at the shortest distance from the viewing position (G1-U1) (= DP(m, n)) of the viewer G1-U1 who is the experiencing person V from among the positions that can be set.

In other words, the distribution position P(T1) is set at the position P2 that is the distribution position P(T1) when the vector BP(G1, T1) from the distribution position P(T1) of the distributor T1 toward the position of the company group G1 (the viewing position P(G1-U1) of the viewer G1-U1) is the vector with the minimum size in a case in which the distribution position P(T1) of the distributor T1 is changed within a range of positions that can be set.

### (Processing in Example 1 of Eighth Setting Form)

The venue layout setting unit 84 of the distribution server 41 in Fig. 2 acquires the company group information of the experiencing person V from the user information acquisition unit 83 in a case in which venue layout for an arbitrary viewer (experiencing person V) who belongs to the company group G1 is set.

The company group information of the experiencing person V is information regarding the company group designated by the company group designation unit 104 (see Fig. 2) of the client system 22 that the experiencing person V uses. The venue layout setting unit 84 detects the company group G1 to which the experiencing person V belongs and the viewers G1-U1 to G1-U6 who are members thereof on the basis of the acquired company group information of the experiencing person V.

The venue layout setting unit 84 sets the viewing positions of the viewers G1-U1 to G1-U6 at the viewing available positions DP determined in advance. Since the condition and the like of the layout of the viewing positions of the viewers G1-U1 to G1-U6 are the same as those of the layout of the viewing positions from among the members of the company group G1 described in the second setting form of venue layout in Fig. 6 and the like, description thereof will be omitted.

Since the viewer G1-U1 in Fig. 22 is assumed to be the viewer U1 in Fig. 14, the viewing positions of the viewers G1-U1 to G1-U6 are set to the viewing available positions DP(m, n), DP(m, n + 1), DP(m,n - 1), DP(m + 1, n), DP(m + 1, n + 1), and DP(m + 1, n - 1) (see Fig. 14), respectively, such that the viewing position P(G1-U1) of the viewer G1-U1 is the viewing available position DP(m, n).

Also, the venue layout setting unit 84 acquires the best viewing position information of the company group G1 to which the experiencing person V belongs from the user information acquisition unit 83. The best viewing position information of the company group G1 is information regarding the optimal viewing position of the company group G1, is designated by the best viewing position designation unit 103 of the client system 22 that the representative of the company group G1 uses, and is acquired by the user information acquisition unit 83. It is assumed that the representative of the company group G1 is determined in advance.

The position of the company group G1 represents the viewing position of the viewer as a reference in the layout of the viewing positions from among the members of the company group G1 although detailed description thereof will be omitted since the positions of the company group G1 are similar to those in the third setting form of venue layout. For example, the viewing position of the viewer arranged at the center of the layout of the viewing positions from among the members of the company group G1 on the most front side is set at the position of the company group G1.

In the example of Fig. 22, the viewing position P(G1-U1) of the viewer G1-U1 (the viewer U1 in Fig. 14) arranged at the center of the viewing positions from among the members of the company group G1 on the most front side is set as the position of the company group G1. Note that the position of the company group G1 is not limited thereto and may be set to an arbitrary position.

It is assumed that the representative of the company group G1 has designated, as the optimal viewing position of the viewing position P(G1-U1) of the viewer G1-U1 that is the position of the company group G 1, the viewing position at which the distance between the viewing position P(G1-U1) of the viewer G1-U1 and the distribution position P(T1) of the distributor T1 is the shortest distance.

The venue layout setting unit 84 sets the distribution position P(T1) of the distributor T1 at the position at which the distance from the viewing available position DP(m, n) where the viewing position P(G1-U1) of the viewer G1-U1 that is the position of the company group G1 is set is the shortest distance from among the positions that can be set as the distribution position P(T1) of the distributor T1.

In other words, the venue layout setting unit 84 detects, as the optimal position, the distribution position P(T1) when the vector BP(G1-U1, T1) from the distribution position P(T1) toward the viewing position P(G1-U1) of the viewer G1-U1 is the vector BP0 with the minimum size in a case in which the distribution position P(T1) of the distributor T1 is changed within a range of positions that can be set. Then, the venue layout setting unit 84 sets the distribution position P(T1) of the distributor T1 at the detected optimal position.

In the eighth setting form of venue layout, the venue layout in Fig. 22 is set if the experiencing person V is any of the members of the company group G1. Therefore, the venue layout is common to all the viewers G1-U1 to G1-U6 who are the members of the company group G1. In other words, in the eighth setting form of venue layout, the venue layout is set in units of company groups.

### (Example 2)

Fig. 23 is a diagram for explaining an example 2 of the eighth setting form of venue layout. Note that Fig. 23 represents the virtual space constituting the event venue in Fig. 14, and the height direction corresponds to the direction that is vertical to the paper surface. The viewing available positions DP in the virtual space in Fig. 23 are the same as those in Fig. 14, and only some of the viewing available positions DP is illustrated with the reference sign.

Fig. 23 illustrates a case in which venue layout for an arbitrary viewer from among the viewers G2-U1 to G2-U6 who belong to the company group G2 is set in a case in which the viewer U2 in Fig. 14 is the viewer G2-U1 in the company group G2 and illustrates a case in which venue layout for all the viewers from among the viewers G2-U1 to G2-U6 is the same.

Also, it is assumed that a representative has been determined in the company group G2, and the representative has designated, as the optimal viewing position, the viewing position at which the distance between the position of the company group G2 and the distribution position of the distributor is the shortest distance, using the best viewing position designation unit 103 (see Fig. 2) of the client system 22 that the representative himself/herself uses.

In the eighth setting form of venue layout, the viewing position of the viewer G2-U1 (viewer U2 in Fig. 14) is set at the viewing available position DP(m, n + r) determined in advance in the virtual space in Fig. 23.

Also, the viewing positions of the viewers G2-U2 to G2-U6 who are members of the company group G2 to which the viewer G2-U1 belongs are set near the viewing position of the viewer G2-U1 in accordance with the layout of the viewing positions determined in advance from among the members of the company group G2. The viewing positions of the viewers G2-U1 to G2-U6 are the viewing available positions DP(m, n + r), DP(m, n + r + 1), DP(m, n + r -1), DP(m + 1, n + r), DP(m + 1, n + r + 1), and DP(m + 1, n +r - 1) (see Fig. 14), respectively.

Additionally, the viewing position P(G2-U1) of the viewer G2-U1 is set as the position of the company group G2 in the example in Fig. 23. The distribution position P(T1) of the distributor T1 is set at the front position P3 at the shortest distance from the viewing position (G2-U1) (= DP(m, n + r)) of the viewer G2-U1 who is the experiencing person V from among the positions that can be set.

In other words, the distribution position P(T1) is set at the position P3 where the vector BP(G2, T1) from the distribution position P(T1) of the distributor T1 toward the position of the company group G2 (the viewing position P(G2-U1) of the viewer G2-U1) is the vector with the minimum size in a case in which the distribution position P(T1) of the distributor T1 is changed within a range of positions that can be set.

Since the processing of setting venue layout in Fig. 23 is similar to that in Fig. 22, description thereof will be omitted.

According to the eighth setting form of venue layout described above, each viewer can view the content distributed by the distributor at each optimal viewing position in units of company groups even in a case in which multiple viewers view the content distributed by the distributor at the same time in the same space.

Also, in a case in which a group such as a company group is set, the viewers as companies are arranged near the experiencing person. Therefore, the experiencing person can easily know states of the companies with a sense of actually meeting them during participation in the event. Additionally, in a case in which it is possible to perform voice chatting or text chatting in the company group, or in a case in which the viewers or the group chatting together is defined as a company group, it is possible to easily perform chatting even during participation in the event.

Also, the layout of the viewing positions from among the members (among members) of the company group is the same regardless of which of the viewers belonging to the company group the experiencing person is. Therefore, a matter in which both viewers belonging to the same company group recognize that their counterparts are present on their right side, for example, does not occur, for example. For example, a situation in which they face mutually opposite sides when they want to face each other for chatting or the like does not occur.

### <Ninth Setting Form of Venue Layout>

### (Example 1)

Fig. 24 is a diagram for explaining an example 1 of the ninth setting form of venue layout. Note that Fig. 24 represents the virtual space constituting the event venue in Fig. 14, and the height direction corresponds to the direction that is vertical to the paper surface. The viewing available positions DP in the virtual space in Fig. 24 are the same as those in Fig. 14, and only some of the viewing available positions DP is illustrated with the reference sign.

Fig. 24 illustrates a case in which venue layout for the viewer G1-U1 is set in a case in which the viewer U1 in Fig. 14 is the viewer G1-U1 in the company group G1 and illustrates a case in which the viewer G1-U1 is defined as the experiencing person V.

In the ninth setting form of venue layout, the viewing position P(G1-U1) of the viewer G1-U1 (the viewer U1 in Fig. 14) who is the experiencing person V is set at the viewing available position DP(m, n) determined in advance in the virtual space in Fig. 24.

Also, the distribution position P(T1) of the distributor T1 is set at the position P0 determined in advance.

Also, the viewing positions of the viewers G1-U2 to G1-U6 who are members of the company group G1 to which the viewer G1-U1 belongs are set near the viewing position P(G1-U1) of the viewer G1-U1. The viewing positions of the viewers G1-U1 to G1-U6 are the viewing available positions DP(m, n), DP(m, n + 1), DP(m,n - 1), DP(m + 1, n), DP(m + 1, n + 1), and DP(m + 1, n - 1), respectively (see Fig. 14).

### (Processing in Example 1 of Ninth Setting Form)

The venue layout setting unit 84 of the distribution server 41 in Fig. 2 sets the viewing position P(G1-U1) of the viewer G1-U1 who is the experiencing person V at the viewing available position DP(m, n) determined in advance.

Also, the venue layout setting unit 84 acquires the company group information of the viewer G1-U1 who is the experiencing person V from the user information acquisition unit 83 (see Fig. 2). The company group information of the viewer G1-U1 is information regarding the company group designated by the company group designation unit 104 (see Fig. 2) of the client system 22 used by the viewer G1-U1. The venue layout setting unit 84 detects the company group G1 to which the viewer G1-U1 who is the experiencing person V belongs and the viewers G1-U1 to G1-U6 who are the members thereof on the basis of the acquired company group information of the viewers G1-U1. Then, the venue layout setting unit 84 sets the viewing positions of the detected viewers G1-U2 to G1-U6 who are members of the company group G1 other than the viewer G1-U1 in accordance with the layout of the viewing positions from among the members of the company group G1.

Note that since the condition and the like in regard to the layout of the viewing positions from among the members of the company group G1 are the same as those in the second setting form and the like of venue layout in Fig. 6, description thereof will be omitted.

In this manner, the viewing positions of the viewers G1-U1 to G1-U6 who belong to the company group G1 are set to the viewing available positions DP(m, n), DP(m, n + 1), DP(m, n - 1), DP(m + 1, n), DP(m + 1, n + 1), and DP(m + 1, n - 1) (see Fig. 14), respectively, as illustrated in Fig. 24.

Note that the viewing positions of the viewers other than the members of the company group G1 are set by an arbitrary method.

### (Example 2)

Fig. 25 is a diagram for explaining an example 2 of the ninth setting form of venue layout. Note that Fig. 25 represents the virtual space constituting the event venue in Fig. 14, and the height direction corresponds to the direction that is vertical to the paper surface. The viewing available positions DP in the virtual space in Fig. 25 are the same as those in Fig. 14, and only some of the viewing available positions DP is illustrated with the reference sign.

Fig. 25 illustrates a case in which venue layout for the viewer G1-U2 is set in a case in which the viewer U2 in Fig. 14 is the viewer G1-U2 of the company group G1 in Fig. 24 and illustrates a case in which the viewer G1-U2 is defined as the experiencing person V.

In the ninth setting form of venue layout, the viewing position P(G1-U2) of the viewer G1-U2 (the viewer U2 in Fig. 14) who is the experiencing person V is set at the viewing available position DP(m, n + r) determined in advance in the virtual space in Fig. 25.

Also, the distribution position P(T1) of the distributor T1 is set at the position P0 determined in advance similarly to Fig. 24.

Also, the viewing positions of the viewer G1-U1 and G1-U3 to G1-U6 who are members of the company group G1 to which the viewer G1-U2 belongs are set near the viewing position P(G1-U2) of the viewer G1-U2. The viewing positions of the viewers G1-U1 to G1-U6 are the viewing available positions DP(m, n +r - 1), DP(m, n + r), DP(m, n + r - 2), DP(m + 1, n + r - 1), DP(m + 1, n + r), and DP(m + 1, n + r - 2) (see Fig. 14), respectively.

Note that since the processing of setting venue layout in Fig. 25 is similar to that in Fig. 24, description thereof will be omitted.

According to the ninth setting form of venue layout described above, the viewers who are companies are arranged near the experiencing person in a case in which a group such as a company group is set. Therefore, the experiencing person can easily know states of the companies with a sense of actually meeting them during participation in the event. Additionally, in a case in which it is possible to perform voice chatting or text chatting in the company group, or in a case in which the viewers or the group chatting together is defined as a company group, it is possible to easily perform chatting even during participation in the event.

Also, the layout of the viewing positions from among the members (among members) of the company group is the same regardless of which of the viewers belonging to the company group the experiencing person is. Therefore, a matter in which both viewers belonging to the same company group recognize that their counterparts are present on their right side, for example, does not occur, for example. For example, a situation in which they face mutually opposite sides when they want to face each other for chatting or the like does not occur.

### «Details of Entertainment System 11»

### <Server System 21>

Fig. 26 is a block diagram illustrating, as an example, a functional configuration regarding content distribution of the server system 21 in Fig. 1.

In Fig. 26, the server system 21 includes the distribution server 41, the multi-view camera 42, and the sensor 43.

The server system 21 generates distribution data including content (a movie and audio of the distributor himself/herself) to be distributed by the distributor to multiple viewers who participate in a predetermined event and supplies the distribution data to the client systems 22 communicatively connected thereto via the network 23 (see Fig. 1).

The multi-view camera 42 images the distributor with a green screen located behind the distributor from multiple viewpoints by a plurality of video cameras, for example, and supplies the acquired multiple-point-of-view movies to the distribution server 41.

The sensor 43 is a sensor for detecting the position, the posture, and the motion of the distributor using a depth camera, a body position sensor, or a position sensor using an infrared camera and a reflection marker, for example. A sensor signal obtained by the sensor 43 is supplied to the distribution server 41.

Fig. 27 is a diagram for explaining the multi-view camera 42 and the sensor 43.

In Fig. 27, the distributor T1 distributes content such as a song or dance of the distributor T1 himself/herself to multiple viewers using a virtual system. The distributor T1 carries out the song, the dance, or the like in a green screen shooting studio or the like.

The multi-view camera 42 includes a plurality of imaging cameras Cam1, Cam2, ..., CamN (N is a positive integer). Hereinafter, each of the plurality of imaging cameras Cam1, Cam2, ..., CamN will be abbreviated as an imaging camera Cam.

Each imaging camera Cam of the multi-view camera 42 is disposed to surround the periphery of the distributor T1 and images the distributor T1 from multiple directions.

A depth camera DC images a depth image of the distributor T1.

An infrared camera IRCam irradiates a reflection marker IRM attached to the body of the distributor T1 with infrared rays and images the reflected light.

Body position sensor BPSR and BPSL are attached to the right wrist and the left wrist of the distributor T1 and detect the positions of the right wrist and the left wrist of the distributor T1, The body position sensors are also attached to parts necessary to detect the position, the posture, the motion, and the like of the distributor T1, such as a body, ankles, knees, and the like in addition to the wrists.

Fig. 28 is a diagram illustrating a state in which the distributor is imaged in a studio.

In Fig. 28, the distributor T1 carries out performance in a space covered with a green cloth or wall. A plurality of pillars 141A, 141B, ... (hereinafter, referred to as pillars 141) are provided at substantially equal intervals over the entire periphery of the surroundings of the distributor T1. One imaging camera Cam of the multi-view camera 42 is mounted on each of an upper portion and a lower portion of each pillar 141. Also, the infrared camera IRCam for imaging infrared reflection from the reflection marker IRM attached to the body of the distributor T1 and a plurality of illuminations 142 for irradiating the distributor T1 with illumination light including visible light and infrared light are mounted on each pillar 141. A tripod 143 is placed between the pillar 141 and the pillar 141 as needed, and a depth camera DC, a stereo camera, which is not illustrated, or the like is supported by the tripod 143. Body position sensors BPSR and BPSL are attached to both the wrists of the distributor T1.

Note that only any one type of the depth camera DC, the infrared camera IRCam (reflection marker IRM), and the body position sensors BPSR and BPSL included in the sensor 43 in Fig. 26 may be provided, or the sensor 43 itself may not be provided.

In Fig. 26, the distribution server 41 includes a camera movie input unit 121, a camera image data generation unit 122, a streaming processing unit 123, a sensing input unit 124, a body position information generation unit 125, a 3D model position information generation unit 126, a content data generation unit 127, and a network transfer unit 128.

The camera movie input unit 121 acquires a movie of the distributor T1 or the like imaged by each imaging camera Cam of the multi-view camera 42 and audio collected by a microphone, which is not illustrated. The camera movie input unit 121 converts the acquired video and audio into an editable signal format and supplies it to the camera image data generation unit 122.

The camera image data generation unit 122 performs necessary processing such as removal of unnecessary object images from the multiple-point-of-view movies from the camera movie input unit 121. Also, the camera image data generation unit 122 performs necessary processing such as removing of noise from the audio from the camera movie input unit 121. The camera image data generation unit 122 supplies the multiple-point-of-view movies and the audio after the processing to the streaming processing unit 123.

The streaming processing unit 123 encodes the multiple-point-of-view movies and the audio from the camera image data generation unit 122 and supplies them as movie stream data and audio stream data to the content data generation unit 127.

The sensing input unit 124 acquires a sensor signal from the sensor 43 and supplies the sensor signal to the body position information generation unit 125.

The body position information generation unit 125 analyzes the sensor signal from the sensing input unit 124 and generates so-called bone data representing the motion of the skeleton of the distributor T1. The body position information generation unit 125 supplies the generated bone data to the 3D model position information generation unit 126.

The 3D model position information generation unit 126 generates six degrees of freedom (6DoF) data (6DoF data) that is position information of each of parts, such as the head, the hands, the legs, and the like when the distributor T1 is 3D-modeled, on the basis of the bone data from the body position information generation unit 125. The 3D model position information generation unit 126 supplies the generated 6DoF data to the content data generation unit 127.

The content data generation unit 127 merges the movie stream data and the audio data stream from the streaming processing unit 123 with the 6DoF data from the 3D model position information generation unit 126 as content data (distribution data) to be distributed to the client systems 22 in Fig. 1 and supplies the content data to the network transfer unit 128.

The network transfer unit 128 controls communication with the client systems 22 via the network 23 in Fig. 1 and transfers the content data from the content data generation unit 127 to the information processing devices 61 of the client systems 22. Note that the content data to be distributed from the distribution server 41 to the information processing devices 61 also includes the aforementioned data regarding the venue layout and the like in addition to the data described here, and the data is also distributed.

### <Client System 22>

Fig. 29 is a block diagram illustrating, as an example, a functional configuration regarding content reception and the like of the client system 22 in Fig. 1.

Fig. 29 illustrates, as an example, a functional configuration in each of the information processing device 61 of the client system 22 in Fig. 1, the HMD 62, and the hand controller 63.

The information processing device 61 includes a network transfer input unit 151, a content input data analysis unit 152, a distributor movie processing unit 153, a timing synchronization unit 154, a 3D object control unit 155, an other-viewer input data analysis unit 156, a timing synchronization unit 157, a 3D object collision detection unit 158, a timing synchronization unit 159, an experiencing person output data generation unit 160, and a network transfer output unit 161.

The network transfer input unit 151 controls communication with the distribution server 41 of the server system 21 via the network 23 in Fig. 1. Also, the network transfer input unit 151 controls communication with the information processing device 61 of another client system 22 (which will be referred to as another information processing device 61). The network transfer input unit 151 supplies the content data transferred from the distribution server 41 to the content input data analysis unit 152. Also, the network transfer input unit 151 supplies the data (audio stream data and the meta data) transferred from another information processing device 61 to the other-viewer input data analysis unit 156.

The content input data analysis unit 152 analyzes the content data from the network transfer input unit 151 and separates the movie stream data distributed from the distribution server 41, the audio stream data, and the meta data. The content input data analysis unit 152 supplies the separated movie stream to the distributor movie processing unit 153. Also, the content input data analysis unit 152 supplies the separated audio stream data and the meta data to the distributor movie processing unit 153.

The distributor movie processing unit 153 decodes the movie stream data from the content input data analysis unit 152 and performs necessary movie processing, frame reduction, format conversion, and the like to generate a free viewpoint movie from multi-viewpoint movies acquired as having a free viewpoint from the multi-viewpoint movies thereon. The distributor movie processing unit 153 supplies the movie data after the processing to the timing synchronization unit 154.

The timing synchronization unit 154 synchronizes the movie data from the distributor movie processing unit 153, the audio stream data from the content input data analysis unit 152, and the distributor meta data with temporal deviation reduced. The timing synchronization unit 154 supplies the movie data and the meta data to the 3D object control unit 155.

Also, the timing synchronization unit 154 supplies the audio stream data to the headphone output unit 181 of the HMD 62. Additionally, the timing synchronization unit 154 supplies the movie data and the meta data to the 3D object control unit 155.

The 3D object control unit 155 performs control of 3D objects in the virtual space that the VR space display unit 182 of the HMD 62 is caused to display, on the basis of the movie data, the meta data, and the like from the timing synchronization unit 154.

The other-viewer input data analysis unit 156 analyzes data from another-information processing device 61 from the network transfer input unit 151 and separates it into the audio stream data and the meta data. The other-viewer input data analysis unit 156 supplies the separated audio stream data and the meta data to the timing synchronization unit 157. Note that the audio stream data from another-information processing device 61 includes audio stream data of the viewer as a counterpart with whom the experiencing person is mainly performing voice chatting. The meta data from another-information processing device 61 includes the 6DoF data of the body (the head and the hands) of another viewer and text data input by the viewer as the counterpart with whom voice chatting is being performed.

The timing synchronization unit 157 synchronizes the audio stream data and the meta data from the other-viewer input data analysis unit 156 while reducing temporal deviation therebetween. The timing synchronization unit 157 supplies the synchronized audio stream data to the headphone output unit 181 of the HMD 62 and supplies the synchronized meta data to the 3D object control unit 155.

The 3D object collision detection unit 158 causes the vibration generation unit 202 of the hand controller 63 to generate vibration in response to an instruction from the 3D object control unit 155.

The timing synchronization unit 159 synchronizes the 6DoF data (meta data) indicating the position, the posture, and the motion of the head from an HMD space information detection unit 184 (motion sensor) and the audio stream data from a microphone input unit 183 (microphone) of the HMD 62 while reducing temporal deviation therebetween. The timing synchronization unit 159 supplies the synchronized audio stream data and meta data to the experiencing person output data generation unit 160.

The experiencing person output data generation unit 160 merges the audio stream data and the meta data from the timing synchronization unit 159 to generate data for transmission and supplies the data to the network transfer output unit 161.

The network transfer output unit 161 controls communication between the distribution server 41 of the server system 21 and the information processing device 61 of another client system 22. The network transfer output unit 161 supplies the data from the experiencing person output data generation unit 160 to the distribution server 41 or another information processing device 61 via the network 23.

The HMD 62 includes the headphone output unit 181, the VR space display unit 182, the microphone input unit 183, and the HMD space information detection unit 184.

The headphone output unit 181 causes the headphone to output the audio stream data from the timing synchronization unit 154 as audio. In this manner, the audio in the content distributed from the distribution server 41 is output from the headphone of the HMD 62.

Also, the headphone output unit 181 causes the headphone to output the audio stream data supplied from the timing synchronization unit 157 as audio. In this manner, voice such as voice chatting supplied from another information processing device 61 is output from the headphone.

The microphone input unit 183 collects audio of the experiencing person who is wearing the HMD 62 and supplies it as audio stream data to the timing synchronization unit 159. In this manner, the audio of the experiencing person is supplied to the information processing device 61 of the counterpart of the voice chatting.

The HMD space information detection unit 184 detects the position, the posture, and the motion of the HMD 62 using the motion sensor, for example, and supplies the position, the posture, and the motion as 6DoF data (meta data) to the 3D object control unit 155 and the timing synchronization unit 159. The position, the posture, and the motion of the HMD 62 represent the position, the posture, and the motion of the head of the experiencing person. The 3D object control unit 155 detects a line-of-view direction (front direction) of the HMD 62 on the basis of the 6DoF data from the HMD space information detection unit 184. Also, the 6DoF data supplied from the HMD space information detection unit 184 to the timing synchronization unit 159 is supplied to another information processing device 61 and is reflected to a motion and the like of the avatar of the experiencing person viewed by the other viewers.

The hand controller 63 includes a hand space information detection unit 201 and the vibration generation unit 202.

The hand space information detection unit 201 detects the position, the posture, and the motion of the hand controller 63 using the motion sensor, for example, and supplies the position, the posture, and the motion of as 6DoF data (meta data) to the 3D object control unit 155 and the HMD space information detection unit 184. The position, the posture, and the motion of the hand controller 63 represent the position, the posture, and the motion of the hand (both hands) of the experiencing person with which the hand controller 63 is gripped. The 3D object control unit 155 detects an operation of the experiencing person on the basis of the 6DoF data from the hand space information detection unit 201 and reflects it to a motion of the avatar or the like of the experiencing person in the virtual space. Also, the 6DoF data supplied from the hand space information detection unit 201 to the HMD space information detection unit 184 is supplied to another information processing device 61 via the timing synchronization unit 159 and is reflected to a motion and the like of the avatar of the experiencing person that is viewed by another viewer.

The vibration generation unit 202 causes the hand controller 63 to vibrate in response to an instruction from the 3D object collision detection unit 158. An instruction for generating vibration is provided from the 3D object control unit 155 to the vibration generation unit 202 via the 3D object collision detection unit 158 in a case in which the experiencing person collides against some object in the virtual space or the like.

### <3D Object Control Unit 155>

The 3D object control unit 155 (display control unit) creates 3D models of various objects in the virtual space constituting the event venue and generates a movie in which the various objects in the virtual space are rendered in a predetermined line-of-view direction from a viewpoint at a predetermined position, on the basis of distribution data (content data) from the distribution server 41. The creation and the rendering of the various objects are repeatedly executed at a predetermined cycle.

The viewpoint at the time of the rendering is a viewing position at which the experiencing person who uses the HMD 62 views the content of the distributor, and the line-of-view direction at the time of the rendering is a line-of-view direction of the HMD 62. The 3D object control unit 155 supplies the movie generated through the rendering to the VR space display unit 182 of the HMD 62 and causes the VR space display unit 182 to display the movie.

The 3D object control unit 155 renders the virtual space using the direction in the virtual space corresponding to the front direction of the HMD 62 in the actual space as the line-of-view direction at the time of the rendering on the basis of the position, the posture, and the motion of the HMD 62 detected by the HMD space information detection unit 184. Also, the 3D object control unit 155 generates a movie in a field-of-view range that can be displayed on the VR space display unit 182 (hereinafter, referred to as a field-of-view range of the HMD 62) through the rendering of the virtual space.

The 3D object control unit 155 acquires object data indicating the shapes, the textures, the positions, and the like of fixed objects such as a stage in the event venue arranged in the virtual space from the meta data from the distribution server 41 and creates 3D models in the virtual space. Also, the 3D object control unit 155 maps the textures on the 3D models at the time of the rendering.

Also, the 3D object control unit 155 acquires the viewing positions of the viewers who participate in the event in the virtual space from the meta data from the distribution server 41 (data regarding venue layout) and arranges an avatar at the viewing position of each viewer. Note that since setting of the venue layout can also be performed by the 3D object control unit 155 rather than the distribution server 41 by acquiring information of the viewers who participate in the event, information regarding members in a company group, and the like, it is assumed that the 3D object control unit 155 performs the setting in the present embodiment.

The 3D object control unit 155 acquires object data (avatar data) indicating the shapes, the textures, the positions, the postures, and the motions of the avatars from meta data of the information processing devices 61 of the viewers who are the persons themselves represented by the avatars.

In other words, the 3D object control unit 155 acquires the avatar data indicating the basic shapes and textures of the avatars of the viewers and the 6DoF data indicating the positions, the postures, and the motions of the viewers (the positions, the postures, and the motions of the heads and the hands) from other information processing devices 61.

The 3D object control unit 155 creates a 3D model of an avatar of each viewer in the virtual space from the meta data (venue layout data) from the distribution server 41 and the meta data (avatar data and 6DoF data) from each information processing device 61 and maps the texture on the 3D model at the time of the rendering. In this manner, the avatar of each viewer moving in accordance with the live-action motion of each viewer is arranged in the virtual space.

Also, the 3D object control unit 155 determines the distribution position of the distributor who distributes the content at a predetermined position such as a center of a stage, for example, and arranges the live-action avatar (for example, a volumetric movie) of the distributor at the distribution position.

The 3D object control unit 155 acquires multi-viewpoint movies of the distribution from the movie stream data (the movie data from the timing synchronization unit 154) from the distribution server 41 and generates 3D shape data and the texture of the distributor from the multi-viewpoint movies. Then, the 3D object control unit 155 creates a 3D model of the distributor at the distribution position in the virtual space using 3D shape data of the distributor and maps the texture generated from the live-action movie on the 3D model of the distributor at the time of the rendering. In this manner, the movie in which the live-action avatar of the distributor is arranged at the distribution position of the distributor is generated.

### <First Form of Object Control>

A first form of object control executed by the 3D object control unit 155 will be described.

The 3D object control unit 155 can adopt an arbitrary form from among the aforementioned first to ninth setting forms of the venue layout in regard to the setting of the distribution position of the distributor and the setting of the viewing positions of the viewers in the event venue in the virtual space.

The first form of object control in a case in which the second setting form of venue layout described in Figs. 6 to 10 is adopted will be described. Also, it is assumed that a relative positional relationship between the viewing position of the experiencing person and the distribution position of the distributor is set such that the distance between the viewing position of the experiencing person and the distribution position of the distributor is the shortest distance.

Fig. 30 is a diagram representing a state of the event venue in the virtual space in a standby state before the distributor starts the distribution of the content (before live). The avatars of the multiple viewers U who participate in the event are arranged in the event venue, and a viewer G1-U1 at the center in the left-right direction is the experiencing person V who is a viewer viewing the movie generated by the 3D object control unit 155.

The viewer G1-U1 who is the experiencing person V belongs to a company group G1, and avatars of viewers G1-U2 to G1-U6 who are members of the company group G1 are arranged in the surroundings of the avatar of the viewer G1-U1. Note that description regarding the positions of the avatars of the distributor and the viewers (including the experiencing person) and the distances between the avatars can be regarded as description regarding the distribution position of the distributor and the viewing positions of the viewers.

Also, a circle 221 with a predetermined radius is depicted around the viewing position of the experiencing person V located at the center. Note that the circle 221 is only for explanation and is not actually depicted. Avatars (viewing position) of the viewers G1-U2 to G1-U6 and the viewer Ui arranged in the range inside the circle 221 are regarded as being located close to the avatar (viewing position) of the experiencing person V. In other words, if the distance from the viewing position of the experiencing person V is equal to or less than a predetermined threshold value, the avatar is regarded as being located close to the avatar of the experiencing person V.

On the other hand, the avatar of the viewer Uo arranged in the range outside the circle 221 is regarded as being not located close to the avatar of the experiencing person V. In other words, if the distance from the viewing position of the experiencing person is greater than the predetermined threshold value, the avatar is regarded as being not located close to the avatar of the experiencing person V.

The avatars of the viewers G1-U2 to G1-U6 and the viewer Ui located close to the avatar of the experiencing person V are set as avatars that can perform live-action motions. The live-action motions mean avatars that perform motions in accordance with motions of the viewers.

On the other hand, the avatar of the viewer Uo that is not located close to the avatar of the experiencing person V is generated as a simplified mob avatar or a shadow that does not perform live-action motions.

According to this, since the avatar of the viewer Uo that is not located close to the avatar (viewing position) of the experiencing person V is depicted as a simplified mob avatar or shadow that does not perform live-action motion, depiction data for depicting the avatar is reduced, and a processing load (a depicting load and the like) of the 3D object control unit 155 for modeling, rendering, and the like is reduced.

Note that although the 3D object control unit 155 changes the avatar of the viewer to be depicted between the first form with a large processing load and the second form with a smaller processing load than that of the first form in accordance with the distance from the viewing position of the experiencing person V, the present invention is not limited thereto. For example, an appearance of an avatar may not be changed, and an avatar that performs live-action motions may be adopted in the first form while an avatar that does not perform live-action motions may be adopted in the second form. Also, the condition under which the form of the avatar is changed between the first form and the second form may be the number of depicted avatars in the first form in accordance with processing loads for communication and depiction of the information processing device 61. For example, the 3D object control unit 155 may adopt the first form as the form of the avatars in the order from the position closest to the viewing position of the experiencing person V and may adopt the second form as the form of the remaining avatars in a case in which the number of depicted avatars in the first form exceeds a predetermined threshold value.

Also, the avatar form may be changed from among three or more forms with different processing loads. For example, an avatar at a distance of equal to or less than a first threshold value from the viewing position of the experiencing person V is set as a high-definition avatar that can perform live-action motions. An avatar at a distance of greater than the first threshold value and equal to or less than a predetermined second threshold value (> first threshold value) from the viewing position of the experiencing person V is set as a high-definition avatar that cannot perform live-action motions. An avatar at a distance of greater than the second threshold value from the viewing position of the experiencing person V may be a simplified avatar that cannot perform live-action motions.

Also, an avatar arranged outside the field-of-view range of the experiencing person V, that is, outside the center field-of-view range of the HMD 62 that the experiencing person V wears (the range of the rendering on the virtual space) may be set to a simplified avatar that does not perform live-action motions even if the avatar is located close to the avatar of the experiencing person V.

Fig. 31 is a diagram illustrating a state of the event venue in the virtual space in a content distribution state when the distributor T1 is distributing the content (during live). Note that in the drawing, the same reference signs are applied to the parts common to those in Fig. 30, and description thereof will be omitted.

In Fig. 31, the live-action avatar of the distributor T1 is arranged in front of the avatar of the viewer G1-U1 who is the experiencing person V. In other words, the avatar of the experiencing person V is arranged at the closest position to the live-action avatar of the distributor T1 on the front side. Therefore, the avatar of the experiencing person V can view the content in an optimal viewing environment.

Also, since all the viewers correspond to the experiencing persons V when they view the content using the HMDs 62 of themselves, all the viewers can view the content in the optimal viewing environment.

### <Processing Procedure>

Fig. 32 is a flowchart illustrating a processing procedure of the first form of object control performed by the 3D object control unit 155.

In Step S 11, the 3D object control unit 155 determines layout from among the members in the company group to which the experiencing person belongs. The processing proceeds from Step S11 to Step S12.

In Step S12, the 3D object control unit 155 determines layout of the company group inside the event venue. The processing proceeds from Step S12 to Step S13.

In Step S13, the 3D object control unit 155 arranges avatars of viewers other than the members of the company group at positions other than those of the company group. The processing proceeds from Step S13 to Step S14.

In Step S14, the 3D object control unit 155 starts searching for all the viewers (avatars) other than the experiencing person. The processing proceeds from Step S14 to Step S15.

In Step S15, the 3D object control unit 155 determines whether or not the searched avatars are located close to the experiencing person and within the center field of view.

In a case in which the searched avatars are determined to be located close and within the center field of view in Step S15, the processing proceeds to Step S16, and the 3D object control unit 155 sets the searched avatars as avatars that can perform live-action motions. The processing proceeds from Step S16 to Step S18.

In a case in which the searched avatars are determined not to be located close and within the center field of view in Step S15, the processing proceeds to Step S17, and the 3D object control unit 155 sets the searched avatars as shadows or mob avatars. The processing proceeds from Step S17 to Step S18.

In Step S18, the 3D object control unit 155 determines whether or not the searching for all the avatars except for the experiencing person has been ended.

In a case in which the searching for all the avatars except for the experiencing person is determined not to have been ended in Step S18, the processing returns from Step S18 to Step S15, and the processing from Step S15 is repeated.

In a case in which the searching for all the avatars except for the experiencing person is determined to have been ended in Step S18, the processing proceeds from Step S18 to Step S19.

In Step S19, the 3D object control unit 155 executes processing of transitioning a scene to "before live". The processing proceeds from Step S19 to Step S20.

In Step S20, the 3D object control unit 155 determines whether or not a scene start condition for "during live" has been met. For example, whether or not a specific time has elapsed in the state "before live" or whether or not a clock time for starting the live has arrived is determined.

In a case in which the scene start condition for "during live" is determined not to have been met in Step S20, the processing in Step S20 is repeated.

In a case in which the scene start condition for "during live" is determined to have been met in Step S20, the processing proceeds from Step S20 to Step S21.

In Step S21, The 3D object control unit 155 executes processing for transitioning the scene to "during live". The processing proceeds from Step S21 to Step S22.

In Step S22, the 3D object control unit 155 determines whether or not a scene start condition for "after live" has been met. For example, whether or not a specific time has elapsed in the state "during live" or whether or not a clock time for ending the live has arrived is determined.

In a case in which the scene start condition for "after live" is determined not to have been met in Step S22, the processing in Step S22 is repeated.

In a case in which the scene start condition for "after live" is determined to have been met in Step S22, the processing proceeds from Step S22 to Step S23.

In Step S23, the 3D object control unit 155 executes processing for transitioning the scene to "after live".

During the above processing in Steps S19 to S23, the 3D object control unit 155 takes over the positional relationship among the avatars of the experiencing person and the viewers such that they do not become discontinuous due to switching of the scenes or the like. For example, the 3D object control unit 155 keeps the initial position and the current position of each viewer located close to the experiencing person and each viewer in the company group using list data or the like and takes over the positional relationships of the viewers by referring to the list data every time the scene is switched.

According to the above first form of object control, each viewer can view the content distributed by the distributor in each optimal viewing position even in a case in which multiple viewers view the content distributed by the distributor at the same time in the same space.

Also, since only the avatars of the viewers located close to the experiencing person are allowed to perform live-action motions, the processing load (the avatar depiction load and the like) of the information processing device 61 is reduced.

Also, the viewers regarded as companies are arranged near the experiencing person in a case in which a company group is set by adopting the second setting form or the like of the venue layout described in Figs. 6 to 10 in regard to the setting of the venue layout. Therefore, the experiencing person can easily know states of the companies with a sense of actually meeting them during participation in the event. Also, in a case in which setting is made to enable voice chatting or text chatting in the company group, or in a case in which the viewers or a group performing chatting is regarded as a company group, the chatting can be easily performed even during participation in the event.

Also, the layout of the viewing position from among the members (among the members) of the company group is the same regardless of which of the viewers belonging to the company group the experiencing person is. Therefore, a matter in which both viewers belonging to the same company group recognize that their counterparts are present on their right side, for example, does not occur, for example. For example, a situation in which they face mutually opposite sides when they want to face each other for chatting or the like does not occur.

### <Second Form of Object Control>

Next, a second form of object control executed by the 3D object control unit 155 will be described.

In the second form of object control, a case in which the fifth setting form of venue layout described in Figs. 15 and 16 is adopted will be described. Also, it is assumed that a relative positional relationship between the viewing position of the experiencing person and the distribution position of the distributor is set such that the distance between the viewing position of the experiencing person and the distribution position of the distributor is the shortest distance.

Fig. 33 is a diagram illustrating a state of the event venue in the virtual space in a content distribution state when the distributor is distributing the content (during live).

In Fig. 33, avatars of the multiple viewers U who participate in the event are arranged in the event venue, and an avatar (viewing position) of the viewer U1 who is the experiencing person V is arranged at the center in the left-right direction. Also, a live-action avatar of the distributor T1 is arranged in front of the avatar (viewing position) of the experiencing person V, and the avatar (viewing position) of the experiencing person V is arranged at the front closest position to the live-action avatar of the distributor T1.

Avatars of arbitrary viewers U2 to U8 are arranged within a range (within a range of equal to or less than a predetermined distance) located near the avatar of the viewer U1 who is the experiencing person V. The avatars of the viewers U1 to U8 are set as avatars that can perform live-action motions.

Also, an avatar of the arbitrary viewer Uo is arranged at a viewing position other than those of the viewers U1 to U8. The avatar of the viewer Uo is set as a simplified mob avatar or shadow that does not perform live-action motions. Note that since the forms of the avatars and the conditions under which the forms are changed, and the like are similar to those of the first form of object control, description thereof will be omitted.

Fig. 34 is a diagram illustrating a state of the event venue in the virtual space in the content distribution state when the distributor is distributing the content (during live) and is a diagram illustrating a case in which the viewing position of the experiencing person differs from that in Fig. 33.

In Fig. 34, the avatars of the multiple viewers U who participate in the event are arranged in the event venue, and the avatar of the viewer U1 who is the experiencing person V is arranged on the left side of the entire viewers. Also, the live-action avatar of the distributor T1 is arranged in front of the avatar of the experiencing person V, and the avatar of the experiencing person V is arranged at the front closest position to the live-action avatar of the distributor T1.

Avatars of arbitrary viewers U2 to U8 are arranged within a range (within a range of equal to or less than a predetermined distance) located near the avatar of the viewer U1 who is the experiencing person V. The avatars of the viewers U1 to U8 are set as avatars that can perform live-action motions.

Also, an avatar of the arbitrary viewer Uo is arranged at a viewing position other than those of the viewers U1 to U8. The avatar of the viewer Uo is set as a simplified mob avatar or shadow that does not perform live-action motions.

Fig. 35 is a diagram illustrating a state of the event venue in the virtual space in the content distribution state when the distributor is distributing the content (during live) and is a diagram illustrating a case in which the viewing position of the experiencing person differs from those in Figs. 33 and 34.

In Fig. 35, the avatars of the multiple viewers U who participate in the event are arranged in the event venue, and the avatar of the viewer U1 who is the experiencing person V is arranged on the right side of the entire viewers. Also, the live-action avatar of the distributor T1 is arranged in front of the avatar of the experiencing person V, and the avatar of the experiencing person V is arranged at the front closest position to the live-action avatar of the distributor T1.

Avatars of arbitrary viewers U2 to U8 are arranged within a range (within a range of equal to or less than a predetermined distance) located near the avatar of the viewer U1 who is the experiencing person V. The avatars of the viewers U1 to U8 are set as avatars that can perform live-action motions.

Also, an avatar of the arbitrary viewer Uo is arranged at a viewing position other than those of the viewers U1 to U8. The avatars of the viewers U1 to U8 are set as avatars that can perform live-action motions. The avatar of the viewer Uo is set as a simplified mob avatar or shadow that does not perform live-action motions.

According to the aforementioned second form of object control, the avatar of the experiencing person V is arranged at the front closest position to the live-action avatar of the distributor (the live-action avatar of the distributor is arranged at the front closest position to the avatar of the experiencing person V) regardless of which position in the venue the avatar of the experiencing person V is arranged, and the experiencing person V can thus always view the content in an optimal viewing environment.

Also, since the avatars other than those around the experiencing person V are set as simplified avatars or avatars that do not perform live-action motions, processing loads for modeling, rendering, and the like of the 3D object control unit 155 are reduced.

Note that in Figs. 33 to 35, all the viewers view the live-action avatar of the distributor T1 in front of them as experiencing persons V and do not face the direction of the live-action avatar of the distributor T1 when seen from the other viewers and there may thus be a case in which they may feel incompatibility.

Fig. 36 is a diagram illustrating a modification example of the avatar layout in Figs. 33 to 35.

In Fig. 36, orientations of the avatars of all the viewers U1 to U8 and the viewer Uo are corrected, and the avatars are arranged with the front side facing the direction of the live-action avatar of the distributor T1. In this manner, the incompatibility that the viewers do not face the direction of the distributor T1 is reduced. Note that correction may be performed such that the front sides of only the postures of the avatars that are present within a predetermined distance range with respect to the viewing position of the experiencing person V face the direction of the live-action avatar of the distributor T1. Also, the correction of causing the avatars of the viewers to face the direction of the live-action avatar of the distributor T1 can be applied regardless of which of the aforementioned first to ninth setting forms the setting form of venue layout is.

### <Processing Procedure>

Fig. 37 is a flowchart illustrating a processing procedure of the second form of object control performed by the 3D object control unit 155.

In Step S41, the 3D object control unit 155 determines venue layout of the experiencing person and all the other viewers. The processing proceeds from Step S41 to Step S42.

In Step S42, the 3D object control unit 155 arranges the stage position for the distributor in front of the experiencing person. The processing proceeds from Step S42 to Step S43.

In Step S43, the 3D object control unit 155 starts searching for all the viewers (avatars) other than the experiencing person. The processing proceeds from Step S43 to Step S44.

In Step S44, the 3D object control unit 155 determines whether or not the searched avatars are located close to the experiencing person and within the center field of view.

In a case in which the searched avatars are determined to be located close and within the center field of view in Step S44, the processing proceeds to Step S45, and the 3D object control unit 155 sets the searched avatars as avatars that can perform live-action motions. The processing proceeds from Step S45 to Step S47.

In a case in which the searched avatars are determined not to be located close and within the center field of view in Step S44, the processing proceeds to Step S46, and the 3D object control unit 155 sets the searched avatars as shadows or mob avatars. The processing proceeds from Step S46 to Step S47.

In Step S47, the 3D object control unit 155 determines whether or not the searching for all the avatars except for the experiencing person has been ended.

In a case in which the searching for all the avatars except for the experiencing person is determined not to have been ended in Step S47, the processing returns from Step S47 to Step S44, and the processing from Step S44 is repeated.

In a case in which the searching for all the avatars except for the experiencing person is determined to have been ended in Step S47, the processing proceeds from Step S47 to Step S48.

In Step S48, the 3D object control unit 155 performs angle adjustment such that the postures of the avatars (group) around the experiencing person face the distributor (see Fig. 36). The processing proceeds from Step S48 to Step S49.

In Step S49, the 3D object control unit 155 executes processing of transitioning a scene to "before live". The processing proceeds from Step S49 to Step S50.

In Step S50, the 3D object control unit 155 determines whether or not a scene start condition for "during live" has been met. For example, whether or not a specific time has elapsed in the state "before live" or whether or not a clock time for starting the live has arrived is determined.

In a case in which the scene start condition for "during live" is determined not to have been met in Step S50, the processing in Step S50 is repeated.

In a case in which the scene start condition for "during live" is determined to have been met in Step S50, the processing proceeds from Step S50 to Step S51.

In Step S51, the 3D object control unit 155 executes processing for transitioning the scene to "during live". The processing proceeds from Step S51 to Step S52.

In Step S52, the 3D object control unit 155 determines whether or not a scene start condition for "after live" has been met. For example, whether or not a specific time has elapsed in the state "during live" or whether or not a clock time for ending the live has arrived is determined.

In a case in which the scene start condition for "after live" is determined not to have been met in Step S52, the processing in Step S52 is repeated.

In a case in which the scene start condition for "after live" is determined to have been met in Step S52, the processing proceeds from Step S52 to Step S53.

In Step S53, the 3D object control unit 155 executes processing for transitioning the scene to "after live".

During the above processing in Steps S49 to S53, the 3D object control unit 155 takes over the positional relationship among the avatars of the experiencing person and the viewers such that they do not become discontinuous due to switching of the scenes or the like. For example, the 3D object control unit 155 keeps the initial position and the current position of each viewer located near the experiencing person or of each viewer in the company group using list data or the like and takes over the positional relationships of the viewers by referring to the list data every time the scene is switched.

According to the aforementioned second form of object control, each viewer can view the content distributed by the distributor at each optimal viewing position even in a case in which multiple viewers view the content distributed by the distributor at the same time in the same space.

Also, since only the avatars of the viewers located close to the experiencing person are allowed to perform live-action motions, the processing load (the avatar depiction load and the like) of the information processing device 61 is reduced.

Also, since the postures of the avatars around the experiencing person are corrected such that the front sides thereof face the direction of the distributor, the sense of reality is improved.

The present technology can be applied not only to a virtual reality but also to a case in which various events are held by combining a 3D movie of a distributor, avatars of viewers, and the like in a virtual space with a three-dimensional space (actual space) in the real world. The present technology can be applied to an augmented reality, a composite reality, an alternative reality, or the like.

Also, the present technology can be applied to content distribution for entertainment such as "sport live" and "variety shows" and content distribution for applications such as "remote education and lessons" and "remote work support" as well as "music live" of a multiple-person connection type. Additionally, since the present technology can be means for realizing verbal/non-verbal communication with a sense of actually meeting companies who participate an event at the same time, it is possible to apply the present technology to remote communication services, and utilization of the remote communication services for business is thus promoted.

<Program>

The aforementioned series of processes of the distribution server 41, the information processing device 61, and the like can be executed by hardware or can also be executed by software. In a case in which the series of processes are executed by software, a program constituting the software is installed in a computer. Here, the computer includes a computer embedded in dedicated hardware or, for example, a general-purpose computer capable of executing various functions by installing various programs.

Fig. 38 is a block diagram illustrating an example of a hardware configuration of a computer that executes the aforementioned series of processes according to a program.

In the computer, a central processing unit (CPU) 401, a read-only memory (ROM) 402, and a random access memory (RAM) 403 are connected to each other by a bus 404.

An input/output interface 405 is further connected to the bus 404. An input unit 406, an output unit 407, a storage unit 408, a communication unit 409, and a drive 410 are connected to the input/output interface 405.

The input unit 406 is constituted by a keyboard, a mouse, a microphone, or the like. The output unit 407 is constituted of a display, a speaker, or the like. The storage unit 408 is a hard disk, non-volatile memory, or the like. The communication unit 409 is a network interface or the like. The drive 410 drives a removable medium 411 such as a magnetic disk, an optical disc, a magnetooptical disk, or a semiconductor memory.

In the computer that is configured as described above, the CPU 401 executes the aforementioned series of processes by loading a program stored in the storage unit 408 to the RAM 403 via the input/output interface 405 and the bus 404, for example, and executing the program.

The program executed by the computer (the CPU 401) can be recorded on, for example, the removable medium 411 serving as a package medium for supply. The program can be supplied via a wired or wireless transmission medium such as a local area network, the Internet, or digital satellite broadcasting.

In the computer, by mounting the removable medium 411 on the drive 410, it is possible to install the program in the storage unit 408 via the input/output interface 405. The program can be received by the communication unit 409 via a wired or wireless transfer medium and can be installed in the storage unit 408. In addition, this program may be installed in advance in the ROM 402 or the storage unit 408.

Note that the program executed by a computer may be a program that performs processing chronologically in the order described in the present specification or may be a program that performs processing in parallel or at a necessary timing such as a called time.

The present technology can be configured as follows.
(1) An information processing device including: a processing unit that sets, for at least one viewer from among a plurality of viewers viewing content distributed from a distributor virtually disposed at a predetermined distribution position, a viewing position where the at least one viewer views the content as an experiencing person and the distribution position such that a relative positional relationship between the viewing position and the distribution position is a positional relationship determined for the experiencing person in a virtual space or an actual space.
(2) The information processing device according to (1) above, in which the processing unit sets the viewing position of the experiencing person and the distribution position in a case in which each of the plurality of viewers viewing the content is regarded as the experiencing person.
(3) The information processing device according to (1) or (2) above, in which the plurality of viewers are viewers viewing the content at the same time.
(4) The information processing device according to any of (1) to (3) above, in which the processing unit uses, as the positional relationship determined for the experiencing person, a positional relationship designated by the experiencing person or a relative positional relationship determined in advance as an optimal viewing position at which the experiencing person is in an optimal viewing environment with respect to the distribution position.
(5) The information processing device according to (4) above, in which the optimal viewing position is a viewing position at a shortest distance from the distribution position from among viewing positions that can be set by the experiencing person.
(6) The information processing device according to any of (1) to (5) above, in which the processing unit sets viewing positions of the viewers other than the experiencing person who are recognized by the experiencing person.
(7) The information processing device according to (6) above, in which the processing unit sets groups constituted by a plurality of viewers from among the plurality of viewers in advance, and in a case where a group to which the experiencing person belongs is defined as a focused group from among the groups, the processing unit sets the viewing positions of the viewers belonging to the focused group such that relative positional relationships of the viewing positions of the viewers belonging to the focused group are the same, regardless of which of the viewers belonging to the focused group the experiencing person is.
(8) The information processing device according to (7) above, in which the processing unit defines, as the positional relationship determined for the experiencing person, a relative positional relationship between the viewing position of the experiencing person and the distribution position in a case in which a relative positional relationship between the position of the entire focused group and the distribution position is a relative position determined for the focused group.
(9) The information processing device according to (7) or (8) above, in which the processing unit sets the viewing position of each of the viewers belonging to the focused group to a position that is adjacent to any of the viewing positions.
(10) The information processing device according to any of (7) to (9) above, in which the processing unit sets a company of the viewers who are talking together as one group.
(11) The information processing device according to any of (6) to (10) above, in which the viewing positions of the viewers other than the experiencing person are positions where copies representing the viewers are displayed in the virtual space or the actual space that each experiencing person views.
(12) The information processing device according to (11) above, in which the copies are disposed with front sides facing a direction of the distribution position.
(13) The information processing device according to (11) or (12) above, in which the viewing positions of the viewers other than the experiencing person are positions where the copies moving in accordance with live-action motions of the viewers are displayed in a case in which the distance from the viewing position of the experiencing person is equal to or less than a predetermined threshold value, and are positions where the copies that do not correspond to live-action motions of the viewers are displayed in a case in which the distance from the viewing position of the experiencing person is greater than the threshold value.
(14) The information processing device according to any of (11) to (13) above, further including: a display control unit that generates movies of the copies.
(15) The information processing device according to any of (1) to (14) above, in which the distribution position is a position where the distributor a live-action movie is displayed.
(16) The information processing device according to (15) above, in which the live-action movie of the distributor is a volumetric movie generated from movies obtained by imaging the distributor from multiple viewpoints.
(17) The information processing device according to any of (1) to (16) above, in which the processing unit sets the distribution position at the same position regardless of the viewer to be defined as the experiencing person, and sets the viewing position of the experiencing person such that a relative positional relationship between the viewing position of the experiencing person and the distribution position is a positional relationship determined for the experiencing person.
(18) The information processing device according to any of (1) to (16) above, in which the processing unit sets the viewing position of the experiencing person at a different position for each viewer defined as the experiencing person and sets the distribution position such that a relative positional relationship between the viewing position of the experiencing person and the distribution position is a positional relationship determined for the experiencing person.
(19) An information processing method including: by a processing unit of an information processing device including the processing unit, setting, for at least one viewer from among a plurality of viewers viewing content distributed from a distributor virtually disposed at a predetermined distribution position, a viewing position where the at least one viewer views the content as an experiencing person and the distribution position such that a relative positional relationship between the viewing position and the distribution position is a positional relationship determined for the experiencing person in a virtual space or an actual space.
(20) A program that causes a computer to function as: a processing unit that sets, for at least one viewer from among a plurality of viewers viewing content distributed from a distributor virtually disposed at a predetermined distribution position, a viewing position where the at least one viewer views the content as an experiencing person and the distribution position such that a relative positional relationship between the viewing position and the distribution position is a positional relationship determined for the experiencing person in a virtual space or an actual space.

### [Reference Signs List]

- 11: Entertainment system
- 21: Server system
- 22: Client system
- 41: Distribution server
- 42: Multi-view camera
- 61: Information processing device
- 62: HMD
- 84: Venue layout setting unit
- 155: 3D object control unit

## Claims

1. An information processing device comprising:
a processing unit that sets, for at least one viewer from among a plurality of viewers viewing content distributed from a distributor virtually disposed at a predetermined distribution position, a viewing position where the at least one viewer views the content as an experiencing person and the distribution position such that a relative positional relationship between the viewing position and the distribution position is a positional relationship determined for the experiencing person in a virtual space or an actual space.

2. The information processing device according to claim 1, wherein the processing unit sets the viewing position of the experiencing person and the distribution position in a case in which each of the plurality of viewers viewing the content is regarded as the experiencing person.

3. The information processing device according to claim 1, wherein the plurality of viewers are viewers viewing the content at the same time.

4. The information processing device according to claim 1, wherein the processing unit uses, as the positional relationship determined for the experiencing person,
a positional relationship designated by the experiencing person or a relative positional relationship determined in advance as an optimal viewing position at which the experiencing person is in an optimal viewing environment with respect to the distribution position.

5. The information processing device according to claim 4, wherein the optimal viewing position is a viewing position at a shortest distance from the distribution position from among viewing positions that can be set by the experiencing person.

6. The information processing device according to claim 1, wherein the processing unit sets viewing positions of the viewers other than the experiencing person who are recognized by the experiencing person.

7. The information processing device according to claim 6, wherein the processing unit sets groups constituted by a plurality of viewers from among the plurality of viewers in advance, and in a case where a group to which the experiencing person belongs is defined as a focused group from among the groups, the processing unit sets the viewing positions of the viewers belonging to the focused group such that relative positional relationships of the viewing positions of the viewers belonging to the focused group are the same, regardless of which of the viewers belonging to the focused group the experiencing person is.

8. The information processing device according to claim 7, wherein the processing unit defines, as the positional relationship determined for the experiencing person, a relative positional relationship between the viewing position of the experiencing person and the distribution position in a case in which a relative positional relationship between the position of the entire focused group and the distribution position is a relative position determined for the focused group.

9. The information processing device according to claim 7, wherein the processing unit sets the viewing position of each of the viewers belonging to the focused group to a position that is adjacent to any of the viewing positions.

10. The information processing device according to claim 7, wherein the processing unit sets a company of the viewers who are talking together as one group.

11. The information processing device according to claim 6, wherein the viewing positions of the viewers other than the experiencing person are positions where copies representing the viewers are displayed in the virtual space or the actual space that each experiencing person views.

12. The information processing device according to claim 11, wherein the copies are disposed with front sides facing a direction of the distribution position.

13. The information processing device according to claim 11, wherein the viewing positions of the viewers other than the experiencing person are positions where the copies moving in accordance with live-action motions of the viewers are displayed in a case in which the distance from the viewing position of the experiencing person is equal to or less than a predetermined threshold value, and are positions where the copies that do not correspond to live-action motions of the viewers are displayed in a case in which the distance from the viewing position of the experiencing person is greater than the threshold value.

14. The information processing device according to claim 11, further comprising:
a display control unit that generates movies of the copies.

15. The information processing device according to claim 1, wherein the distribution position is a position where a live-action movie of the distributor is displayed.

16. The information processing device according to claim 15, wherein the live-action movie of the distributor is a volumetric movie generated from movies obtained by imaging the distributor from multiple viewpoints.

17. The information processing device according to claim 1,
wherein the processing unit sets the distribution position at the same position regardless of the viewer to be defined as the experiencing person, and sets the viewing position of the experiencing person such that a relative positional relationship between the viewing position of the experiencing person and the distribution position is a positional relationship determined for the experiencing person.

18. The information processing device according to claim 1, wherein the processing unit sets the viewing position of the experiencing person at a different position for each viewer defined as the experiencing person and sets the distribution position such that a relative positional relationship between the viewing position of the experiencing person and the distribution position is a positional relationship determined for the experiencing person.

19. An information processing method comprising:
by a processing unit of an information processing device including the processing unit, setting, for at least one viewer from among a plurality of viewers viewing content distributed from a distributor virtually disposed at a predetermined distribution position, a viewing position where the at least one viewer views the content as an experiencing person and the distribution position such that a relative positional relationship between the viewing position and the distribution position is a positional relationship determined for the experiencing person in a virtual space or an actual space.

20. A program that causes a computer to function as:
a processing unit that sets, for at least one viewer from among a plurality of viewers viewing content distributed from a distributor virtually disposed at a predetermined distribution position, a viewing position where the at least one viewer views the content as an experiencing person and the distribution position such that a relative positional relationship between the viewing position and the distribution position is a positional relationship determined for the experiencing person in a virtual space or an actual space.
